(19) Europäisches Patentamt / European Patent Office / Office européen des brevets

(11) EP 3 197 175 B1

(12) **EUROPEAN PATENT SPECIFICATION**

(45) Date of publication and mention of the grant of the patent:
**04.03.2020 Bulletin 2020/10**

(21) Application number: **15835577.6**

(22) Date of filing: **14.08.2015**

(51) Int Cl.:
***H04N 21/4425*** *(2011.01)* ***H04N 21/434*** *(2011.01)*
***H04N 21/238*** *(2011.01)* ***H04N 21/438*** *(2011.01)*
***H04N 21/61*** *(2011.01)*

(86) International application number:
**PCT/JP2015/072944**

(87) International publication number:
**WO 2016/031589 (03.03.2016 Gazette 2016/09)**

(54) **RECEPTION DEVICE AND RECEPTION METHOD**

EMPFANGSVORRICHTUNG UND EMPFANGSVERFAHREN

DISPOSITIF DE RÉCEPTION ET PROCÉDÉ DE RÉCEPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2014 JP 2014176105**

(43) Date of publication of application:
**26.07.2017 Bulletin 2017/30**

(73) Proprietor: **SONY CORPORATION**
**Minato-ku**
**Tokyo 108-0075 (JP)**

(72) Inventor: **YOSHIMOCHI, Naoki**
**Tokyo 108-0075 (JP)**

(74) Representative: **Witte, Weller & Partner**
**Patentanwälte mbB**
**Postfach 10 54 62**
**70047 Stuttgart (DE)**

(56) References cited:
**EP-A2- 2 346 221** **JP-A- 2005 229 587**
**JP-A- 2012 165 431** **US-A1- 2011 164 703**
**US-A1- 2013 114 423**

- **"Digital Video Broadcasting (DVB); Implementation Guidelines for a second generation digital cable transmission system (DVB-C2)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.2.1, 1 June 2011 (2011-06-01), XP014065717,**
- **ETSI EN 302 769, V1.2.1, ETSI April 2011, page 23, 97, 98, 105, XP055408319**
- **'ETSI TS 102 991, V1.2.1' ETSI June 2011, pages 46 - 49 , 149, 160, XP055357327**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present technology relates to a reception apparatus and a reception method, and particularly to a reception apparatus and a reception method capable of minimizing the influence of an error during transmission in channel bonding.

BACKGROUND ART

There is known, in digital broadcasting, channel bonding in which a stream at a high data rate is divided into a plurality of divided streams (of channels) to be transmitted and the divided streams are reconstructed into the stream at the original data rate on reception side. Physical layer pipe (PLP) bundling is defined as one channel bonding in the digital video broadcasting-cable second generation (DVB-C2) standard (see Non-Patent Document 1, for example).

CITATION LIST

Non-Patent Document 1: DVB-C.2: ETSI EN 302 769 V1.2.1 (2011-04)"Digital Video Broadcasting (DVB) ; Implementation Guidelines for a second generation digital cable transmission system (DVB-C2)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, (20110601), vol. BROADCAS, no. V1.2.1, discloses the use of BB frames and PLP bundling.

SUMMARY OF THE INVENTION

PROBLEMS TO BE SOLVED BY THE INVENTION

Incidentally, data is transmitted in units of baseband (BB) frame in the DVB-C2 standard, but when PLP bundling is performed, an order of BB frames constructing a plurality of divided streams is specified with reference to input stream time reference (ISCR) of input stream synchronizer (ISSY) included in the BB headers added to the BB frames, thereby reconstructing (recovering) the original stream.

As described above, ISCR is the only order information (time information) for specifying an order of BB frames transmitted as divided streams, but if ISCR cannot be acquired due to the influence of an error during transmission, BB frames cannot be accurately rearranged. Thus, there is required to minimize the influence of an error during transmission in channel bonding.

The present technology has been made in terms of the above situation, and is directed to minimize the influence of an error during transmission in channel bonding.

SOLUTIONS TO PROBLEMS

A reception apparatus according to one aspect of the present technology is defined in claim 1.

The reception apparatus according to one aspect of the present technology may be an independent apparatus or an internal block configuring one apparatus. Further, a reception method according to one aspect of the present technology is for the reception apparatus according to one aspect of the present technology.

With the reception apparatus and the reception method according to one aspect of the present technology, a plurality of divided streams acquired by distributing BB frames of a BB stream which is a stream of BB frames to a plurality of data slices are received, and the BB frames are processed in a selection order and packets are constructed thereby to reconstruct the original BB stream from the plurality of the divided streams. Further, when an error occurs during transmission and the BB frame to be selected is estimated, positions of the packets are specified on the basis of information on a packet start position of a BB frame immediately before an influence period for BB frames in the influence period in which an order of rearrangement of the BB frame to be selected can be wrong.

EFFECTS OF THE INVENTION

According to one aspect of the present technology, it is possible to minimize the influence of an error during transmission in channel bonding.

Additionally, the effects described herein are not necessarily limited, and any effect described in the present disclosure may be obtained.

BRIEF DESCRIPTION OF DRAWINGS

Fig. 1 is a diagram illustrating a configuration of one exemplary embodiment of a transmission system to which the present technology is applied.

Fig. 2 is a diagram for explaining an outline of PLP bundling

Fig. 3 is a diagram illustrating an exemplary configuration of a transmission apparatus.

Fig. 4 is a flowchart for explaining a flow of a transmission processing.

Fig. 5 is a diagram illustrating an exemplary configuration of a reception apparatus.

Fig. 6 is a flowchart for explaining a flow of a reception processing.

Fig. 7 is a diagram illustrating a flow of BB frames processed in the transmission apparatus and the reception apparatus.

Fig. 8 is a diagram illustrating an exemplary format of a BB frame.

Fig. 9 is a diagram illustrating exemplary formats of ISSY included in a BB header.
Fig. 10 is a diagram illustrating a configuration of the reception apparatus for selecting BB frames to be transmitted in four series.
Fig. 11 illustrates exemplary rearrangement of BB frames when an error occurs.
Fig. 12 illustrates exemplary rearrangement of BB frames when an error occurs.
Fig. 13 illustrates exemplary rearrangement of BB frames when an error occurs.
Fig. 14 illustrates exemplary rearrangement of BB frames when an error occurs.
Fig. 15 is a diagram for explaining an influence when BB frames are rearranged in a wrong order.
Fig. 16 is a diagram for explaining SYNCD.
Fig. 17 is a diagram for explaining BB frame estimation using SYNCD.
Fig. 18 is a diagram for explaining BB frame estimation using SYNCD.
Fig. 19 is a diagram for explaining BB frame estimation using SYNCD.
Fig. 20 is a diagram for explaining a data size kbch at which BCH coding is performed.
Fig. 21 is a diagram illustrating exemplary values of kbch.
Fig. 22 is a diagram illustrating an exemplary functional configuration of a control unit when BB frame estimation is made by use of SYNCD.
Fig. 23 is a flowchart for explaining a flow of a first BB frame selection processing.
Fig. 24 is a diagram for explaining BB frame estimation using a rule of BB frame selection.
Fig. 25 is a diagram illustrating an exemplary functional configuration of the control unit when BB frame estimation is made by use of a rule of BB frame selection.
Fig. 26 is a flowchart for explaining a flow of a second BB frame selection processing.
Fig. 27 is a diagram for explaining BB frame estimation using a next ISCR predictive result.
Fig. 28 is a diagram illustrating an exemplary functional configuration of the control unit when BB frame estimation is made by use of a next ISCR predictive result.
Fig. 29 is a flowchart for explaining a flow of a third BB frame selection processing.
Fig. 30 is a diagram for explaining localization of an error during BB frame estimation.
Fig. 31 is a diagram for explaining localization of an error during BB frame estimation.
Fig. 32 is a diagram for explaining localization of an error during BB frame estimation.
Fig. 33 is a diagram for explaining localization of an error during BB frame estimation.
Fig. 34 is a diagram for explaining localization of an error during BB frame estimation in consideration of a maximum influence period.
Fig. 35 is a diagram for explaining localization of an error during BB frame estimation in consideration of a maximum influence period.
Fig. 36 is a diagram for explaining localization of an error during BB frame estimation in consideration of a maximum influence period.
Fig. 37 is a diagram for explaining localization of an error during BB frame estimation in consideration of a maximum influence period.
Fig. 38 is a diagram illustrating an exemplary functional configuration of the control unit when an error is localized during BB frame estimation.
Fig. 39 is a flowchart for explaining a flow of a stream reconstruction processing.
Fig. 40 is a diagram illustrating an exemplary configuration of a computer.

## MODE FOR CARRYING OUT THE INVENTION

An exemplary embodiment according to the present technology will be described below with reference to the drawings. Additionally, the description will be made in the following order.

1. Configuration of system
2. Configurations of apparatuses for PLP bundling
3. Method for selecting BB frame when error occurs in PLP bundling

    (1) BB frame estimation using SYNCD
    (2) BB frame estimation using rule of BB frame selection
    (3) BB frame estimation using next ISCRpredictive result

4. Localization of error during BB frame estimation
5. Configuration of computer

<1. Configuration of system>

Fig. 1 is a diagram illustrating a configuration of one exemplary embodiment of a transmission system to which the present technology is applied. Additionally, a system indicates a logical set of apparatuses, and the apparatuses in each configuration may or may not be present in the same casing.

In Fig. 1, a transmission system 1 is configured of a transmission apparatus 10 and a reception apparatus 20.

The transmission apparatus 10 performs transmission of TV programs and the like (digital broadcasting or data transmission), for example. That is, the transmission apparatus 10 transmits a stream of data to be transmitted such as video data or audio data of a TV program as digital broadcast signal via a transmission path 30 as cable TV network (wired line), for example.

The reception apparatus 20 receives the digital broadcast signal transmitted from the transmission apparatus 10 via the transmission path 30, and recovers and outputs it to the original stream. For example, the reception apparatus 20 outputs the video data or audio data as TV program.

Additionally, the transmission system 1 of Fig. 1 can be applied to data transmission conforming to a standard such as DVB-T2 standard, DVB-S2 standard, advanced television systems committee standards (ATSC), or integrated services digital broadcasting (ISDB), and other data transmission in addition to data transmission conforming to the DVB-C2 standard. Further, the transmission path 30 may employ a satellite line, ground wave, or the like in addition to cable TV network.

<2. Configurations of apparatuses for PLP bundling>

(Outline of PLP bundling)

Fig. 2 is a diagram for explaining an outline of PLP bundling.

In the DVB-C2 standard, PLP bundling is defined as one channel bonding. With channel bonding, a stream at a high data rate is divided into a plurality of divided streams (of channels) to be transmitted, and the divided streams are reconstructed into the stream at the original data rate on reception side.

Digital broadcasting for transmitting an image with a high resolution of 8K has been required in recent years, but throughput required for transmitting data at a high data rate, which is acquired as a result of coding, is on the order of 100 Mbps for an image with a resolution of 8K when the coding is performed in the high efficiency video coding (HEVC) system. Physical layer pipe (PLP) of Fig. 2 corresponding to such data at a high data rate is difficult to transmit in one data slice.

Thus, in the transmission system 1, the transmission apparatus 10 is configured such that actual data as one PLP can be divided in units of BB frame and transmitted in a plurality of data slices by PLP bundling as one channel bonding. In Fig. 2, PLP is divided into data slices 2 to 4 and transmitted to the reception apparatus 20. In the reception apparatus 20, the data slices 2 to 4 are received and processed by tuners 1 to 3 and then processed by a PLP decoder so that the actual data as PLP is reconstructed.

Additionally, in the DVB-C2 standard, a transmission bandwidth for transmitting an orthogonal frequency division multiplexing (OFDM) signal is partitioned in units of (about) 6MHz, for example. Then, assuming one transmission bandwidth partitioned in units of 6 MHz as unit transmission bandwidth, an OFDM signal in the unit transmission bandwidth in which data slices including PLP of actual data of a desired TV program are transmitted is received and the data slices included in the OFDM signal are processed in the reception apparatus 20.

Further, PLP is (data transmitted in) a logical channel included in a data slice, and PLP is given a unique PLP ID for identifying PLP. For example, PLP with a PLP ID corresponds to actual data of a TV program. PLP with a PLP ID of i will be described as PLP#i below.

Additionally, in the following description, a stream of BB frames will be denoted as "BB stream" and a plurality of streams acquired by dividing the BB stream will be denoted as "divided streams." That is, the divided streams are configured of the BB frames.

(Configuration of transmission apparatus)

Fig. 3 is a diagram illustrating an exemplary configuration of the transmission apparatus 10 of Fig. 1.

The transmission apparatus 10 can divide actual data as one PLP#i (PLP given the same PLP ID) in units of BB frame and transmit it in a plurality of data slices by PLP bundling as one channel bonding.

In Fig. 3, the transmission apparatus 10 is configured of a control unit 111, a BB frame generation unit 112, a BB frame distribution unit 113, data slice processing units 114-1 to 114-N (N is an integer of 1 or more), a frame construction unit 115, and a transmission unit 116.

The control unit 111 controls the operations of each unit in the transmission apparatus 10.

The BB frame generation unit 112 is supplied with actual data (target data such as transport stream (TS), for example) as PLP#i with the same PLP ID. The BB frame generation unit 112 constructs a BB frame by adding a BB header to the actual data supplied herein. Additionally, the BB header includes input stream time reference (ISCR) as input stream synchronizer (ISSY) . The BB frame generation unit 112 supplies the BB frame distribution unit 113 with a BB stream constructed of BB frames .

Assuming the BB stream supplied from the BB frame generation unit 112 to be divided, the BB frame distribution unit 113 repeatedly distributes each BB frame constructing the BB stream to one data slice among a plurality of data slices, thereby dividing the BB stream into a plurality of divided streams in units of BB frame. Further, the BB frame distribution unit 113 distributes the divided streams acquired by dividing the BB stream to any of the data slice processing units 114-1 to 114-N.

The data slice processing unit 114-1 processes the divided stream distributed by the BB frame distribution unit 113. The data slice processing unit 114-1 is configured of a PLP processing unit 131-1, a data slice construction unit 132-1, and a time/frequency interleaver 133-1.

The PLP processing unit 131-1 performs error correction coding on the BB frame constructing the divided frame distributed by the BB frame distribution unit 113 and supplied to the data slice processing unit 114-1. Further, the PLP processing unit 131-1 maps a FEC frame acquired as a result of the error correction coding on a signal point on a predetermined constellation in units of predetermined bits as symbol, and adds a FEC frame header to the FEC frame acquired by extracting the symbol as a result of the mapping in units of FEC frame, thereby constructing a data slice packet.

The data slice construction unit 132-1 is supplied with one or more data slice packets from the PLP processing unit 131-1. The data slice construction unit 132-1 constructs a data slice from the one or more data slice packets supplied from the PLP processing unit 131-1, and supplies it to the time/frequency interleaver 133-1.

The time/frequency interleaver 133-1 interleaves the data slice supplied from the data slice construction unit 132-1 in the time direction and the frequency direction, and supplies the interleaved data slice to the frame construction unit 115.

Though not illustrated, the data slice processing units 114-2 to 114-N are configured of PLP processing units 131-2 to 131-N, data slice construction units 132-2 to 132-N, and time/frequency interleavers 133-2 to 133-N, respectively, like the data slice processing unit 114-1. The divided streams distributed by the BB frame distribution unit 113 are processed in the data slice processing units 114-2 to 114-N as in the data slice processing unit 114-1, and the resultant data slices are supplied to the frame construction unit 115.

Additionally, the data slice processing units 114-1 to 114-N will be denoted as data slice processing unit 114 for description in the following description when they do not need to be particularly discriminated. Similarly, the PLP processing units 131-1 to 131-N, the data slice construction units 132-1 to 132-N, and the time/frequency interleavers 133-1 to 133-N will be denoted as PLP processing unit 131, data slice construction unit 132, and time/frequency interleaver 133, respectively, when they do not need to be particularly discriminated.

The frame construction unit 115 is supplied with one or more data slices from (the time/frequency interleavers 133-1 to 133-N of) the data slice processing units 114-1 to 114-N. The frame construction unit 115 constructs a C2 frame including one or more data slices from the data slice processing units 114-1 to 114-N, and supplies it to the transmission unit 116.

The transmission unit 116 performs inverse fast Fourier transform (IFFT) on the C2 frame supplied from the frame construction unit 115, and performs digital to analog (DA) conversion on the resultant OFDM signal. The transmission unit 116 then modulates the OFDM signal converted from a digital signal to an analog signal to a radio frequency (RF) signal, and transmits the RF signal as digital broadcast signal via the transmission path 30.

Additionally, in the configuration of the transmission apparatus 10 of Fig. 3, the blocks which are not required for PLP bundling are not illustrated as needed for convenience of the description.

(Flow of transmission processing)

A flow of a transmission processing performed by the transmission apparatus 10 of Fig. 3 will be described below with reference to the flowchart of Fig. 4.

In step S111, the BB frame generation unit 112 arranges actual data (target data such as TS, for example) as PLP supplied thereto in a data field of a BB frame, and adds a BB header including ISSY (ISCR) to the data field, thereby constructing the BB frame.

In step S112, the BB frame distribution unit 113 distributes the BB frame constructed in the processing in step S111 to one data slice among a plurality of data slices thereby to divide the BB stream into a plurality of divided streams in units of BB frame.

In step S113, the BB frame distribution unit 113 distributes the divided streams acquired in the processing in step S112 to any of the data slice processing units 114-1 to 114-N. Thereby, the divided streams acquired by dividing the BB stream are supplied to any of the data slice processing units 114-1 to 114-N.

The processing in steps S114 to S118 is performed in the data slice processing unit 114. That is, in step S114, the PLP processing unit 131 performs error correction coding on the BB frame constructing the divided frame distributed by the BB frame distribution unit 113 and supplied to the data slice processing unit 114.

In step S115, the PLP processing unit 131 maps a FEC frame acquired as a result of the error correction coding in the processing in step S114 on a signal point on a predetermined constellation in units of predetermined bits as symbol.

In step S116, the PLP processing unit 131 adds a FEC frame header to the FEC frame acquired by extracting the symbol as a result of the mapping in the processing in step S115 in units of FEC frame, thereby constructing a data slice packet.

In step S117, the data slice construction unit 132 constructs a data slice from one or more data slice packets constructed in the processing in step S116.

In step S118, the time/frequency interleaver 133 interleaves the data slice constructed in the processing in step S117 in the time direction and the frequency direction.

In step S119, the frame construction unit 115 constructs a C2 frame including the one or more interleaved data slices from (the time/frequency interleavers 133 of) the data slice processing units 114-1 to 114-N.

In step S120, the transmission unit 116 performs IFFT on the C2 frame constructed in the processing in step S119. Further, in step S121, the transmission unit 116 performs DA conversion on an OFDM signal acquired as a result of IFFT in the processing in step S120.

In step S122, the DA-converted OFDM signal acquired in the processing in step S121 is modulated to a RF signal, which is transmitted as digital broadcast signal via the transmission path 30 (Fig. 1). When the processing in step S122 ends, the transmission processing in Fig. 4 ends.

The flow of the transmission processing has been described above.

(Configuration of reception apparatus)

Fig. 5 is a diagram illustrating an exemplary configuration of the reception apparatus 20 of Fig. 1.

The reception apparatus 20 is configured to reconstruct (recover) actual data in which one PLP#i is distributed and transmitted in a plurality of data slices by PLP bundling.

In Fig. 5, the reception apparatus 20 is configured of a control unit 211, reception units 212-1 to 212-N (N is an integer of 1 or more), data slice processing units 213-1 to 213-N, buffers 214-1 to 214-N, a BB frame selection unit 215, and a BB frame processing unit 216.

The control unit 211 controls the operations of each unit in the reception apparatus 20.

The reception unit 212-1 receives and demodulates the RF signal with a predetermined bandwidth transmitted as digital broadcast signal from the transmission apparatus 10 via the transmission path 30, and performs analog to digital (AD) conversion on the resultant demodulated signal (OFDM signal) . The reception unit 212-1 then performs fast Fourier transform (FFT) on the demodulated signal converted from an analog signal to a digital signal, and supplies the resultant data slice to the data slice processing unit 213-1.

The data slice processing unit 213-1 processes the data slice supplied from the reception unit 212-1. The data slice processing unit 213-1 is configured of a time/frequency deinterleaver 231-1, a data slice decomposition unit 232-1, and a PLP processing unit 233-1.

The time/frequency deinterleaver 231-1 deinterleaves the data slice supplied from the reception unit 212-1 in the time direction and the frequency direction, and supplies the deinterleaved data slice to the data slice decomposition unit 232-1.

The data slice decomposition unit 232-1 decomposes the data slice supplied from the time/frequency deinterleaver 231-1 into data slice packets and supplies them to the PLP processing unit 233-1.

The PLP processing unit 233-1 removes the FEC frame header from a data slice packet supplied from the data slice decomposition unit 232-1 thereby to decompose the data slice packet into FEC frames. Additionally, a modulation system, a code length, and the like of the FEC frame are recognized on the basis of the removed FEC frame header, and demapping, error correction decoding, and the like are performed later.

Further, the PLP processing unit 233-1 demaps (the symbol of) the FEC frame, and performs error correction code decoding on the demapped FEC frame, thereby recovering the divided streams constructed of the BB frames. (The BB frame constructing) the divided stream recovered from the data slices by the data slice processing unit 213-1 is supplied to the buffer 214-1.

The buffer 214-1 is configured of a first in first out (FIFO) memory, for example, and sequentially stores therein (the BB frame constructing) the divided stream supplied from (the PLP processing unit 233-1 of) the data slice processing unit 213-1.

Though not illustrated, the data slice processing units 213-2 to 213-N are configured of time/frequency deinterleavers 231-2 to 231-N, data slice decomposition units 232-2 to 232-N, and PLP processing units 233-2 to 233-N, respectively, like the data slice processing unit 213-1. The data slices supplied from the reception units 212-2 to 212-N are processed in the data slice processing units 213-2 to 213-N as in the data slice processing unit 213-1, and (the BB frames constructing) the resultant divided streams are sequentially stored in the buffer 214-2 to 214-N.

Additionally, the data slice processing units 213-1 to 213-N will be denoted as data slice processing unit 213 for description in the following description when they do not need to be particularly discriminated. Similarly, the time/frequency deinterleavers 231-1 to 231-N, the data slice decomposition units 232-1 to 232-N, and the PLP processing units 233-1 to 233-N will be denoted as time/frequency deinterleaver 231, data slice decomposition unit 232, and PLP processing unit 233, respectively, for description when they do not need to be particularly discriminated. Further, the buffers 214-1 to 214-N will be denoted as buffer 214 for description when they do not need to be particularly discriminated.

The BB frame selection unit 215 reads the BB frames from the buffers 214-1 to 214-N in an order in which the BB frames constructing the original BB stream are arranged on the basis of ISSY (ISCR) included in the BB headers added to the BB frames constructing the divided streams stored in the buffers 214-1 to 214-N, and supplies them to the BB frame processing unit 216.

The BB frame processing unit 216 rearranges the BB frames in the order in which they are supplied from the BB frame selection unit 215, thereby reconstructing (recovering) the original BB stream. Further, the BB frame processing unit 216 decomposes a BB frame configuring the original BB stream, and recovers and outputs the actual data (target data such as TS, for example).

Additionally, in the configuration of the reception apparatus 20 of Fig. 5, the blocks which are not required for PLP bundling are not illustrated as needed for convenience of the description. Further, the configuration of the reception apparatus 20 of Fig. 5 describes that a plurality of reception units 212 corresponding to the data slice processing units 213 are provided, but it may be such that only one reception unit 212 capable of receiving a wideband RF signal is provided and a data slice included in a C2 frame is decomposed so that the decomposed data slices are supplied to the data slice processing units 213-1 to 213-N.

(Flow of reception processing)

A flow of a reception processing performed by the reception apparatus of Fig. 5 will be described below with reference to the flowchart of Fig. 6.

In step S211, the reception unit 212 receives and demodulates the RF signal with a predetermined bandwidth transmitted as digital broadcast signal from the transmission apparatus 10 via the transmission path 30.

In step S212, the reception unit 212 performs AD conversion on the demodulated signal (OFDM signal) acquired by demodulating the RF signal in the processing in step S211.

In step S213, the reception unit 212 performs FFT on a digital signal acquired as a result of the AD conversion in the processing in step S212.

In step S214, the time/frequency deinterleaver 231 deinterleaves the data slice acquired as a result of the processing in step S213 in the time direction and the frequency direction.

In step S215, the data slice decomposition unit 232 decomposes the deinterleaved data slice acquired as a result of the processing in step S214 into data slice packets.

In step S216, the PLP processing unit 233 removes the FEC frame header from a data slice packet decomposed in the processing in step S215 thereby to decompose the data slice packet into FEC frames.

In step S217, the PLP processing unit 233 demaps (the symbols of) the FEC frames acquired in the processing in step S216.

In step S218, the PLP processing unit 233 performs error correction code decoding on the FEC frames demapped in the processing in step S217, thereby recovering the divided streams constructed of the BB frames.

In step S219, the buffer 214 stores (buffers) the BB frames constructing the divided streams recovered in the processing in step S218.

In step S220, the BB frame selection unit 215 performs a BB frame selection processing. In the BB frame selection processing, processing of selecting a BB frame to be read from the buffers 214-1 to 214-N is performed on the basis of ISSY (ISCR) included in the BB headers added to the BB frames constructing the divided streams stored in the buffers 214-1 to 214-N in the processing in step S219.

That is, the BB frames constructing the divided streams stored in the buffers 214-1 to 214-N are stored in the buffers 214-1 to 214-N until a timing in the arrangement order in the original BB stream, and are read from the buffers 214-1 to 214-N at the timing in the arrangement order in the original BB stream.

Further, in the BB frame selection processing, if an error occurs during transmission and ISCR cannot be acquired, a BB frame is selected on the basis of the BB frame estimation result. Any estimation processing among BB frame estimation using SYNCD, BB frame estimation using a rule of BB frame selection, and BB frame estimation using a next ISCR predictive result is performed for the BB frame estimation processing. Additionally, the detailed contents of the BB frame selection processing when an error occurs will be described with reference to the flowcharts of Fig. 23, Fig. 26, and Fig. 29.

In step S221, the BB frame processing unit 216 performs a stream reconstruction processing. In the stream reconstruction processing, the BB frames selected in the processing in step S220 are rearranged in the selection order thereby to reconstruct (recover) the original BB stream.

Further, in the stream reconstruction processing, if an error occurs during transmission and the BB frame estimation processing is performed in the processing in step S220, processing of localizing the error during BB frame estimation is performed. Additionally, the detailed contents of the stream reconstruction processing will be described below with reference to the flowchart of Fig. 39.

In step S222, the BB frame processing unit 216 decomposes a BB frame configuring the original BB stream reconstructed in the processing in step S221, and recovers and outputs the actual data (target data such as TS, for example) . When the processing in step S222 ends, the reception processing in Fig. 6 ends.

The flow of the reception processing has been described above.

(Flow of BB frames)

A flow of BB frames processed in the transmission apparatus 10 of Fig. 3 and the reception apparatus 20 of Fig. 5 when PLP bundling is performed will be described below with reference to Fig. 7. Additionally, some components are omitted from the transmission apparatus 10 and the reception apparatus 20 in Fig. 7. Further, a square describing a number therein indicates a BB frame and the number described herein indicates a value of ISCR (time stamp) in the Figure.

In Fig. 7, the BB frame generation unit 112 generates BB frames from actual data (target data such as TS, for example) in the transmission apparatus 10, and the BB frames are sequentially added with a BB header including ISSY (ISCR). That is, in the example, the BB frames with ISCR of "10" to "80" are generated, and the values of ISCR included in the BB headers are in increments of "10."

Herein, as illustrated in Fig. 8, a BB frame (BBFrame) is configured of BB header (BBHeader) and data field (DATA) in which actual data is arranged. 2-byte MATYPE, 2-byte ISSY, 2-byte DFL, 1-byte ISSY, 2-byte SYNCD, and 1-byte CRC-8 are arranged in this order in the BB header.

Further, Fig. 9 illustrates exemplary formats of ISSY included in the BB header. As illustrated in Fig. 9, ISSY includes ISCR, BUFS, and BUFSTAT.

ISCR is information on a data (BB frame) transmission time, and 2- or 3-byte information. When PLP bundling is performed, ISCR is absolutely arranged in the 3-byte field of ISSY, and is counted up per 7/48 $\mu$s as unit of system minimum time. An order of the BB frames transmitted as divided streams is specified in the reception apparatus 20 with reference to ISCR serving as time stamp.

BUFS is (substantial) 2-byte information on a buffer capacity (required Buffer amount) required for compensating for a delay variation in data processing in the reception apparatus 20. A storage area as buffer with the buffer capacity indicated by BUFS is saved and data is read from and written into the buffer thereby to compensate for (absorb) a delay variation in the reception apparatus 20.

In the reception apparatus 20, BUFSTAT is (substantial) 2-byte information on a read start time to read data from the buffer with the buffer capacity indicated by BUFS. The data stored in the buffer with the buffer capacity indicated by BUFS starts being read at a time indicated by BUFSTAT (at a timing when the remaining amount of data in the buffer reaches the value indicated by BUFSTAT) in the reception apparatus 20.

When PLP bundling is performed, ISCR among ISCR, BUFS, and BUFSTAT is arranged in the 3-byte field of ISSY in the BB header of each BB frame. On the other hand, when PLP bundling is not performed, any one of ISCR, BUFS, and BUFSTAT is selectively arranged in the 3-byte field of ISSY in the BB header per BB frame.

Returning to the description of Fig. 7, the BB frame distribution unit 113 distributes the divided streams acquired by dividing the BB frame generated by the BB frame generation unit 112 to the data slice processing unit 114-1 or the data slice processing unit 114-2. Thereby, the data slice processing unit 114-1 is supplied with the divided streams constructed of the BB frames with ISCR of "10" to "20" to be processed, for example. Further, the data slice processing unit 114-2 is supplied with the divided streams constructed of the BB frames with ISCR of "30" to "40" to be processed, for example.

Then, the C2 frame including the data slices is constructed to be modulated or the like in the transmission apparatus 10 so that the RF signal is transmitted via the transmission path 30. On the other hand, in Fig. 7, the RF signal from the transmission apparatus 10 is received in the reception apparatus 20 via the transmission path 30. Then, the data slices acquired from the RF signal are processed by the data slice processing unit 213-1 and the data slice processing unit 213-2. Thereby, (the BB frames constructing) the divided streams recovered by the data slice processing unit 213-1 and (the BB frames constructing) the divided streams recovered by the data slice processing unit 213-2 are sequentially stored in the buffer 214-1 and the buffer 214-2, respectively.

The BB frame selection unit 215 reads the BB frame from the buffer 214-1 or the buffer 214-2 and supplies it to the BB frame processing unit 216 on the basis of ISCR included in the BB headers of the BB frames stored in the buffer 214-1 and the buffer 214-2. In the example, the BB frames with ISCR of "10" to "40" stored in either the buffer 214-1 or the buffer 214-2 are read on the basis of the values of ISCR in ascending order of the values . Further, the BB frames with ISCR of "50, " "60," and "90" stored in the buffer 214-1 and the BB frames with ISCR of "70" and "80" stored in the buffer 214-2 are similarly read in ascending order of the values of ISCR, respectively.

<3. Method for selecting BB frame when error occurs in PLP bundling>

(Influences when ISCR cannot be acquired due to error during transmission)

As described above, when PLP bundling is performed, ISCR is absolutely arranged in the 3-byte field of ISSY, and an order of BB frames distributed and transmitted in divided streams is specified in the reception apparatus 20 with reference to the values of ISCR (time stamps) as the only order information.

Fig. 10 illustrates that (a stream of) actual data as one PLP#i is divided in units of BB frame and transmitted in four data slices by PLP bundling. Additionally, the exemplary transmission in four data slices is illustrated herein, but the number of data slices used for transmitting one PLP#i is not limited to four, and any number of 2, 3, or between 5 and 255 may be employed.

A BB stream is distributed and transmitted in four data slices DS#1 to DS#4 in the reception apparatus 20, and thus the data slice processing units 213-1 to 213-4 process each data slice so that the BB frames constructing the divided streams acquired in this way are sequentially stored in the buffers 214-1 to 214-4.

The BB frame selection unit 215 sequentially selects the BB frames from the one with aminimum value of ISCR with reference to the values of ISCR (time stamps) of the BB headers added to the BB frames stored at the heads of the buffers 214-1 to 214-4, and supplies them to the BB frame processing unit 216 (Fig. 5) later.

However, when ISCR included in a BB header added to a BB frame cannot be acquired due to the influence of an error during transmission (such as error in a BB frame) in the reception apparatus 20, the only order information cannot be referred to, and thus an order of the BB frames cannot be specified and consequently the BB frames cannot be accurately rearranged.

Herein, Fig. 11 to Fig. 14 schematically illustrate how an error occurs in terms of the BB frames when the divided streams divided by the transmission apparatus 10 on transmission side are reconstructed (recovered) to the original BB stream by the reception apparatus 20 on reception side.

Additionally, Fig. 11 to Fig. 14 illustrate a state of BB frames in each apparatus in time series, where the state of Fig. 11 indicates the state at the earliest time and the state of Fig. 14 indicates the state at the latest time. Further, in each Figure, the left side to the transmission path 30 indicated in a dotted line indicates the processing on transmission side or in the transmission apparatus 10, and the right side to the transmission path 30 indicates the processing performed on reception side or in the reception apparatus 20. Further, in each Figure, a square describing a number therein indicates a BB frame, and the number described therein indicates a value of ISCR (time stamp).

At first, in Fig. 11, a BB stream constructed of a plurality of BB frames is generated in the transmission apparatus 10. The BB frames constructing the BB stream are sequentially added with the BB headers including ISCR of "10" to "80," respectively.

Then in Fig. 12, the BB stream of Fig. 11 is divided into four divided streams in units of BB frame by the BB frame distribution unit 113 in the transmission apparatus 10. In Fig. 12, the data slices constructed of the four divided streams are assumed as data slices DS#1 to DS#4 from the top of the Figure, and the data slice DS#1 includes the BB frame with ISCR of "10" and the BB frame with ISCR of "50."

Further, the data slice DS#2 includes the BB frame with ISCR of "20" and the BB frame with ISCR of "60, " and additionally the data slice DS#3 includes the BB frame with ISCR of "30" and the BB frame with ISCR of "70," and the data slice DS#4 includes the BB frame with ISCR of "40" and the BB frame with ISCR of "80."

A C2 frame constructed of a data slice including the thus-distributed BB frames is transmitted as RF signal from the transmission apparatus 10 to the reception apparatus 20 via the transmission path 30.

In Fig. 13, the RF signal is received by the reception apparatus 20 from the transmission apparatus 10 via the transmission path 30, the data slice DS#1 is processed by the data slice processing unit 213-1, and the BB frame with ISCR of "10" and the BB frame with ISCR of "50," which construct the divided streams recovered from the data slice DS#1, are stored in the buffer 214-1.

Further, the BB frame with ISCR of "20" constructing the divided stream recovered from the data slice DS#2 by the data slice processing unit 213-2 is stored in the buffer 214-2, but since an error occurs in a BB frame, ISCR of the BB frame (shaded square describing "XX" therein in the Figure) arriving after the BB frame with ISCR of "20" cannot be acquired.

Further, the BB frame with ISCR of "30" and the BB frame with ISCR of "70," which construct the divided streams recovered from the data slice DS#3 by the data slice processing unit 213-3, are sequentially stored in the buffer 214-3. Further, the BB frame with ISCR of "40" and the BB frame with ISCR of "80," which construct the divided streams recovered from the data slice DS#4 by the data slice processing unit 213-4, are sequentially stored in the buffer 214-4.

In this way, the BB frames stored in the buffers 214-1 to 214-4 are selected by the BB frame selection unit 215, and the BB frame selection unit 215 sequentially selects the BB frames from the one with a minimum value of ISCR with reference to the values of ISCR (time stamps) of the BB headers added to the BB frames stored at the heads of the buffers 214-1 to 214-4, and supplies them to the BB frame processing unit 216 (Fig. 5) later.

Thus, when the values of ISCR of all the BB frames stored at the heads of the buffers 214-1 to 214-4 can be referred to as in Fig. 13, for example, the BB frame with ISCR of "10" may be first selected, and then the BB frame with ISCR of "20" may be selected.

However, as illustrated in Fig. 14, when the BB frame with ISCR of "10" is selected, the BB frame with ISCR of "50" is then stored at the head of the buffer 214-1, and when the BB frame with ISCR of "20" is selected, the BB frame with an unknown value of ISCR (shaded square describing "XX" therein in the Figure) is stored at the head of the buffer 214-2.

In this case, since the value of ISCR of the BB frame stored at the head of the buffer 214-2 cannot be referred to, the BB frame selection unit 215 cannot specify a BB frame with a minimum value of ISCR from among the BB frames stored at the heads of the buffers 214-1 to 214-4, and cannot select a BB frame next to the BB frame with ISCR of "20."

Herein, as illustrated on the upper side of Fig. 15, the BB frame with an unknown value of ISCR (shaded square describing "XX" therein in the Figure) is selected after the BB frame with ISCR of "50" and before the BB frame with ISCR of "70" in a correct order, but if it is selected in other order, the BB frames are rearranged in a wrong order. For example, on the lower side of Fig. 15, the BB frame with an unknown value of ISCR (shaded square describing "XX" therein in the Figure) is selected after the BB frame with ISCR of "20" and before the BB frame with ISCR of "30," for example.

In this case, the order of the BB frame with an unknown value of ISCR is wrong, and thereby the BB frames to be selected after the BB frame (the BB frames with ISCR of "30" to "50" in Fig. 15) are rearranged in a wrong order. If the selection order of the BB frame with an unknown value of ISCR is wrong as described above, its influence spreads in units of BB frame. For example, even if an error does not occur in the actual data arranged in the data filed of a BB frame, when an error occurs in a BB header and ISCR cannot be acquired, the four BB frames are erroneous and the error spreads, which causes a remarkable deterioration.

Thus, there is required to minimize the influence of an error even when ISCR cannot be acquired due to the influence of an error during transmission in channel bonding such as PLP bundling. There will be described below a method for selecting a BB frame in order to minimize the influence of an error in a correct order of rearrangement of BB frames even when a BB frame whose ISCR cannot be acquired is present due to the influence of an error (such as error in a BB frame) during transmission while PLP bundling is performed.

(1) BB frame estimation using SYNCD

A method for selecting a BB frame depending on a BB frame estimation result using SYNCD will be first described as one method for selecting a BB frame when an error occurs in PLP bundling with reference to Fig. 16 to Fig. 23.

(Method for selecting BB frame depending on BB frame estimation result using SYNCD)

SYNCD is information on the number of remaining bits required for constructing a TS packet (TSP: TSPacket) storing a BB header therein when a BB frame is stored in the TS packet. For example, Fig. 16 illustrates a plurality of exemplary BB headers (BBH) stored in TS packets (TSP), and 2-byte SYNCD indicating the number of remaining bits required for constructing a TS packet storing the BB header therein is arranged in each BB header (BBH).

With BB frame estimation using SYNCD, for example, when an error occurs in a BB frame and a BB frame with an unknown value of ISCR is present in the selectable BB frames stored in the buffers 214, the values (setting values) of SYNCD in the BB headers are compared with an expected value of SYNCD thereby to estimate a BB frame to be selected next from among the selectable BB frames in terms of SYNCD.

Additionally, the expected value of SYNCD is the number of remaining bits required for constructing a TS packet when the previously-selected BB frame is stored in the TS packet when BB frame estimation is made, and the number of bits matches with the number of bits indicated by SYNCD arranged in the BB header in the BB frame to be selected next. In other words, the expected value of SYNCD is a value of SYNCD in the BB header of a next BB frame which is predicted on the basis of a value between TS packets storing actual data therein arranged in a BB frame.

Herein, as illustrated in Fig. 17, if a BB frame with an unknown value of ISCR (shaded square describing "XX" therein in the Figure) is present when the BB frames stored at the heads of the buffers 214 are selected with reference to only ISCR of the BB frames, the BB frame selection unit 215 cannot specify a BB frame with a minimum value of ISCR, and the BB frames are likely to be rearranged in a wrong order.

On the other hand, as illustrated in Fig. 18, when a BB frame with an unknown value of ISCR (shaded square describing "XX" therein in the Figure) is present, if a BB frame added with a BB header with a value of SYNCD matching with the expected value of SYNCD is present in terms of ISCR of the BB frame and the value of SYNCD, the BB frame is estimated as BB frame to be selected next, and the BB frame is selected by the BB frame selection unit 215.

Additionally, when a BB frame added with a BB header with a value of SYNCD matching with the expected value of SYNCD is not present, the BB frame with an unknown value of ISCR (shaded square describing "XX" therein in the Figure) is estimated as BB frame to be selected next, and the BB frame is selected by the BB frame selection unit 215.

Fig. 19 schematically illustrates BB frame estimation which is made when an error occurs in a BB frame from the data slice processing unit 213-2 in terms of the BB frames constructing the divided streams recovered from the data slice DS#1 by the data slice processing unit 213-1 and the BB frames constructing the divided streams recovered from the data slice DS#2 by the data slice processing unit 213-2.

In Fig. 19, a BB frame with an unknown value of ISCR (BB frame with ISCR of "XX") is present among the selectable BB frames, and thus BB frame estimation using SYNCD is made. That is, in this case, an expected value of SYNCD is found from the BB frame previously selected by the BB frame selection unit 215, and is compared with the values of SYNCD of the selectable BB frames so that a BB frame to be selected next is estimated.

In the upper example of Fig. 19, the expected value of SYNCD is found as 728 bits from the previously-selected BB frame. Herein 728-bit SYNCD is included in the BB header of the BB frame constructing the divided stream recovered from the data slice DS#1. On the other hand, a value of SYNCD of the BB frame constructing the divided stream recovered from the data slice DS#2 (value "XX" of SYNCD) is unknown.

In this case, the expected value of 728-bit SYNCD matches with the value of SYNCD (728 bits) of the BB frame constructing the divided stream recovered from the data slice DS#1 in the selectable BB frames, and thus the BB frame is estimated as BB frame to be selected next.

On the other hand, in the lower example of Fig. 19, the expected value of SYNCD is found as 104 bits from the previously-selected BB frame. Herein, the value of SYNCD included in the BB header of the BB frame constructing the divided stream recovered from the data slice DS#1 is 512 bits, and does not match with the expected value of 104-bit SYNCD. In this case, the expected value of 104-bit SYNCD does not match with the values of SYNCD of the selectable BB frames, and thus an erroneous BB frame constructing the divided stream recovered from the data slice DS#2 is estimated as BB frame to be selected next.

As described above, with BB frame estimation using SYNCD, when ISCR cannot be acquired due to the influence of an error during transmission, a BB frame to be selected next is estimated and the BB frames are correctly rearranged depending on matching with the expected value of SYNCD with reference to the values of SYNCD of (the BB headers of) the selectable BB frames, thereby minimizing the influence of an error during transmission.

Further, SYNCD rarely overlaps, and thus a correct BB frame is estimated at a remarkably high probability when a value of SYNCD matching with the expected value of SYNCD is present, and the reasons therefor are as follows.

That is, as illustrated in Fig. 20, a BB frame is configured of a BB header, actual data (DATA), and padding (PADDING). Generally, padding (PADDING) is not used and the BB header is of 80 bits, and thus the actual data (DATA) is assumed as kbch-80 bits. Additionally, kbch is a value defined by code length and coding rate as illustrated in Fig. 21. Herein, the BB frame is cut out in units of different bits depending on whether the operation is in a mode called Null packet deletion (NPD). Additionally, when the Null packet deletion is ON, the Null packet is transmitted in a signal called 1-byte (8-bit) deleted null packet (DNP).

Specifically, when the Null packet deletion is OFF, a BB frame is cut out in units of 1496 bits into TS packets, and when the Null packet deletion is ON, a BB frame is cut out in units of 1504 bits into TS packets.

At this time, a BB frame with the same value of SYNCD as other BB frame appears after 17 BB frames at earliest. Additionally, the 17 BB frame at earliest is found under the conditions that the code length is 64k, the coding rate is 4/5, and the Null packet deletion is OFF. Then, an order is less likely to be selected between the BB frames away from each other by 17 BB frames, and thus a BB frame to be selected next is estimated by use of SYNCD when padding is not used, thereby estimating a correct BB frame at a remarkably high probability.

(Exemplary functional configuration of control unit)

Fig. 22 is a diagram illustrating an exemplary functional configuration of the control unit 211 (Fig. 5) when BB frame estimation using SYNCD is made.

In Fig. 22, the control unit 211 is configured of a BB header analysis unit 251, a BB frame selection control unit 252, a selected BB frame estimation unit 253, and a SYNCD expected value calculation unit 254.

The BB header analysis unit 251 analyzes the BB headers of the BB frames stored at the heads of the buffers 214-1 to 214-N. When a BB frame with an unknown value of ISCR is not present and the values of ISCR of all the BB frames can be acquired, the BB header analysis unit 251 supplies the BB frame selection control unit 252 with the analysis result. Further, when a BB frame with an unknown value of ISCR is present, the BB header analysis unit 251 supplies the selected BB frame estimation unit 253 with the analysis result.

The BB frame selection control unit 252 controls the BB frame selection unit 215 on the basis of the ISCR analysis result supplied from the BB header analysis unit 251, and selects a BB frame with a minimum value of ISCR from among the selectable BB frames stored at the heads of the buffers 214-1 to 214-N.

When a BB frame with an unknown value of ISCR is present among the selectable BB frames stored at the heads of the buffers 214-1 to 214-N according to the analysis result from the BB header analysis unit 251, the selected BB frame estimation unit 253 requests the SYNCD expected value calculation unit 254 for an expected value of SYNCD. The SYNCD expected value calculation unit 254 calculates an expected value of SYNCD based on the BB frame previously selected by the BB frame selection unit 215 and supplies it to the selected BB frame estimation unit 253 in response to the request from the selected BB frame estimation unit 253.

The selected BB frame estimation unit 253 compares the value of SYNCD acquired by the analysis result supplied from the BB header analysis unit 251 with the expected value of SYNCD supplied from the SYNCD expected value calculation unit 254 thereby to determine whether a value of SYNCD matching with the expected value of SYNCD is present.

When a value of SYNCD matching with the expected value of SYNCD is present, the selected BB frame estimation unit 253 estimates the BB frame of (the BB header including the value of) SYNCD as BB frame to be selected next, and supplies the BB frame selection control unit 252 with the estimation result. Further, when a value of SYNCD matching with the expected value of SYNCD is not present, the selected BB frame estimation unit 253 estimates the erroneous BB frame as BB frame to be selected next, and supplies the BB frame selection control unit 252 with the estimation result.

The BB frame selection control unit 252 controls the BB frame selection unit 215 on the basis of the estimation result supplied from the selected BB frame estimation unit 253, and selects a BB frame to be selected next depending on the estimation result from among the selectable BB frames stored at the heads of the buffers 214-1 to 214-N.

(Flow of first BB frame selection processing)

A flow of a first BB frame selection processing corresponding to the processing in step S220 in Fig. 6 will be described below with reference to the flowchart of Fig. 23.

In step S231, the BB header analysis unit 251 determines whether an erroneous BB frame (a BB header with CRC error) is present among the selectable BB frames stored at the heads of the buffers 214-1 to 214-N.

In step S231, when it is determined that an erroneous BB frame is not present, the processing proceeds to step S232. In step S232, the BB frame selection unit 215 selects a BB frame with a minimum value of ISCR from among the selectable BB frames stored at the heads of the buffers 214-1 to 214-N under control of the BB frame selection control unit 252.

Further, in step S231, when it is determined that an erroneous BB frame is present, the processing proceeds to step S233. In step S233, the selected BB frame estimation unit 253 compares the expected value of SYNCD calculated by the SYNCD expected value calculation unit 254 with the values of SYNCD acquired from the selectable BB frames stored at the heads of the buffers 214-1 to 214-N thereby to determine whether a value of SYNCD matching with the expected value of SYNCD is present.

In step S233, when it is determined that a value of SYNCD matching with the expected value of SYNCD is present, the processing proceeds to step S234. In step S234, the selected BB frame estimation unit 253 estimates a BB frame with the value of SYNCD matching with the expected value of SYNCD as BB frame to be selected next, and supplies the BB frame selection control unit 252 with the estimation result.

In step S235, the BB frame selection unit 215 selects the BB frame depending on the estimation result in the processing in step S234 (BB frame with the value of SYNCD matching with the expected value of SYNCD) from among the selectable BB frames stored at the heads of the buffers 214-1 to 214-N under control of the BB frame selection control unit 252.

Further, in step S233, when it is determined that a value of SYNCD matching with the expected value of SYNCD is not present, the processing proceeds to step S236. In step S236, the BB header analysis unit 251 determines whether a plurality of erroneous BB frames (BB headers with CRC error) are present among the selectable BB frames stored at the heads of the buffers 214-1 to 214-N.

In step S236, when it is determined that a plurality of erroneous BB frames are not present among the selectable BB frames or only one erroneous BB frame is present, the processing proceeds to step S237. In step S237, the selected BB frame estimation unit 253 estimates the erroneous BB frame as BB frame to be selected next, and supplies the BB frame selection control unit 252 with the estimation result.

In step S238, the BB frame selection unit 215 selects the erroneous BB frame depending on the estimation result in the processing in step S237 from among the selectable BB frames stored at the heads of the buffers 214-1 to 214-N under control of the BB frame selection control unit 252.

Further, in step S236, when it is determined that a plurality of erroneous BB frames are present among the selectable BB frames, the processing proceeds to step S239. In step S239, the BB frame selection unit 215 selects a BB frame in a series (path) for which the longest time has passed since the previous selection from among the selectable BB frames stored at the heads of the buffers 214-1 to 214-N under control of the BB frame selection control unit 252. For example, when a time after a BB frame stored in the buffer 214-1 is previously selected is longer than the times after the BB frames stored in other buffers 214-2 to 214-N are previously selected, a BB frame stored in the buffer 214-1 is selected.

When the processing in step S232, S235, S238, or S239 ends, the processing returns to the processing in step S220 in Fig. 6, and the processing in step S220 and its subsequent processing is performed.

The first BB frame selection processing has been described above. In the first BB frame selection processing, when ISCR cannot be acquired due to the influence of an error during transmission, a BB frame to be selected next is estimated depending on matching with an expected value of SYNCD with reference to the values of SYNCD of (the BB headers of) the selectable BB frames, and thus the BB frames are correctly rearranged, thereby minimizing the influence of an error during transmission.

(2) BB frame estimation using rule of BB frame selection

A method for selecting a BB frame depending on a BB frame estimation result using a rule of BB frame selection will be described below as one method for selecting a BB frame when an error occurs in PLP bundling with reference to Fig. 24 to Fig. 26.

(Method for selecting BB frame depending on BB frame estimation result using rule of BB frame selection)

Fig. 24 is a diagram for explaining a method for selecting a BB frame depending on a BB frame estimation result using a rule of BB frame selection.

In Fig. 24, the RF signal from the transmission apparatus 10 is received by the reception apparatus 20, the data slices DS#1 to DS#4 are processed by the data slice processing units 213-1 to 213-4, and the BB frames constructing the divided streams to be recovered are sequentially stored in the corresponding buffers 214-1 to 214-4. Then, when ISCR of all the BB frames stored at the heads of the buffers 214-1 to 214-4 can be referred to, the BB frame selection unit 215 specifies and selects a BB frame with a minimum value of ISCR from among the selectable BB frames . Thereby, in the example on the left side of Fig. 24, the BB frames with ISCR of "10" to "50" are sequentially selected.

In this way, when an erroneous BB frame is not present among the selectable BB frames, the BB frame selection unit 215 sequentially selects the BB frames with a minimum value of ISCR, and a rule of BB frame selection during the normal reception is defined herein.

For example, in the example on the left side of Fig. 24, when the series of the processing on the data slices DS#1 to DS#4 is assumed as series A to D, respectively, the BB frame with ISCR of "10," the BB frame with ISCR of "20," the BB frame with ISCR of "30," the BB frame with ISCR of "40," and the BB frame with ISCR of "50" are selected from series A, series B, series C, series D, and series A, respectively. In this case, a rule of series of BB frames selected by the BB frame selection unit 215 requires selection in the order of "A, B, C, D, A."

Further, in the example on the left side of Fig. 24, when the BB frame with ISCR of "50" stored in the buffer 214-1 is selected by the BB frame selection unit 215, a BB frame input next to the BB frame with ISCR of "50" is stored at the head of the buffer 214-1 but the value of ISCR of the BB frame (shaded square describing "XX" therein in the Figure) is unknown due to the influence of the error.

In this case, since ISCR of the BB frame stored at the head of the buffer 214-1 cannot be referred to, a BB frame with a minimum value of ISCR cannot be specified from among the BB frames stored at the heads of the buffers 214-1 to 214-4, and the BB frame selection unit 215 cannot select a BB frame next to the BB frame with ISCR of "50."

Herein, the rule of series of BB frames selected by the BB frame selection unit 215 is previously defined during normal reception before an erroneous BB frame is stored at the head of the buffer 214-1, and thus a BB frame to be selected next is estimated by use of the rule. That is, when the rule of "A, B, C, D, A" is defined for the rule of series of BB frames, the BB frame with ISCR of "50" is selected from the series A according to the rule, and thus the BB frame selection unit 215 estimates the BB frame with ISCR of "60" in the series B as BB frame to be selected next to the BB frame, and selects the BB frame with ISCR of "60."

Similarly, as illustrated in the example on the right side of Fig. 24, the BB frame selection unit 215 sequentially selects the BB frame with ISCR of "70" in the series C, the BB frame with ISCR of "80" in the series D, and the BB frame with an unknown value of ISCR in the series A (shaded square describing "XX" therein in the Figure) according to the rule of series of BB frames selected by the BB frame selection unit 215. Then, since ISCR of all the BB frames stored at the heads of the buffers 214-1 to 214-4 can be referred to after the BB frame with an unknown value of ISCR in the series A is selected, the BB frame selection unit 215 selects a BB frame with a minimum value of ISCR from among the BB frames stored at the heads of the buffers 214-1 to 214-4 from the BB frame with ISCR of "100."

In this way, when ISCR cannot be acquired due to the influence of an error during transmission with BB frame estimation using a rule of BB frame selection, a BB frame to be selected next is estimated and the BB frames are correctly rearranged according to a previously-defined rule, thereby minimizing the influence of an error during transmission.

Additionally, the way to define a rule is exemplary, and a rule may be calculated in other calculation method, for example, a conditional probability that series C is likely to be next to series B is applied to define a rule.

(Exemplary functional configuration of control unit)

Fig. 25 is a diagram illustrating an exemplary functional configuration of the control unit 211 (Fig. 5) when BB frame estimation is made by use of a rule of BB frame selection. Additionally, the components of the control unit 211 of Fig. 25 corresponding to those of the control unit 211 of Fig. 22 are denoted with the same reference numerals, and the description thereof will be omitted as needed.

In Fig. 25, the control unit 211 is configured of the BB header analysis unit 251, the BB frame selection control unit 252, the selected BB frame estimation unit 253, and a rule calculation unit 261. That is, the control unit 211 of Fig. 25 is different from the control unit 211 of Fig. 22 in that the rule calculation unit 261 is provided instead of the SYNCD expected value calculation unit 254.

The rule calculation unit 261 monitors selection of BB frames by the BB frame selection unit 215, and calculates a rule of series of BB frames selected by the BB frame selection unit 215. The rule calculation unit 261 supplies the selected BB frame estimation unit 253 with the calculated rule of series of BB frames in response to a request from the selected BB frame estimation unit 253.

When a BB frame with an unknown value of ISCR is present among the selectable BB frames stored at the heads of the buffers 214-1 to 214-N, the selected BB frame estimation unit 253 acquires the rule of series of BB frames from the rule calculation unit 261. The selected BB frame estimation unit 253 estimates a BB frame to be selected next from among the selectable BB frames stored at the heads of the buffers 214-1 to 214-N on the basis of the rule of series of BB frames from the rule calculation unit 261, and supplies the BB frame selection control unit 252 with the estimation result.

The BB frame selection control unit 252 controls the BB frame selection unit 215 on the basis of the estimation result supplied from the selected BB frame estimation unit 253 thereby to select a BB frame to be selected next depending on the estimation result from among the selectable BB frames stored at the heads of the buffers 214-1 to 214-N.

(Flow of second BB frame selection processing)

A flow of a second BB frame selection processing corresponding to the processing in step S220 in Fig. 6 will be described below with reference to the flowchart of Fig. 26.

In step S251, the BB header analysis unit 251 determines whether an erroneous BB frame (a BB header with CRC error) is present among the selectable BB frames stored at the heads of the buffers 214-1 to 214-N.

In step S251, when it is determined that an erroneous BB frame is not present, the processing proceeds to step S252. In step S252, the BB frame selection unit 215 selects a BB frame with a minimum value of ISCR from among the selectable BB frames stored at the heads of the buffers 214-1 to 214-N under control of the BB frame selection control unit 252.

In step S253, the rule calculation unit 261 monitors selection of BB frames by the BB frame selection unit 215, and calculates and holds a rule of series of BB frames selected by the BB frame selection unit 215. In this way, a rule of BB frame selection is defined during normal reception.

Further, in step S251, when it is determined that an erroneous BB frame is present, the processing proceeds to step S254. In step S254, the selected BB frame estimation unit 253 estimates a BB frame to be selected next on the basis of the rule of series of BB frames previously defined in the processing in step S253, and supplies the BB frame selection control unit 252 with the estimation result.

In step S255, the BB frame selection unit 215 selects a BB frame according to the rule depending on the estimation result in the processing in step S254 from among the selectable BB frames stored at the heads of the buffers 214-1 to 214-N under control of the BB frame selection control unit 252.

When the processing in step S253 or S255 ends, the processing returns to the processing in step S220 in Fig. 6, and the processing in step S220 and its subsequent processing is performed.

The second BB frame selection processing has been described above. In the second BB frame selection processing, when ISCR cannot be acquired due to the influence of an error during transmission, a BB frame to be selected next is estimated according to a previously-defined rule so that the BB frames are correctly rearranged, thereby minimizing the influence of an error during transmission.

(3) BB frame estimation using next ISCR predictive result

At last, a method for selecting a BB frame depending on a BB frame estimation result using a next ISCR predictive result will be described as one method for selecting a BB frame when an error occurs in PLP bundling with reference to Fig. 27 to Fig. 29.

(Method for selecting BB frame depending on BB frame estimation result using next ISCR predictive result)

Fig. 27 is a diagram for explaining a method for selecting a BB frame depending on a BB frame estimation result using a next ISCR predictive result.

In Fig. 27, the RF signal from the transmission apparatus 10 is received by the reception apparatus 20, the data slices DS#1 to DS#4 are processed by the data slice processing units 213-1 to 213-4, and the BB frames constructing the divided streams to be recovered are sequentially stored in the corresponding buffers 214-1 to 214-4. Then, when ISCR of all the BB frames stored at the heads of the buffers 214-1 to 214-4 can be referred to, the BB frame selection unit 215 specifies and selects a BB frame with a minimum value of ISCR. Thereby, in the example on the left side of Fig. 27, the BB frames with ISCR of "10" to "50" are sequentially selected.

In this way, when an erroneous BB frame is not present among the selectable BB frames, the BB frame selection unit 215 sequentially selects a BB frame with a minimum value of ISCR, and herein predicts next ISCR on BB frame selection during the normal reception.

For example, in the example on the left side of Fig. 27, the value of ISCR increases by "10" from the BB frame with ISCR of "10" to its subsequently-selected BB frame with ISCR of "20" among the BB frames selected by the BB frame selection unit 215. Similarly, the value of ISCR increases by "10" from the BB frame with ISCR of "20" to the BB frame with ISCR of "30," from the BB frame with ISCR of "30" to the BB frame with ISCR of "40," and from the BB frame with ISCR of "40" to the BB frame with ISCR of "50," respectively. Therefore, the value of ISCR is in increments of "10" in the BB frames with ISCR of "10" to "50" selected by the BB frame selection unit 215.

Further, in the example on the left side of Fig. 27, when the BB frame with ISCR of "50" stored in the buffer 214-1 is selected by the BB frame selection unit 215, a BB frame input next to the BB frame with ISCR of "50" is stored at the head of the buffer 214-1 but the value of ISCR of the BB frame (shaded square describing "XX" therein in the Figure) is unknown due to the influence of the error.

In this case, since ISCR of the BB frame stored at the head of the buffer 214-1 cannot be referred to, a BB frame with a minimum value of ISCR cannot be specified from among the BB frames stored at the heads of the buffers 214-1 to 214-4, and the BB frame selection unit 215 cannot select a BB frame next to the BB frame with ISCR of "50."

Herein, since an increment of the value of ISCR of each BB frame is previously found as next ISCR predictive result during normal reception before an erroneous BB frame is stored at the head of the buffer 214-1, a BB frame to be selected next is estimated by use of the incremental value of ISCR. That is, when an incremental value of "10" is calculated as incremental value of ISCR of a BB frame, the BB frame selection unit 215 selects a BB frame with ISCR of "60," which is increased by "10" from the value of ISCR of "50," as BB frame to be selected next to the BB frame with ISCR of "50" from the buffer 214-2 according to the incremental value.

Similarly, a BB frame with ISCR which is increased by the incremental value of ISCR ("10" in this case) from the value of ISCR of the selected BB frame is selected thereby to sequentially select the BB frame with ISCR of "70" from the buffer 214-3 and the BB frame with ISCR of "80" from the buffer 214-4 as illustrated in the example on the right side of Fig. 27.

Further, since a BB frame with ISCR of "90" which is increased by "10" from the value of ISCR of "80" is not present, in this case, a BB frame with an unknown value of ISCR (shaded square describing "XX" therein in the Figure) is selected from the buffer 214-1. Then, after the BB frame with an unknown value of ISCR is selected, ISCR of all the BB frames stored at the heads of the buffers 214-1 to 214-4 can be referred to, and thus the BB frame selection unit 215 selects a BB frame with a minimum value of ISCR from among the BB frames stored at the heads of the buffers 214-1 to 214-4 from the BB frame with ISCR of "100."

In this way, with BB frame estimation using a next ISCR predictive result, when ISCR cannot be acquired due to the influence of an error during transmission, an incremental value of ISCR is found as predictive value of ISCR so that a BB frame to be selected next is estimated depending on whether a value of ISCR close to the predictive value of ISCR is present, and the BB frames are correctly rearranged, thereby minimizing the influence of an error during transmission.

Additionally, a calculation method using an ISCR actually-measured value has been described above as a method for calculating a predictive value of ISCR (incremental value of ISCR) of a BB frame, but a predictive value may be calculated by use of a transmission parameter.

In a calculation method using a transmission parameter, the number of bits per BB frame is first calculated on the basis of a code length and a coding rate. Herein, 51568-bit is found assuming a code length of 64k and a coding rate of 4/5, for example.

The number of packets per BB frame is then calculated. Herein, for example, when the Null packet deletion (NPD) is OFF, the number of bits per BB frame is divided by 1496 thereby to calculate the number of packets. For example, 34-packet or 35-packet is found assuming 51568/1496 = 34. 29. Further, when the Null packet deletion is ON, all the values of the deleted Null packets (DNP) of previous BB frames are added to the number of packets (rounded up) after the start of the first packet included in a previous BB frame. For example, 34 + ∑DNP = 65 is assumed when the value of ∑DNP is 31, thereby finding 65 packets.

Then, for example, ISCR is counted upper 7/48 μs assuming a bit rate of 100 Mbps, and thus the following calculations are made so that "3506" is calculated as incremental value of ISCR when the number of packets per BB frame is 34 packets . Similarly, when the number of packets per BB frame is 35 packets, "3610" is calculated, and when the number of packets per BB frame is 65 packets, "6704" is calculated.

$$3506 = 34 \times 1504/100/(7/48)$$

$$3610 = 35 \times 1504/100/(7/48)$$

$$6704 = 65 \times 1504/100/(7/48)$$

Additionally, the calculation method using an ISCR actually-measured value is performed only when the Null packet deletion is OFF, and thus a differential value between consecutive BB frames is calculated during normal reception so that two incremental values of ISCR are found when the number of packets per BB frame is 34 packets and when the number of packets per BB frame is 35 packets, for example.

(Exemplary functional configuration of control unit)

Fig. 28 is a diagram illustrating an exemplary functional configuration of the control unit 211 (Fig. 5) when BB frame estimation using a next ISCR predictive result is made. Additionally, the components of the control unit 211 of Fig. 28 corresponding to those of the control unit 211 of Fig. 22 are denoted with the same reference numerals, and the description thereof will be omitted as needed.

In Fig. 28, the control unit 211 is configured of the BB header analysis unit 251, the BB frame selection control unit 252, the selected BB frame estimation unit 253, and an ISCR predictive value calculation unit 271. That is, the control unit 211 of Fig. 28 is different from the control unit 211 of Fig. 22 in that the ISCR predictive value calculation unit 271 is provided instead of the SYNCD expected value calculation unit 254.

The ISCR predictive value calculation unit 271 monitors selection of BB frames by the BB frame selection unit 215 and calculates an increment of the values of ISCR of BB frames selected by the BB frame selection unit 215 thereby to predict a value of ISCR of a BB frame to be selected next. The ISCR predictive value calculation unit 271 supplies the selected BB frame estimation unit 253 with the calculated predictive value of ISCR (incremental value of ISCR) in response to a request from the selected BB frame estimation unit 253.

When a BB frame with an unknown value of ISCR is present among the selectable BB frames stored at the heads of the buffers 214-1 to 214-N, the selected BB frame estimation unit 253 acquires the predictive value of ISCR (incremental value of ISCR) from the ISCR predictive value calculation unit 271. The selected BB frame estimation unit 253 compares the predictive value of ISCR from the ISCR predictive value calculation unit 271 with the values (setting values) of ISCR of the selectable BB frames stored at the heads of the buffers 214-1 to 214-N thereby to determine whether a value of ISCR which is the same as or close to the predictive value of ISCR is present.

When a value of ISCR which is the same as or close to the predictive value of ISCR is present, the selected BB frame estimation unit 253 estimates the BB frame of (the BB header including the value of) ISCR as BB frame to be selected next, and supplies the BB frame selection control unit 252 with the estimation result. Further, when a value of ISCR which is the same as or close to the predictive value of ISCR is not present, the selected BB frame estimation unit 253 estimates the erroneous BB frame as BB frame to be selected next, and supplies the BB frame selection control unit 252 with the estimation result.

The BB frame selection control unit 252 controls the BB frame selection unit 215 on the basis of the estimation result supplied from the selected BB frame estimation unit 253, and selects a BB frame to be selected next depending on the estimation result from among the selectable BB frames stored at the heads of the buffers 214-1 to 214-N.

(Flow of third BB frame selection processing)

A flow of a third BB frame selection processing corresponding to the processing in step S220 in Fig. 6 will be described below with reference to the flowchart of Fig. 29.

In step S261, the BB header analysis unit 251 determines whether an erroneous BB frame (a BB header with CRC error) is present among the selectable BB frames stored at the heads of the buffers 214-1 to 214-N.

In step S261, when it is determined that an erroneous BB frame is not present, the processing proceeds to step S262. In step S262, the BB frame selection unit 215 selects a BB frame with a minimum value of ISCR from among the selectable BB frames stored at the heads of the buffers 214-1 to 214-N under control of the BB frame selection control unit 252.

In step S263, the ISCR predictive value calculation unit 271 monitors selection of BB frames by the BB frame selection unit 215 and calculates an increment of the values of ISCR of BB frames selected by the BB frame selection unit 215 thereby to predict a value of ISCR of a BB frame to be selected next. In this way, a next ISCR predictive result is found during normal reception.

Further in step S261, when it is determined that an erroneous BB frame is present, the processing proceeds to step S264. In step S264, the selected BB frame estimation unit 253 compares the predictive value of ISCR previously found in the processing in step S263 with the values of ISCR of the selectable BB frames stored at the heads of the buffers 214-1 to 214-N, and determines whether a value of ISCR which is the same as or close to the predictive value of ISCR is present.

In step S264, when it is determined that a value of ISCR which is the same as or close to the predictive value of ISCR is present, the processing proceeds to step S265. In step S265, the selected BB frame estimation unit 253 estimates the BB frame with the value of ISCR which is the same as or close to the predictive value of ISCR as BB frame to be selected next, and supplies the BB frame selection control unit 252 with the estimation result.

In step S266, the BB frame selection unit 215 selects the BB frame (BB frame with the value of ISCR which is the same as or close to the predictive value of ISCR) depending on the estimation result in the processing in step S265 from among the selectable BB frames stored at the heads of the buffers 214-1 to 214-N under control of the BB frame selection control unit 252.

Further, in step S264, when it is determined that ISCR which is the same as or close to the predictive value of ISCR is not present, the processing proceeds to step S267. In step S267, the BB header analysis unit 251 determines whether a plurality of erroneous BB frames (BB headers with CRC error) are present among the selectable BB frames stored at the heads of the buffers 214-1 to 214-N.

In step S267, when it is determined that a plurality of erroneous BB frames are not present among the selectable BB frames or only one erroneous BB frame is present, the processing proceeds to step S268. In step S268, the selected BB frame estimation unit 253 estimates the erroneous BB frame as BB frame to be selected next, and supplies the BB frame selection control unit 252 with the estimation result.

In step S269, the BB frame selection unit 215 selects the erroneous BB frame depending on the estimation result in the processing in step S268 from among the selectable BB frames stored at the heads of the buffers 214-1 to 214-N under control of the BB frame selection control unit 252.

Further, in step S267, when it is determined that a plurality of erroneous BB frames are present among the selectable BB frames, the processing proceeds to step S270. In step S270, the BB frame selection unit 215 selects a BB frame in a series (path) for which the longest time has passed since the previous selection from among the selectable BB frames stored at the heads of the buffers 214-1 to 214-N under control of the BB frame selection control unit 252. For example, when a time after a BB frame stored in the buffer 214-1 is previously selected is longer than the times after the BB frames stored in other buffers 214-2 to 214-N are previously selected, a BB frame stored in the buffer 214-1 is selected.

When the processing in step S263, S266, S269, or S270 ends, the processing returns to the processing in step S220 in Fig. 6, and the processing in step S220 and its subsequent processing is performed.

The third BB frame selection processing has been described above. In the third BB frame selection processing, when ISCR cannot be acquired due to the influence of an error during transmission, an incremental value of ISCR is found as predictive value of ISCR and a BB frame to be selected next is estimated depending on whether a value of ISCR close to the predictive value of ISCR is present so that the BB frames are correctly rearranged, thereby minimizing the influence of an error during transmission.

<4. Localization of error during BB frame estimation>

Incidentally, as described above, when ISCR included in a BB header added to a BB frame cannot be acquired due to the influence of an error during transmission (such as error in a BB frame) in the reception apparatus 20, a BB frame to be selected next is estimated from among the selectable BB frames on the basis of the information arranged in the BB headers such as SYNCD or ISCR. A BB frame to be selected next can be estimated with sufficient accuracy with the BB frame estimation, but the BB frame is just estimated and not perfect, and BB frames may be rearranged in a wrong order.

From the above, when the BB frame processing unit 216 performs processing in the reception apparatus 20 while an order of rearrangement of BB frames selected by the BB frame selection unit 215 is wrong, the influence of the wrong order spreads. In particular, if an order of rearrangement of BB frames is wrong, SYNCD arranged in the BB headers does not mean anything.

Thus, there will be described below, with reference to Fig. 30 to Fig. 39, a method for localizing the influence of an erroneous BB frame in a limited part and minimizing the influence of a wrong order of rearrangement of BB frames even if the BB frame is erroneously estimated when BB frame estimation is made while an error occurs in the BB frame and ISCR included in the BB header cannot be acquired.

(Method for localizing error during BB frame estimation)

Fig. 30 is a diagram for explaining a method for selecting a BB frame depending on a BB frame estimation result.

In Fig. 30, the RF signal from the transmission apparatus 10 is received by the reception apparatus 20, the data slices DS#1 to DS#4 are processed by the data slice processing units 213-1 to 213-4, and the BB frames constructing the divided streams to be recovered are sequentially stored in the corresponding buffers 214-1 to 214-4. Then, when ISCR of all the BB frames stored at the heads of the buffers 214-1 to 214-4 can be referred to, the BB frame selection unit 215 specifies and selects a BB frame with a minimum value of ISCR. Thereby, the BB frames with ISCR of "10" to "20" are sequentially selected in the example of Fig. 30.

In this way, when an erroneous BB frame is not present among the selectable BB frames, the BB frame selection unit 215 sequentially selects the BB frames with a minimum value of ISCR, and when the BB frame with ISCR of "20" stored in the buffer 214-2 is selected by the BB frame selection unit 215, a BB frame input next to the BB frame with ISCR of "20" is stored at the head of the buffer 214-2, but the value of ISCR of the BB frame (shaded square describing "XX" therein in the Figure) is unknown due to the influence of the error.

In this case, as described above, a BB frame to be selected next is estimated from among the selectable BB frames on the basis of the information arranged in the BB headers such as SYNCD or ISCR. The BB frame selection unit 215 then selects a BB frame to be selected next on the basis of the BB frame estimation result.

Herein, when the BB frame estimation result is correct, the BB frames are rearranged in a correct order as illustrated on the upper side of Fig. 31, but when the BB frame estimation result is wrong, the BB frames are rearranged in a wrong order as illustrated on the lower side of Fig. 31. In this case, the position of the BB frame with an unknown value of ISCR is wrong due to the influence of the error, and additionally even the BB frames selected after the BB frame (the BB frames with ISCR of "30" to "50" in Fig. 31) are rearranged in a wrong order due to the influence. In this way, when a BB frame estimation result is wrong, its influence spreads in units of BB frame.

In particular, when an order of rearrangement of BB frames is wrong, SYNCD included in the BB headers does not mean anything. For example, when a BB frame estimation result is wrong and the BB frames are rearranged in a wrong order as illustrated in Fig. 32, a BB frame with an unknown value of ISCR due to the influence of the error (shaded square describing "XX" therein in the Figure) takes over information on the start position of a TS packet of the previous BB frame (which will be denoted as "packet start position information" below).

Therefore, when using the values of SYNCD included in the BB headers of the BB frames (the BB frames with ISCR of "30" to "50" in Fig. 32) rearranged in a wrong order after the BB frame with an unknown value of ISCR, the BB frame processing unit 216 discards the data (actual data) stored in the BB frames, and consequently a discontinuous point is caused in the actual data to be recovered (target data such as TS, for example).

Herein, in order to avoid such a discontinuous point from occurring, the BB frame processing unit 216 does not use the values of SYNCD included in the BB headers in a period in which an order of rearrangement of BB frames can be wrong (which will be denoted as "influence period" below), and takes over the packet start position information of a BB frame immediately before the influence period.

For example, when a BB frame estimation result is wrong and the BB frames are rearranged in a wrong order as illustrated in Fig. 33, not only the BB frame with an unknown value of ISCR (shaded square describing "XX" therein in the Figure) but also the BB frames in the influence period take over the packet start position information of the BB frame immediately before the influence period. Additionally, the packet start position information may use bit information acquired from SYNCD included in the BB header of the BB frame immediately before the influence period, for example.

Specifically, the BB frame with an unknown value of ISCR (shaded square describing "XX" therein in the Figure) and the BB frames with ISCR of "30" to "50" are in the influence period in Fig. 33, and thus the packet start position information of the BB frame with ISCR of "20" immediately before the influence period is taken over. Thereby, SYNCD is not used in the influence period in which an order of BB frames can be wrong, data (actual data) stored in the BB frames is not uselessly discarded, and consequently a discontinuous point is not caused in the actual data to be recovered (target data such as TS, for example) . Additionally, in the example, the BB frames with ISCR of "10," "20," "70," and "80" outside the influence period use the values of SYNCD included in the BB headers.

Additionally, an influence period depends on a BB frame estimation algorithm, and its maximum value is assumed as period between immediately after a BB frame input immediately before an erroneous BB frame is selected from a buffer 214 inputting the erroneous BB frame therein and immediately before a BB frame input immediately after the erroneous BB frame is selected.

For example, the BB frame with an unknown value of ISCR due to the influence of an error (shaded square describing "XX" therein in the Figure) and the BB frame with ISCR of "100" are sequentially input in the buffer 214-2 next to the BB frame with ISCR of "20" in Fig. 34. Then, when the BB frame with ISCR of "20" stored at the head of the buffer 214-2 is selected, a BB frame input next to the BB frame with ISCR of "20" is stored at the head but the value of ISCR of the BB frame (shaded square describing "XX" therein in the Figure) is unknown due to the influence of the error.

In this case, BB frame estimation using SYNCD or the like is made until the BB frame with an unknown value of ISCR stored at the head of the buffer 214-2 (shaded square describing "XX" therein in the Figure) is selected from among the selectable BB frames stored at the heads of the buffers 214-1 to 214-4 and the BB frame with ISCR of "100" is stored at the head of the buffer 214-2. For example, Fig. 35 illustrates a case in which BB frames are arranged in a correct order and a case in which BB frames are arranged in a wrong order.

That is, the BB frame with an unknown value of ISCR (shaded square describing "XX" therein in the Figure) can be selected as BB frame between the BB frame selected immediately after the BB frame with ISCR of "20" and the BB frame selected immediately before the BB frame with ISCR of "100" and a period therebetween is assumed as maximum influence period. That is, it is found that a value "XX" of ISCR is higher than "20" and lower than "100," and thus the BB frames for which the value of ISCR exceeds "20" and is less than "100" are assumed as BB frames in the influence period, and the values of SYNCD included in the BB headers added to the BB frames are not used.

For example, as illustrated in Fig. 36, since when the BB frame processing unit 216 uses the values of SYNCD included in the BB headers of the BB frames (the BB frames with ISCR of "30" to "50" in Fig. 36) rearranged in a wrong order after the BB frame with an unknown value of ISCR, a discontinuous point is caused in actual data to be recovered, the values of SYNCD included in the BB headers are not used in the influence period and the packet start position information of the BB frame immediately before the influence period is taken over as illustrated in Fig. 37.

Specifically, the BB frame with an unknown value of ISCR (shaded square describing "XX" therein in the Figure) and the BB frames with ISCR of "30" to "90" are in the influence period (maximum influence period) in Fig. 37, and thus the packet start position information of the BB frame with ISCR of "20" immediately before the influence period is taken over. Thereby, SYNCD is not used in the influence period in which an order of the BB frames can be wrong, and thus the data (actual data) stored in the BB frames is not uselessly discarded, and consequently a discontinuous point is not caused in the actual data to be recovered. Additionally, in the example, the BB frames with ISCR of "10," "20," and "100" outside the influence period use the values of SYNCD included in the BB headers.

In this way, the values of SYNCD included in the BB headers are not used for localizing an error during BB frame estimation in BB frames in an influence period in which an order of rearrangement of the BB frames can be wrong, and the packet start position information of a BB frame immediately before the influence period is taken over thereby to avoid a discontinuous point caused by discarding data (actual data) stored in the BB frame, thereby minimizing the influence of an error during transmission.

(Exemplary functional configuration of control unit)

Fig. 38 is a diagram illustrating an exemplary functional configuration of the control unit 211 (Fig. 5) when an error is localized during BB frame estimation. Additionally, the components of the control unit 211 of Fig. 38 corresponding to those of the control unit 211 of Fig. 22 are denoted with the same reference numerals, and the description thereof will be omitted as needed.

In Fig. 38, the control unit 211 is configured of the BB header analysis unit 251, the BB frame selection control unit 252, the selected BB frame estimation unit 253, the SYNCD expected value calculation unit 254, and a BB frame processing control unit 281. That is, the control unit 211 of Fig. 38 is different from the control unit 211 of Fig. 22 in that the BB frame processing control unit 281 is newly added.

When a BB frame with an unknown value of ISCR is present among the selectable BB frames stored at the heads of the buffers 214-1 to 214-N, the selected BB frame estimation unit 253 compares the expected value of SYNCD with the values of SYNCD, and determines whether a value of SYNCD matching with the expected value of SYNCD is present.

When a value of SYNCD matching with the expected value of SYNCD is present, the selected BB frame estimation unit 253 estimates the BB frame with SYNCD as BB frame to be selected next, and supplies the BB frame selection control unit 252 with the estimation result. Thereby, the BB frame selection unit 215 selects the BB frame depending on the estimation result from among the selectable BB frames stored at the heads of the buffers 214-1 to 214-N.

Herein, when making BB frame estimation, the selected BB frame estimation unit 253 generates a 1-bit flag (which will be denoted as "influence period flag" below) indicating a BB frame in an influence period in which an order of rearrangement of BB frames can be wrong when the BB frame estimation result is wrong, and supplies it to the BB frame processing control unit 281 at a timing to select a BB frame by the BB frame selection unit 215.

The BB frame processing control unit 281 is supplied with an influence period flag of "1," for example, from the selected BB frame estimation unit 253 when a BB frame processed in the BB frame processing unit 216 is a BB frame in the influence period, and is supplied with an influence period flag of "0," for example, when the BB frame is outside the influence period. The BB frame processing control unit 281 controls processing of reconstructing (recovering) the original BB stream performed in the BB frame processing unit 216 on the basis of an influence period flag supplied from the selected BB frame estimation unit 253.

Specifically, when the influence period flag from the selected BB frame estimation unit 253 is "0" or the BB frame is outside the influence period, the BB frame processing control unit 281 uses the value of SYNCD included in the BB header of the BB frame. On the other hand, when the influence period flag from the selected BB frame estimation unit 253 is "1" or the BB frame is in the influence period, the BB frame processing control unit 281 takes over the packet start position information of a BB frame immediately before the influence period.

Additionally, the configuration of the control unit 211 of Fig. 38 has been described assuming an exemplary configuration when BB frame estimation using SYNCD is employed as a BB frame estimation method, but the configuration may be similarly employed also when BB frame estimation using a rule of BB frame selection or BB frame estimation using a next ISCR predictive result is employed.

(Flow of stream reconstruction processing)

A flow of a stream reconstruction processing corresponding to the processing in step S221 in Fig. 6 will be described below with reference to the flowchart of Fig. 39.

In step S281, the BB frame processing control unit 281 determines whether a BB frame to be processed by the BB frame processing unit 216 is a BB frame in the influence period on the basis of an influence period flag supplied from the selected BB frame estimation unit 253.

In step S281, when it is determined that the target BB frame is a BB frame outside the influence period, the processing proceeds to step S282. In step S282, the BB frame processing control unit 281 controls the BB frame processing unit 216 to convert the BB frame to be processed in step S281 to a TS packet by use of SYNCD included in the BB header.

Further in step S281, when it is determined that the target BB frame is a BB frame in the influence period, the processing proceeds to step S283. In step S283, the BB frame processing control unit 281 controls the BB frame processing unit 216 to convert the BB frame to be processed in step S281 to a TS packet by use of the packet start position information of a BB frame immediately before the influence period.

The processing in step S282 or S283 is performed, and thus the original BB stream is reconstructed (recovered) from the rearranged BB frames. Additionally, when the processing in step S282 or S283 ends, the processing returns to the processing in step S221 in Fig. 6 and the processing in step S221 and its subsequent processing is performed.

The stream reconstruction processing has been described above. In the stream reconstruction processing, the packet start position information of a BB frame immediately before an influence period is taken over without the use of the values of SYNCD included in the BB headers of BB frames in the influence period in which an order of rearrangement of the BB frames can be wrong, and thus a discontinuous point caused by discarding data (actual data) stored in the BB frame is avoided, thereby minimizing the influence of an error during transmission.

<5. Configuration of computer>

A series of processing described above can be performed in hardware or in software. When the series of processing is performed in software, the programs configuring the software are installed in a computer. Fig. 40 is a diagram illustrating an exemplary hardware configuration of a computer for performing the series of processing by the programs.

In a computer 900, a central processing unit (CPU) 901, a read only memory (ROM) 902, and a random access memory (RAM) 903 are mutually connected via a bus 904. The bus 904 is further connected with an I/O interface 905. The I/O interface 905 is connected with an input unit 906, an output unit 907, a recording unit 908, a communication unit 909, and a drive 910.

The input unit 906 is configured of a keyboard, mouse, microphone, or the like. The output unit 907 is configured of a display, speaker, or the like. The recording unit 908 is configured of a hard disc, nonvolatile memory, or the like. The communication unit 909 is configured of a network interface or the like. The drive 910 drives a removable medium 911 such as magnetic disc, optical disc, magnetooptical disc or semiconductor memory.

In the thus-configured computer 900, the CPU 901 loads and executes the programs stored in the ROM 902 or the recording unit 908 into the RAM 903 via the I/O interface 905 and the bus 904 so that the series of processing is performed.

The programs executed by the computer 900 (the CPU 901) can be recorded in the removable medium 911 as package medium or the like to be provided, for example. Further, the programs can be provided via a wired or wireless transmission medium such as local area network, Internet or digital satellite broadcasting.

In the computer 900, the removable medium 911 is mounted on the drive 910 so that the programs can be installed in the recording unit 908 via the I/O interface 905. Further, the programs can be received by the communication unit 909 and installed in the recording unit 908 via a wired or wireless transmission medium. Additionally, the programs can be previously installed in the ROM 902 or the recording unit 908.

Herein, in the specification, the processing performed by the computer according to the programs does not necessarily need to be performed in time series in an order described in the flowcharts. That is, the processing performed by the computer according to the programs includes the processing performed in parallel or independently (such as parallel processing or processing by objects). Further, the programs may be processed in one computer (processor) or may be distributed and processed in a plurality of computers.

REFERENCE SIGNS LIST

| | |
|---|---|
| 1 | Transmission system |
| 10 | Transmission apparatus |
| 20 | Reception apparatus |
| 30 | Transmission path |
| 111 | Control unit |
| 112 | BB frame generation unit |
| 113 | BB frame distribution unit |
| 114 | Data slice processing unit |
| 115 | Frame construction unit |
| 116 | Transmission unit |
| 211 | Control unit |
| 212 | Reception unit |
| 213 | Data slice processing unit |
| 214 | Buffer |
| 215 | BB frame selection unit |
| 216 | BB frame processing unit |
| 251 | BB header analysis unit |
| 252 | BB frame selection control unit |
| 253 | Selected BB frame estimation unit |
| 254 | SYNCD expected value calculation unit |
| 261 | Rule calculation unit |
| 271 | ISCR predictive value calculation unit |
| 281 | BB frame processing control unit |
| 900 | Computer |
| 901 | CPU |

**Claims**

**1.** A reception apparatus comprising:

a reception unit (212-1, 212-2, ..., 212-N) for receiving a plurality of divided streams acquired by distributing baseband, BB, frames of a BB stream, which is a stream of BB frames, to a plurality of data slices; and

a reconstruction unit (215, 216) for selecting the BB frames for processing in a selection order based on packet start position information of a BB frame and constructing packets thereby to reconstruct the original BB stream from the plurality of the divided streams,

wherein the reconstruction unit (216) is configured, when an error occurs during transmission such that an order of the BB frames cannot be specified, to estimate the BB frame to be selected for processing and to specify the packet start position information of BB frames in an influence period as the packet start position information of a BB frame immediately before the influence period, wherein the packet start position information indicates the start position of a transport stream packet of a BB frame and the influence period indicates a period of BB frames during which an order of rearrangement of the BB frames can be wrong.

**2.** The reception apparatus according to claim 1, further comprising a plurality of buffers (214-1, 214-2, ..., 214-N) for sequentially storing BB frames to be selected therein,
wherein the influence period is the period starting immediately after a BB frame is input into the buffer immediately before an erroneous BB frame is selected and ending immediately before a BB frame is input into the buffer immediately after the erroneous BB frame is selected .

**3.** The reception apparatus according to claim 2,
wherein information on a packet start position of a BB frame immediately before the influence period is information acquired from SYNCD defined in the digital video broadcasting-cable second generation, DVB-C2, standard included in the BB header added to the BB frame.

**4.** A reception method comprising
receiving a plurality of divided streams acquired by distributing baseband, BB, frames of a BB stream which is a stream of BB frames to a plurality of data slices,
selecting the BB frames for processing in a selection order based on packet start position information of a BB frame and constructing packets thereby to reconstruct the original BB stream from the plurality of the divided streams, and
when an error occurs during transmission such that an order of the BB frames cannot be specified, estimating the BB frame to be selected for processing and specifying the packet start position information of BB frames in an influence period as the packet start position information of a BB frame immediately before the influence period, wherein the packet start position information indicates the start position of a transport stream packet of a BB frame and the influence period indicates a period of BB frames during which an order of rearrangement of the BB frames can be wrong.

## Patentansprüche

1. Empfangsvorrichtung, die Folgendes umfasst:

   eine Empfangseinheit (212-1, 212-2, ..., 212-N) zum Empfangen mehrerer unterteilter Ströme, die durch Verteilen von Basisbandrahmen, BB-Rahmen, eines BB-Stroms, der ein Strom von BB-Rahmen ist, auf mehrere Datenteile erfasst werden; und
   eine Wiederherstellungseinheit (215, 216) zum Auswählen der BB-Rahmen für eine Verarbeitung in einer Auswahlreihenfolge anhand von Paketstartpositionsinformationen eines BB-Rahmens und dadurch Erstellen von Paketen, um den originalen BB-Strom aus den mehreren unterteilten Strömen wiederherzustellen,
   wobei die Wiederherstellungseinheit (216) konfiguriert ist, dann, wenn ein Fehler während der Übertragung auftritt, so dass eine Reihenfolge der BB-Rahmen nicht spezifiziert werden kann, den BB-Rahmen zu schätzen, der für eine Verarbeitung auszuwählen ist, und die Paketstartpositionsinformationen von BB-Rahmen in einer Einflussperiode als die Paketstartpositionsinformationen eines BB-Rahmens unmittelbar vor der Einflussperiode zu spezifizieren, wobei die Paketstartpositionsinformationen die Startposition eines Transportstrompakets eines BB-Rahmens angeben und die Einflussperiode eine Periode von BB-Rahmen angibt, während der eine Reihenfolge der Neuanordnung der BB-Rahmen falsch sein kann.

2. Empfangsvorrichtung nach Anspruch 1, die ferner mehrere Zwischenspeicher (214-1, 214-2, ..., 214-N), um darin auszuwählende BB-Rahmen fortlaufend zu speichern umfasst,
   wobei die Einflussperiode die Periode ist, die unmittelbar beginnt, nachdem ein BB-Rahmen in den Zwischenspeicher eingegeben worden ist, unmittelbar bevor ein fehlerhafter BB-Rahmen ausgewählt wird, und die endet, unmittelbar bevor ein BB-Rahmen in den Zwischenspeicher eingegeben wird, unmittelbar nachdem der fehlerhafte BB-Rahmen ausgewählt worden ist.

3. Empfangsvorrichtung nach Anspruch 2,
   wobei Informationen über eine Paketstartposition eines BB-Rahmens unmittelbar vor der Einflussperiode Informationen sind, die von SYNCD erfasst werden, das in dem Standard des digitalen Kabelfernsehens zweiter Generation, DVB-C2-Standard, definiert ist, der in dem BB-Dateikopf, der zu dem BB-Rahmen hinzugefügt ist, enthalten ist.

4. Empfangsverfahren, das Folgendes umfasst:

   Empfangen mehrerer unterteilter Ströme, die durch Verteilen von Basisbandrahmen, BB-Rahmen, eines BB-Stroms, der ein Strom von BB-Rahmen ist, auf mehrere Datenteile erfasst werden,
   Auswählen der BB-Rahmen zum Verarbeiten in einer Auswahlreihenfolge anhand von Paketstartpositionsinformationen eines BB-Rahmens und dadurch Erstellen von Paketen, um den originalen BB-Strom aus den mehreren unterteilten Strömen wiederherzustellen, und
   dann, wenn ein Fehler während der Übertragung auftritt, so dass eine Reihenfolge der BB-Rahmen nicht spezifiziert werden kann, Schätzen des BB-Rahmens, der für eine Verarbeitung auszuwählen ist, und Spezifizieren der Paketstartpositionsinformationen von BB-Rahmen in einer Einflussperiode als die Paketstartpositionsinformationen eines BB-Rahmens unmittelbar vor der Einflussperiode, wobei die Paketstartpositionsinformationen die Startposition eines Transportstrompakets eines BB-Rahmens angeben und die Einflussperiode eine Periode von BB-Rahmen angibt, während derer eine Reihenfolge einer Neuanordnung der BB-Rahmen falsch sein kann.

## Revendications

1. Appareil de réception comprenant :

   une unité de réception (212-1, 212-2, ..., 212-N) pour recevoir une pluralité de flux divisés acquis en distribuant des trames en bande de base, BB, d'un flux BB, qui est un flux de trames BB, à une pluralité de tranches de données ; et
   une unité de reconstruction (215, 216) pour sélectionner les trames BB à traiter dans un ordre de sélection basé sur des informations de position de début de paquet d'une trame BB et pour construire des paquets pour ainsi reconstruire le flux BB original à partir de la pluralité des flux divisés,
   où l'unité de reconstruction (216) est configurée, lorsqu'une erreur se produit pendant la transmission de manière à ce qu'un ordre des trames BB ne puisse pas être spécifié, pour estimer la trame BB à sélectionner pour le traitement et pour spécifier les informations de position de début de paquet des trames BB dans une période d'influence comme informations de position de début de paquet d'une trame BB immédiatement avant la période d'influence, où les informations de position de début de paquet indiquent la position de début d'un paquet de flux de transport d'une trame BB et la période d'influence indique une période de trames BB pendant laquelle un ordre de réarrangement des trames BB peut être erroné.

**2.** Appareil de réception selon la revendication 1, comprenant en outre une pluralité de tampons (214-1, 214-2, ..., 214-N) pour stocker de manière séquentielle des trames BB à sélectionner dans ceux-ci, où la période d'influence est la période commençant immédiatement après qu'une trame BB est entrée dans le tampon immédiatement avant qu'une trame BB erronée soit sélectionnée et se terminant immédiatement avant qu'une trame BB soit entrée dans le tampon immédiatement après que la trame BB erronée a été sélectionnée.

**3.** Appareil de réception selon la revendication 2, dans lequel les informations sur une position de début de paquet d'une trame BB immédiatement avant la période d'influence sont des informations acquises du SYNCD défini dans la norme de deuxième génération de câble de diffusion vidéo numérique, DVB-C2, incluse l'en-tête BB ajouté à la trame BB.

**4.** Procédé de réception comprenant les étapes suivantes :

recevoir une pluralité de flux divisés acquis en distribuant des trames en bande de base, BB, d'un flux BB, qui est un flux de trames BB, à une pluralité de tranches de données,
sélectionner les trames BB à traiter dans un ordre de sélection basé sur des informations de position de début de paquet d'une trame BB et construire des paquets pour ainsi reconstruire le flux BB original à partir de la pluralité des flux divisés, et
lorsqu'une erreur se produit pendant la transmission de manière à ce qu'un ordre des trames BB ne puisse pas être spécifié, estimer la trame BB à sélectionner pour le traitement et spécifier les informations de position de début de paquet des trames BB dans une période d'influence comme informations de position de début de paquet d'une trame BB immédiatement avant la période d'influence, où les informations de position de début de paquet indiquent la position de début d'un paquet de flux de transport d'une trame BB et la période d'influence indique une période de trames BB pendant laquelle un ordre de réarrangement des trames BB peut être erroné.

FIG. 1

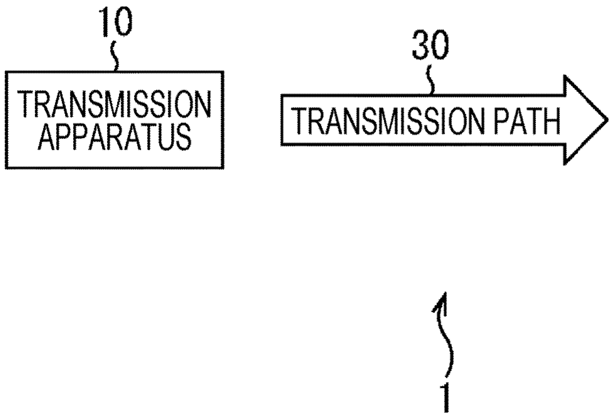
10
TRANSMISSION APPARATUS
30
TRANSMISSION PATH
20
RECEPTION APPARATUS
1

FIG. 2

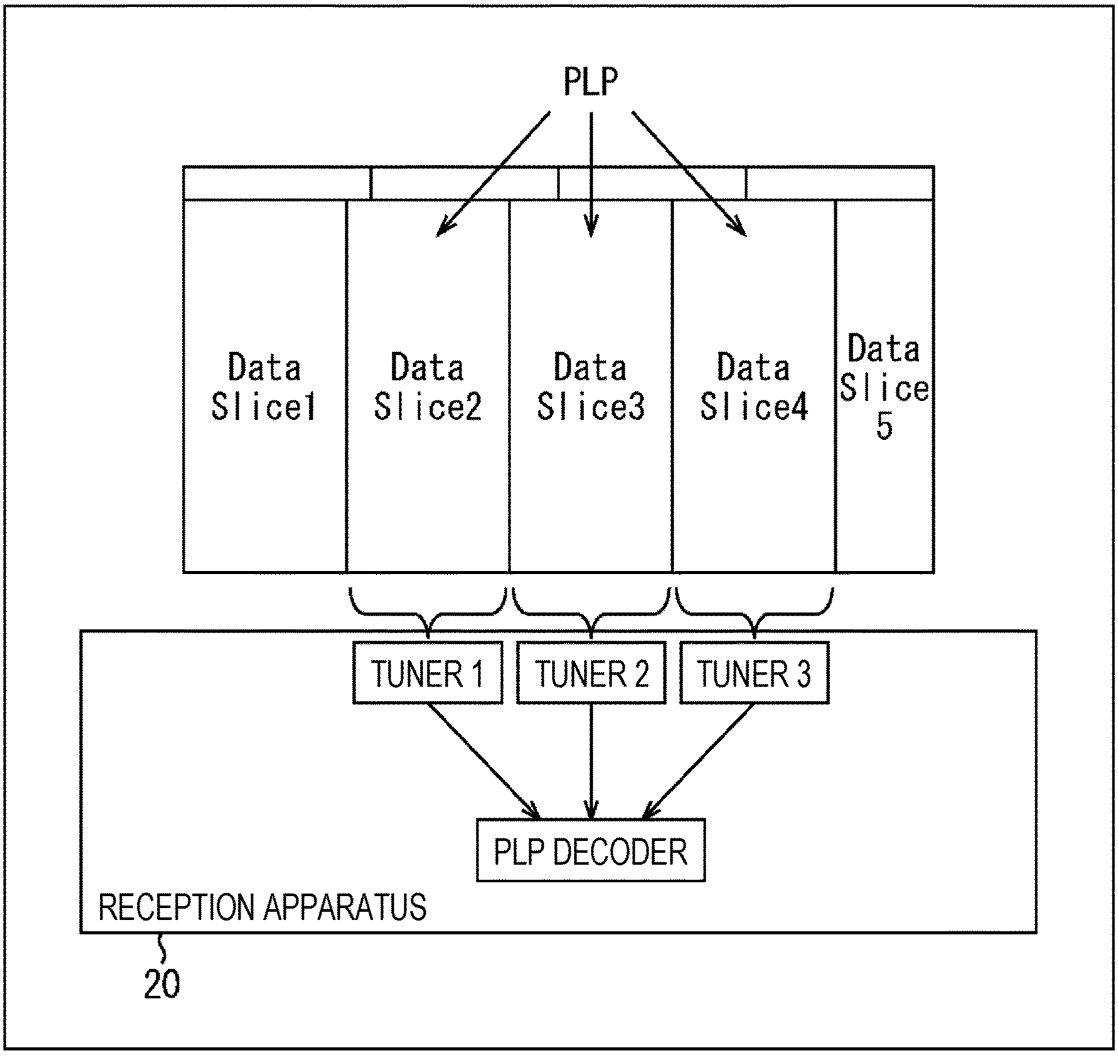
PLP
Data Slice1
Data Slice2
Data Slice3
Data Slice4
Data Slice 5
TUNER 1
TUNER 2
TUNER 3
PLP DECODER
RECEPTION APPARATUS
20

FIG. 3

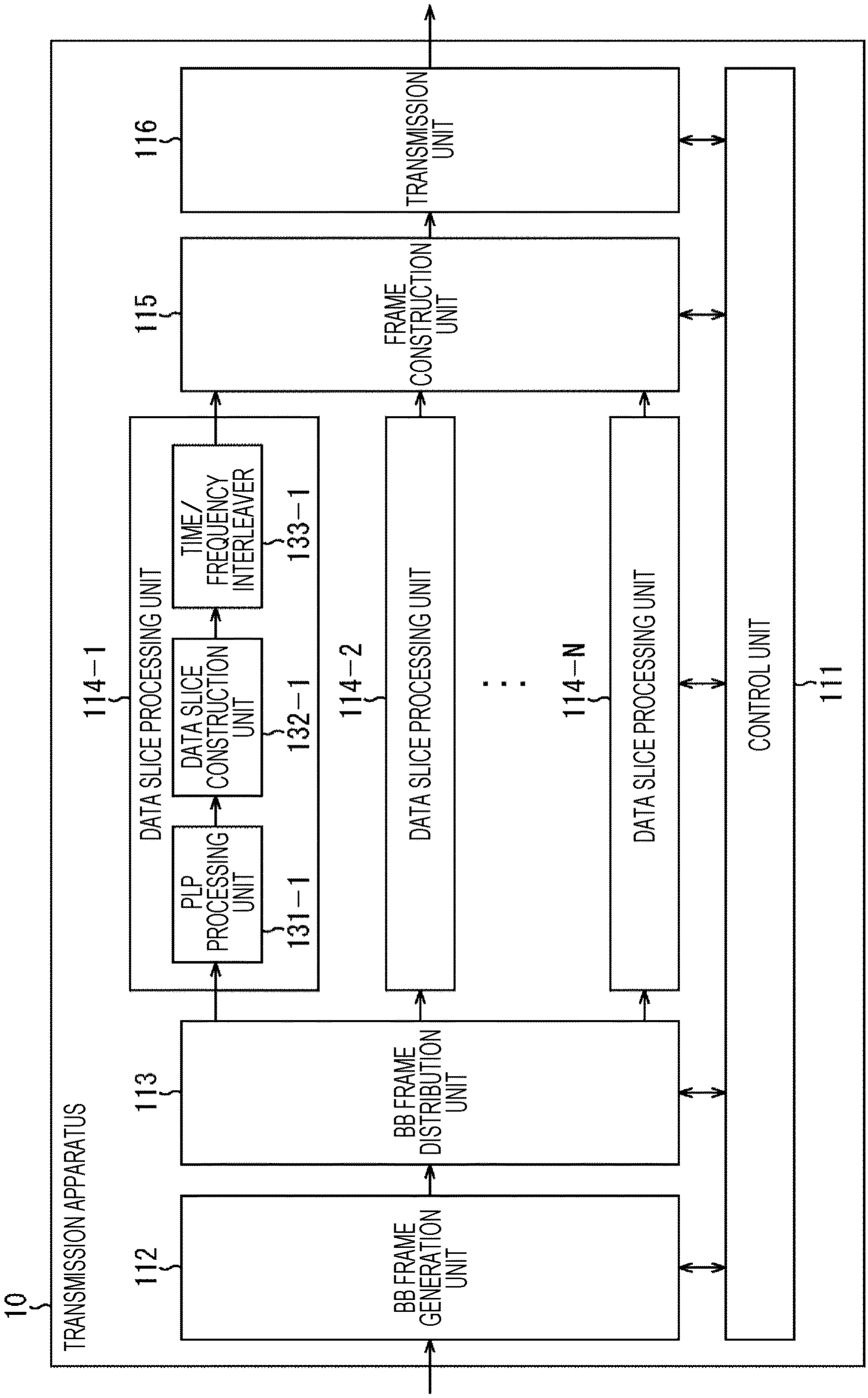
10
TRANSMISSION APPARATUS
112
BB FRAME GENERATION UNIT
113
BB FRAME DISTRIBUTION UNIT
114-1
DATA SLICE PROCESSING UNIT
PLP PROCESSING UNIT
131-1
DATA SLICE CONSTRUCTION UNIT
132-1
TIME/ FREQUENCY INTERLEAVER
133-1
114-2
DATA SLICE PROCESSING UNIT
114-N
DATA SLICE PROCESSING UNIT
115
FRAME CONSTRUCTION UNIT
116
TRANSMISSION UNIT
CONTROL UNIT
111

FIG. 4

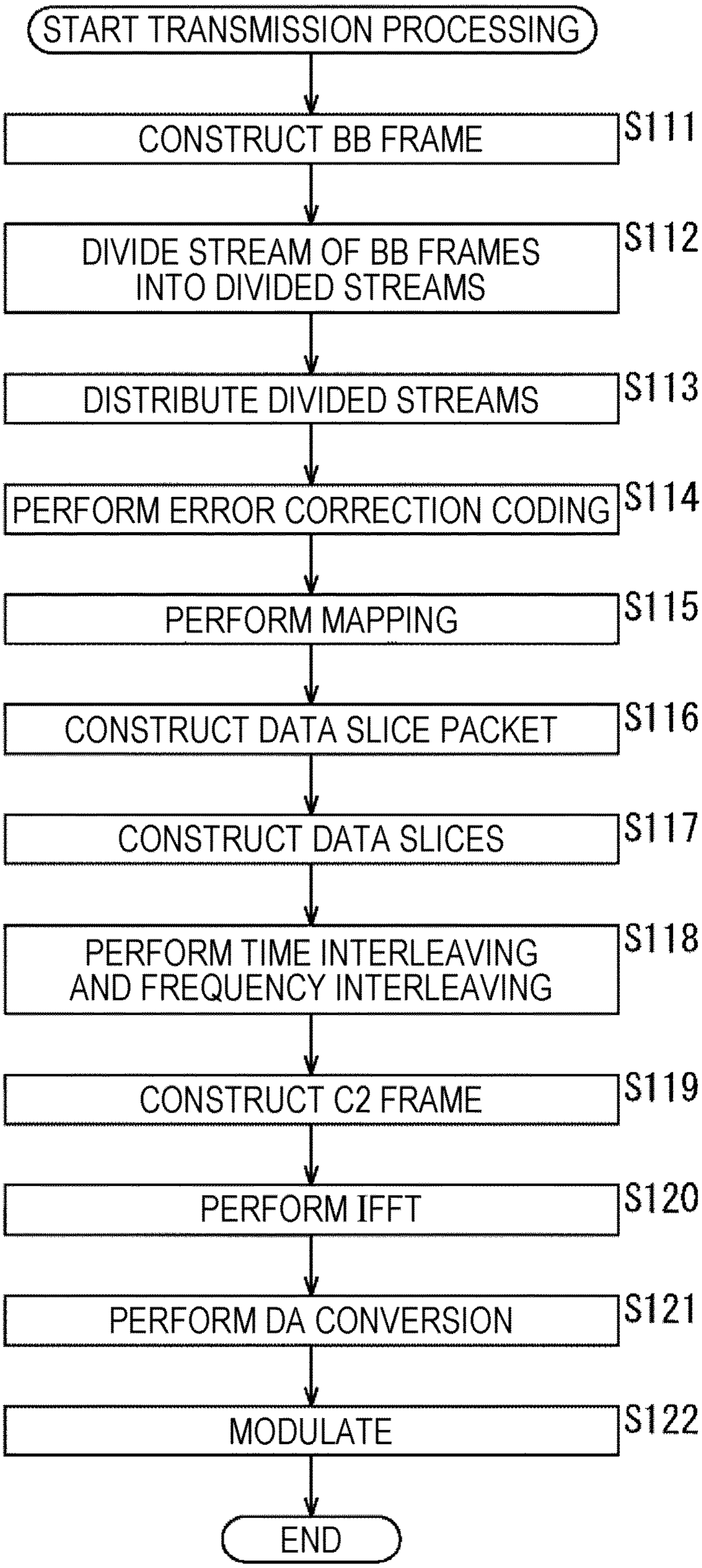
START TRANSMISSION PROCESSING
CONSTRUCT BB FRAME
S111
DIVIDE STREAM OF BB FRAMES INTO DIVIDED STREAMS
S112
DISTRIBUTE DIVIDED STREAMS
S113
PERFORM ERROR CORRECTION CODING
S114
PERFORM MAPPING
S115
CONSTRUCT DATA SLICE PACKET
S116
CONSTRUCT DATA SLICES
S117
PERFORM TIME INTERLEAVING AND FREQUENCY INTERLEAVING
S118
CONSTRUCT C2 FRAME
S119
PERFORM IFFT
S120
PERFORM DA CONVERSION
S121
MODULATE
S122
END

FIG. 5

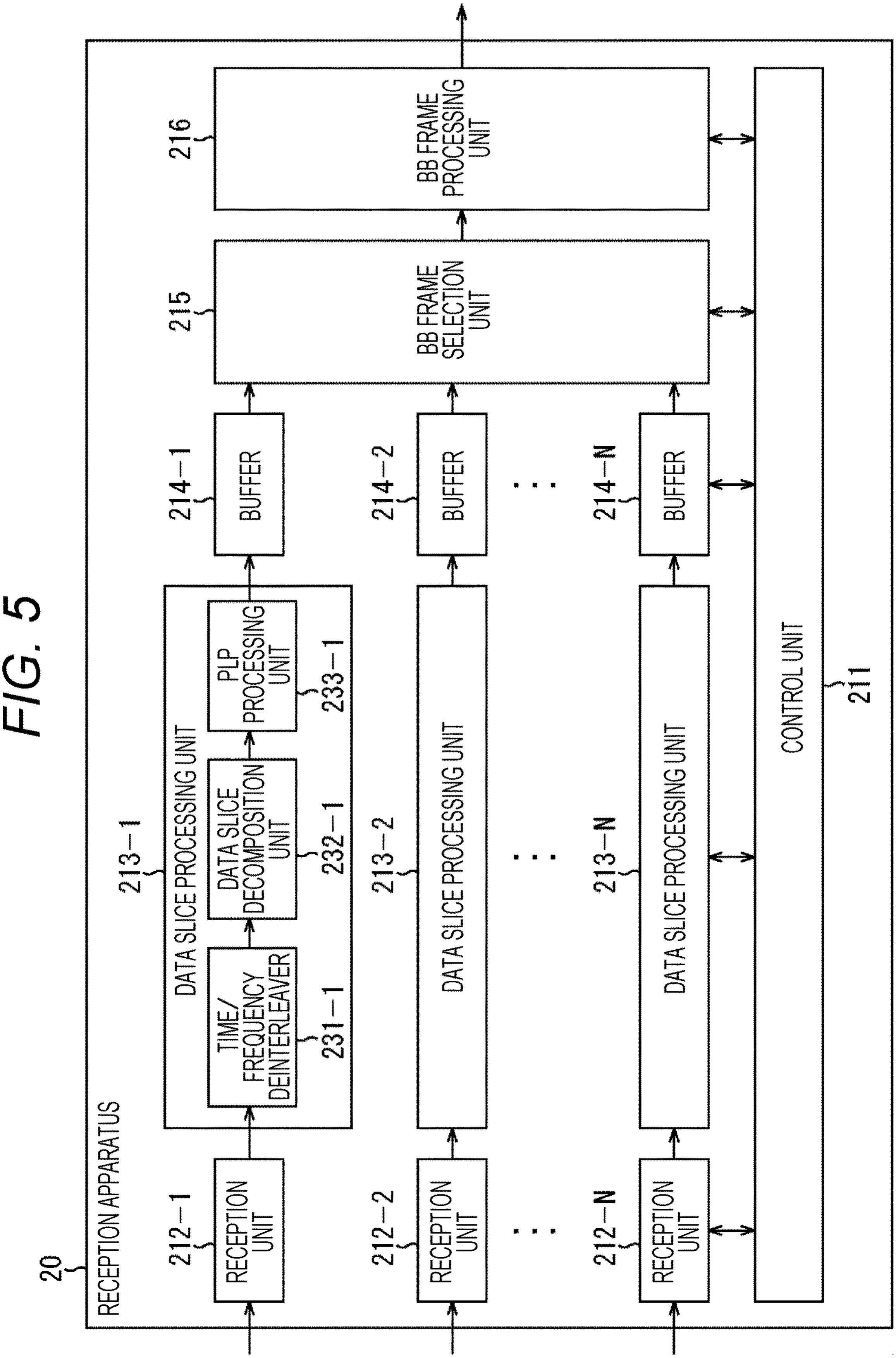
20
RECEPTION APPARATUS
212-1
RECEPTION UNIT
212-2
RECEPTION UNIT
212-N
RECEPTION UNIT
213-1
DATA SLICE PROCESSING UNIT
231-1
TIME/ FREQUENCY DEINTERLEAVER
232-1
DATA SLICE DECOMPOSITION UNIT
233-1
PLP PROCESSING UNIT
213-2
DATA SLICE PROCESSING UNIT
213-N
DATA SLICE PROCESSING UNIT
214-1
BUFFER
214-2
BUFFER
214-N
BUFFER
215
BB FRAME SELECTION UNIT
216
BB FRAME PROCESSING UNIT
211
CONTROL UNIT

FIG. 6

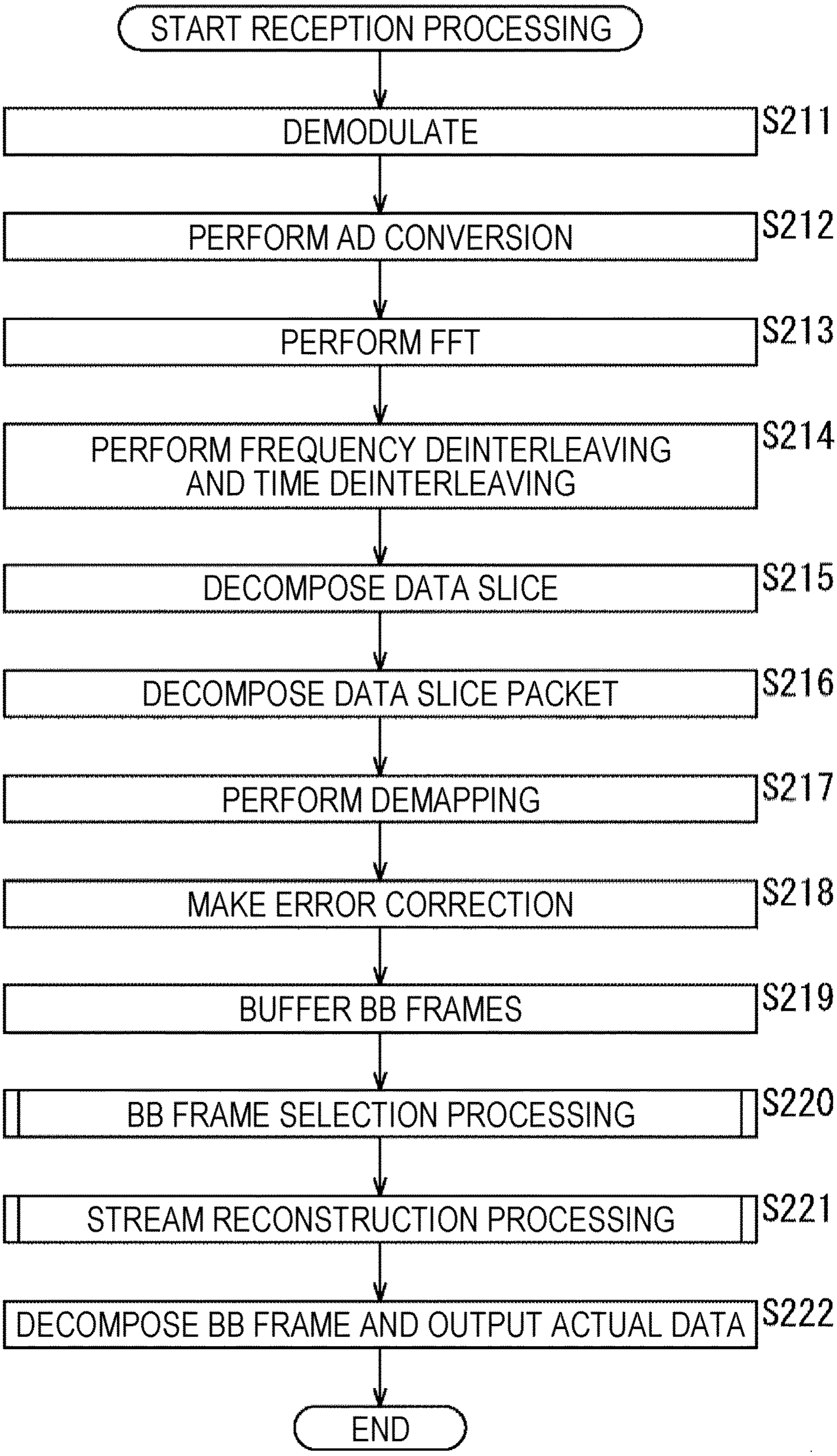
START RECEPTION PROCESSING
DEMODULATE
S211
PERFORM AD CONVERSION
S212
PERFORM FFT
S213
PERFORM FREQUENCY DEINTERLEAVING AND TIME DEINTERLEAVING
S214
DECOMPOSE DATA SLICE
S215
DECOMPOSE DATA SLICE PACKET
S216
PERFORM DEMAPPING
S217
MAKE ERROR CORRECTION
S218
BUFFER BB FRAMES
S219
BB FRAME SELECTION PROCESSING
S220
STREAM RECONSTRUCTION PROCESSING
S221
DECOMPOSE BB FRAME AND OUTPUT ACTUAL DATA
S222
END

FIG. 7

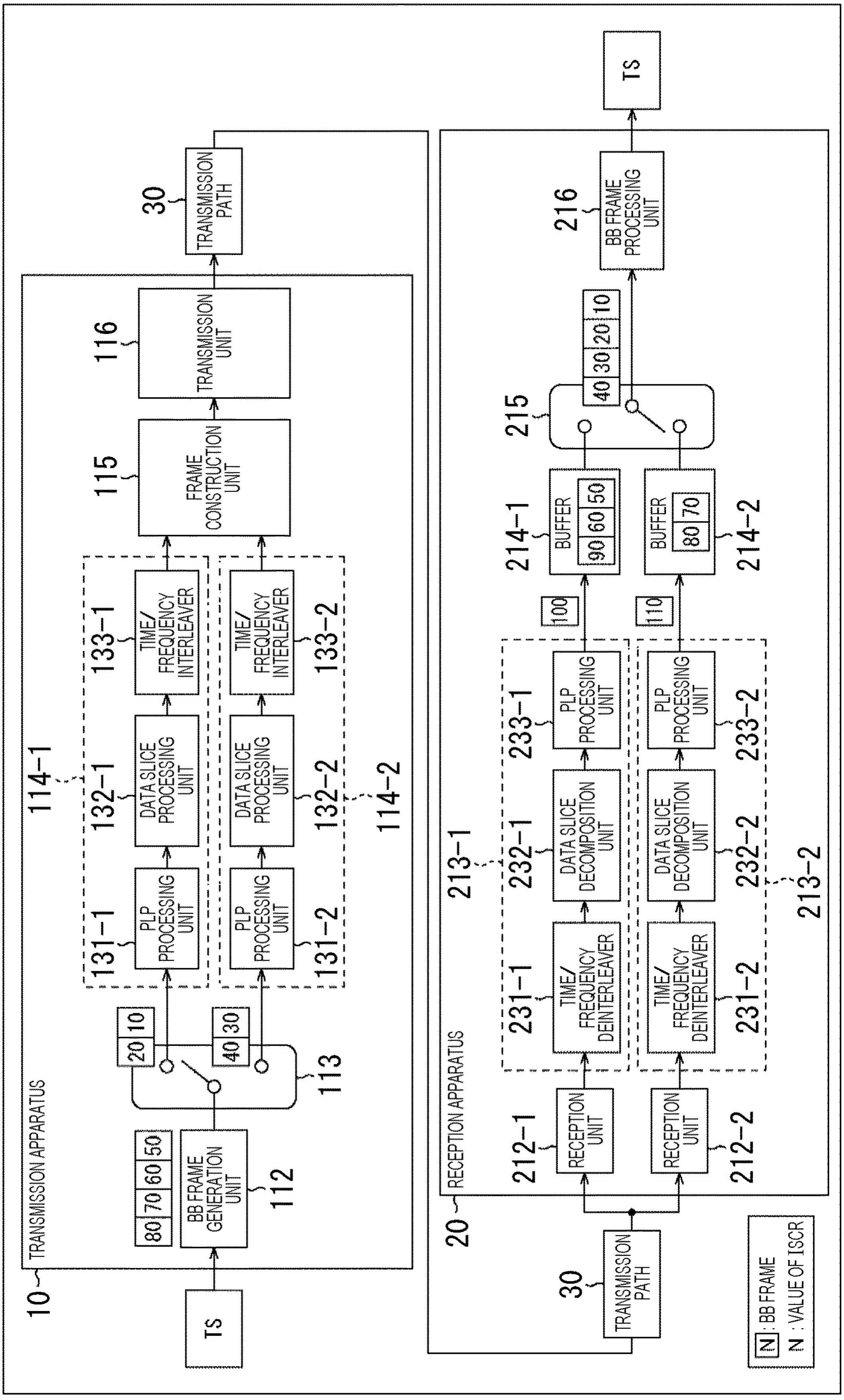
TRANSMISSION APPARATUS
10
TS
BB FRAME GENERATION UNIT
112
80
70
60
50
113
20
10
40
30
114-1
114-2
PLP PROCESSING UNIT
131-1
131-2
DATA SLICE PROCESSING UNIT
132-1
132-2
TIME/ FREQUENCY INTERLEAVER
133-1
133-2
FRAME CONSTRUCTION UNIT
115
TRANSMISSION UNIT
116
TRANSMISSION PATH
30
RECEPTION APPARATUS
20
RECEPTION UNIT
212-1
212-2
TIME/ FREQUENCY DEINTERLEAVER
231-1
231-2
DATA SLICE DECOMPOSITION UNIT
232-1
232-2
PLP PROCESSING UNIT
233-1
233-2
213-1
213-2
100
110
BUFFER
214-1
214-2
90
60
50
80
70
215
40
30
20
10
BB FRAME PROCESSING UNIT
216
N : BB FRAME
N : VALUE OF ISCR

FIG. 8

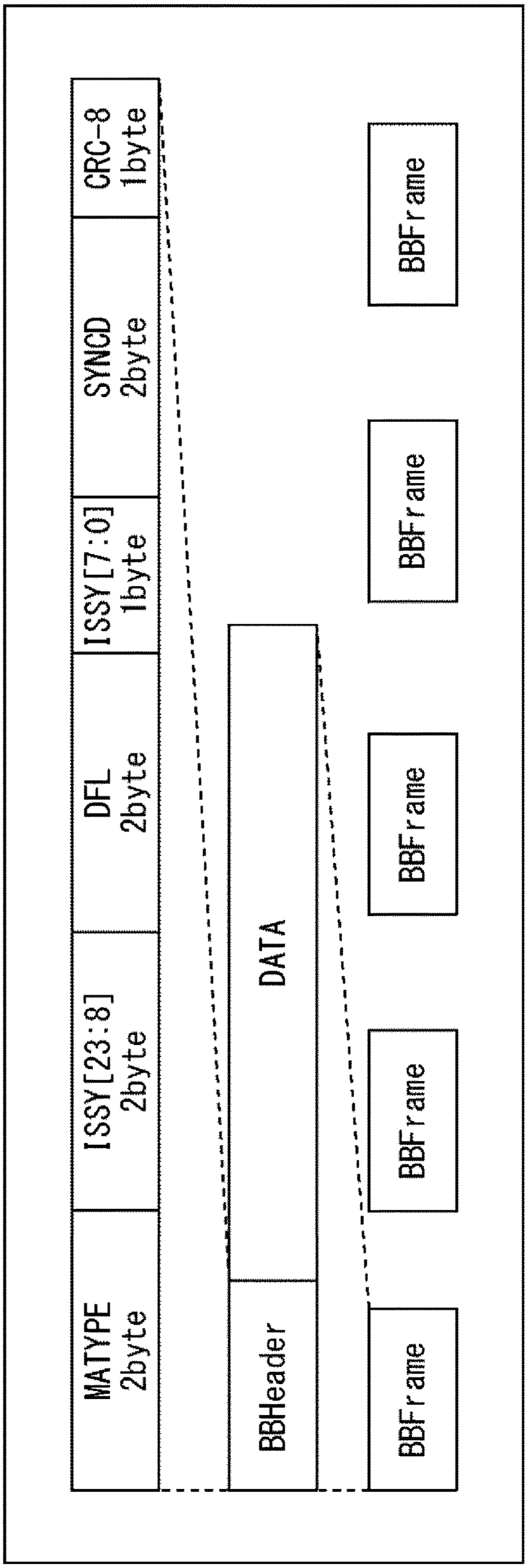
MATYPE 2byte
ISSY[23:8] 2byte
DFL 2byte
ISSY[7:0] 1byte
SYNCD 2byte
CRC-8 1byte
BBHeader
DATA
BBFrame
BBFrame
BBFrame
BBFrame
BBFrame

# *FIG. 9*

| First Byte | | | | | Second Byte | Third Byte | |
|---|---|---|---|---|---|---|---|
| Bit-7 (MSB) | Bit-6 | Bit-5 and Bit-4 | Bit-3 and Bit-2 | Bit-1 and Bit-0 | Bit-7 to Bit-0 | Bit-7 Bit-0 | |
| 0=$ISCR_{short}$ | MSB of $ISCR_{short}$ | next 6 bits of $ISCR_{short}$ | | | Next 8 bits of $ISCR_{short}$ | Not present | ISCR (TIME INFORMATION) |
| 1 | 0=$ISCR_{long}$ | 6 MSBs of $ISCR_{long}$ | | | Next 8 bits of $ISCR_{long}$ | Next 8 bits of $ISCR_{short}$ | |
| 1 | 1 | 00=BUFS | BUFS unit<br>00=bits<br>01=Kbits<br>10=Mbits<br>11=8 Kbits | 2 MSBs of BUFS | Next 8 bits of BUFS | Not present when $ISCR_{short}$ is used; else reserved for future use | BUFS (REQUIRED Buffer AMOUNT) |
| 1 | 1 | 10=BUFSTAT | BUFSTAT unit<br>00=bits<br>01=Kbits<br>10=Mbits<br>11=BUFS/1 024 | 2 MSBs of BUFSTAT | Next 8 bits of BUFSTAT | Not present when $ISCR_{short}$ is used; else reserved for future use | BUFSTAT (READ START TIME) |
| 1 | 1 | Others= reserved for future use | Reserved for future use | Reserved for future use | Reserved for future use | Not present when $ISCR_{short}$ is used; else reserved for future use | |

FIG. 10

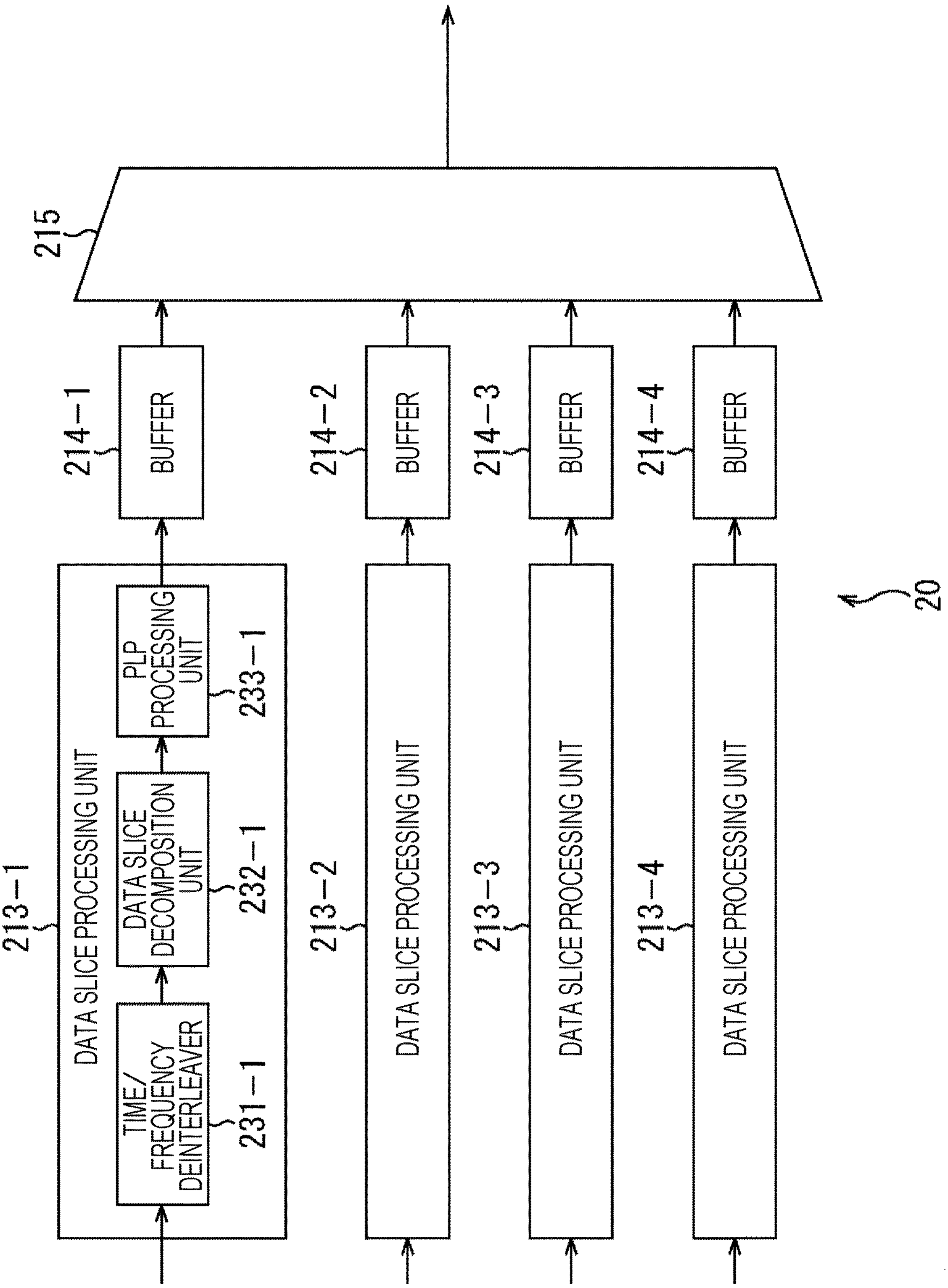
213-1
DATA SLICE PROCESSING UNIT
TIME/ FREQUENCY DEINTERLEAVER
231-1
DATA SLICE DECOMPOSITION UNIT
232-1
PLP PROCESSING UNIT
233-1
214-1
BUFFER
213-2
DATA SLICE PROCESSING UNIT
214-2
BUFFER
213-3
DATA SLICE PROCESSING UNIT
214-3
BUFFER
213-4
DATA SLICE PROCESSING UNIT
214-4
BUFFER
215
20

FIG. 11

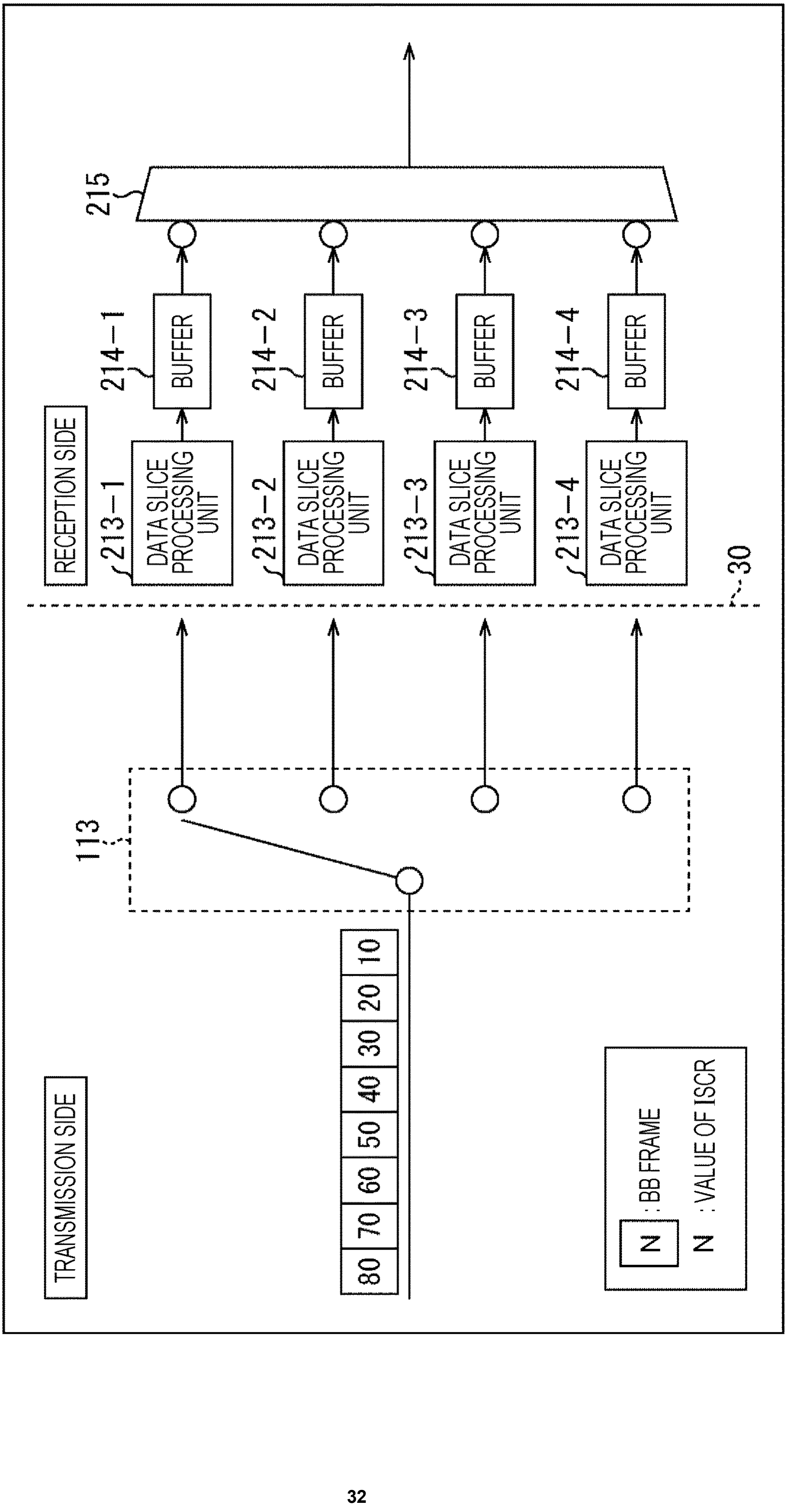
TRANSMISSION SIDE
RECEPTION SIDE
80
70
60
50
40
30
20
10
113
213−1
213−2
213−3
213−4
DATA SLICE PROCESSING UNIT
214−1
214−2
214−3
214−4
BUFFER
215
30
N : BB FRAME
N : VALUE OF ISCR

FIG. 12

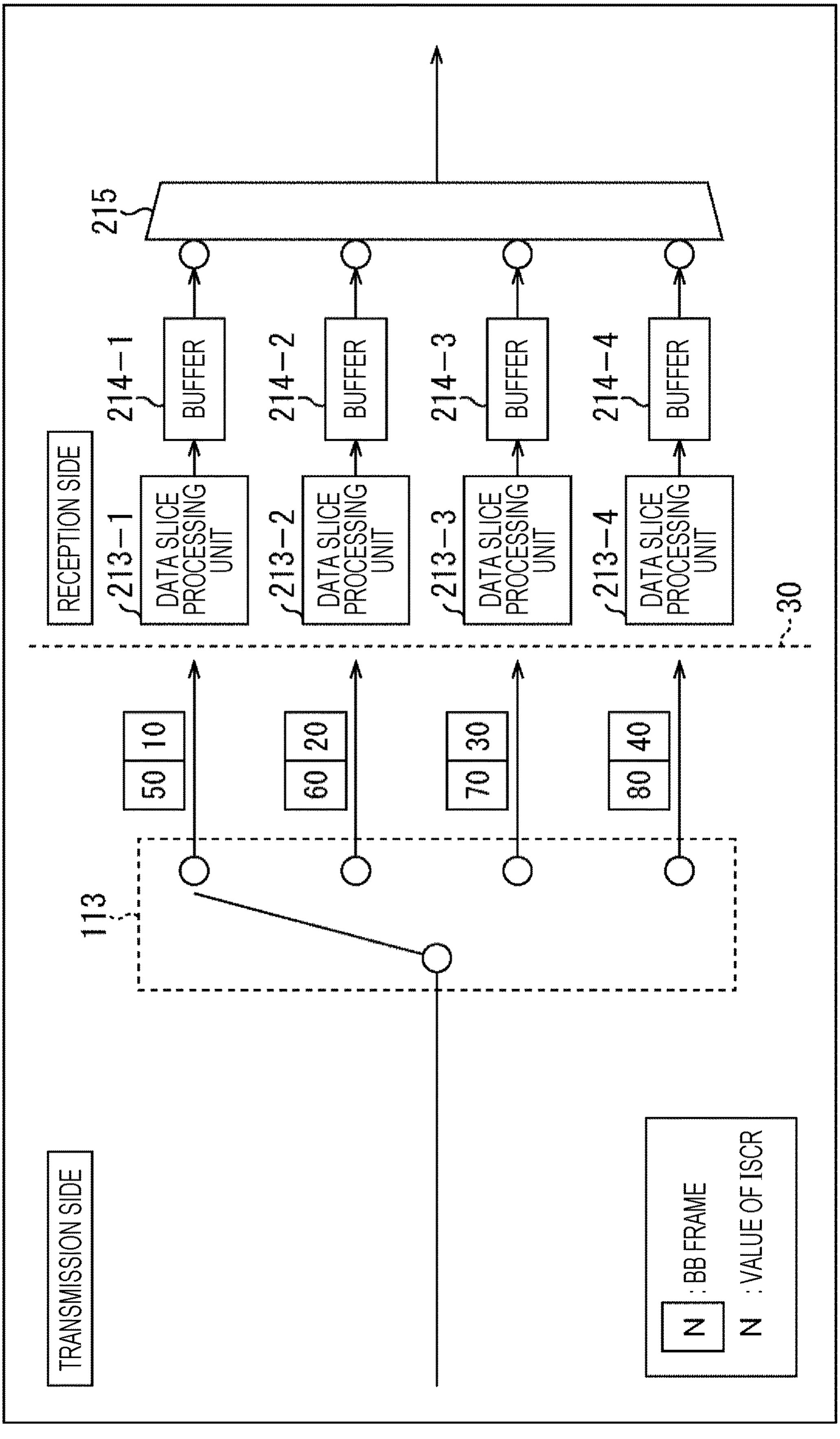
TRANSMISSION SIDE
RECEPTION SIDE
113
50
10
60
20
70
30
80
40
30
213−1
213−2
213−3
213−4
DATA SLICE PROCESSING UNIT
214−1
214−2
214−3
214−4
BUFFER
215
N : BB FRAME
N : VALUE OF ISCR

FIG. 13

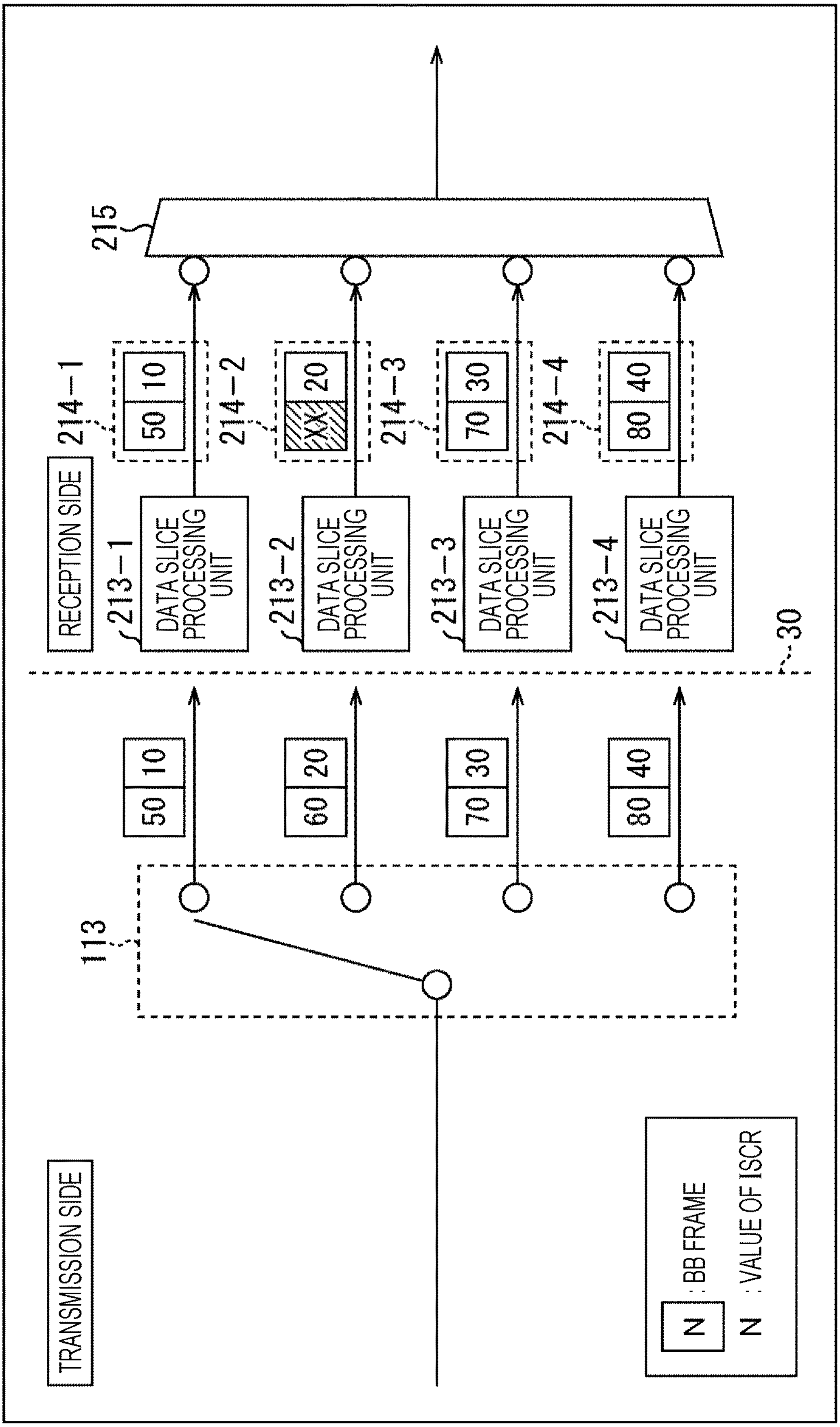
TRANSMISSION SIDE
RECEPTION SIDE
113
50 10
60 20
70 30
80 40
30
213-1
213-2
213-3
213-4
DATA SLICE PROCESSING UNIT
DATA SLICE PROCESSING UNIT
DATA SLICE PROCESSING UNIT
DATA SLICE PROCESSING UNIT
214-1
214-2
214-3
214-4
50 10
XX 20
70 30
80 40
215
N : BB FRAME
N : VALUE OF ISCR

FIG. 14

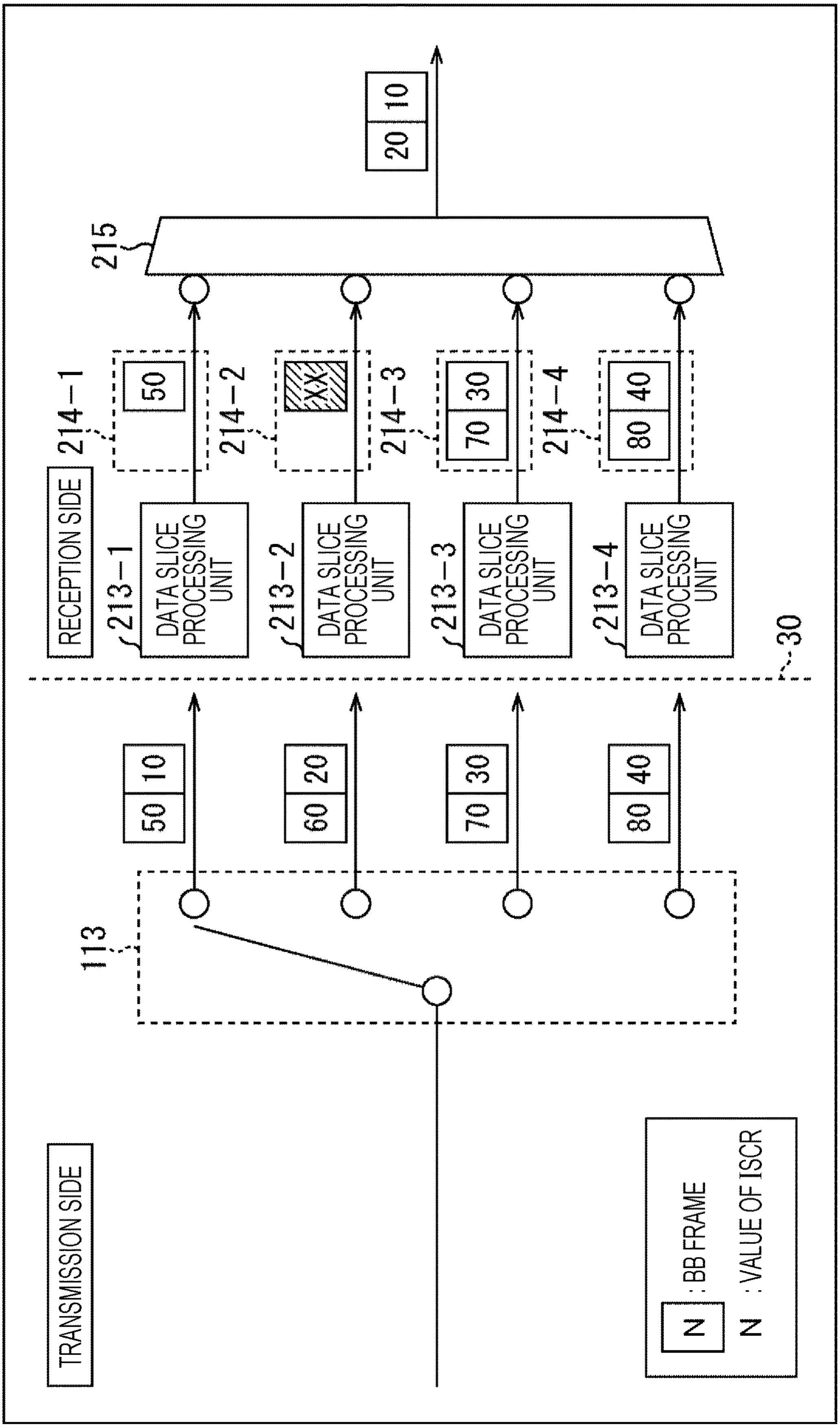
TRANSMISSION SIDE
RECEPTION SIDE
113
50 10
60 20
70 30
80 40
30
213−1
213−2
213−3
213−4
DATA SLICE PROCESSING UNIT
DATA SLICE PROCESSING UNIT
DATA SLICE PROCESSING UNIT
DATA SLICE PROCESSING UNIT
214−1
214−2
214−3
214−4
50
XX
70 30
80 40
215
20 10
N : BB FRAME
N : VALUE OF ISCR

FIG. 15

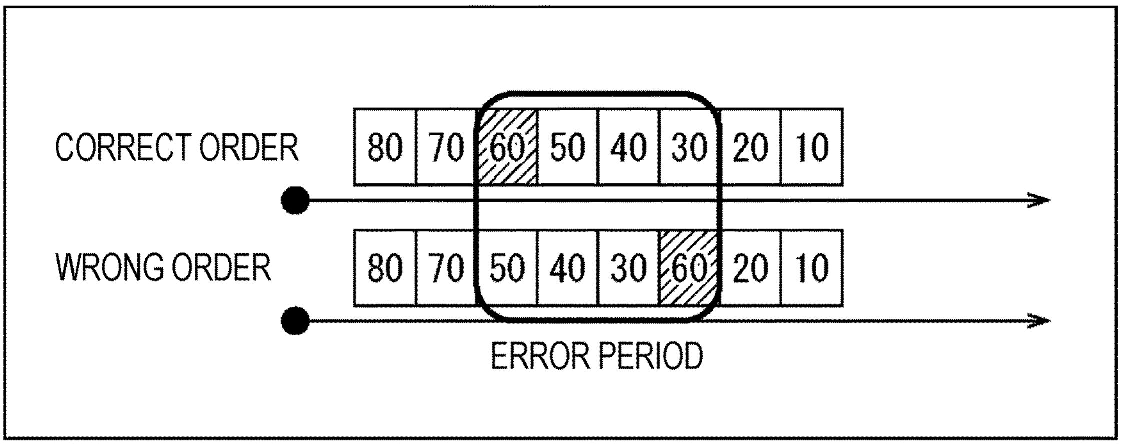
CORRECT ORDER
80
70
60
50
40
30
20
10
WRONG ORDER
80
70
50
40
30
60
20
10
ERROR PERIOD

FIG. 16

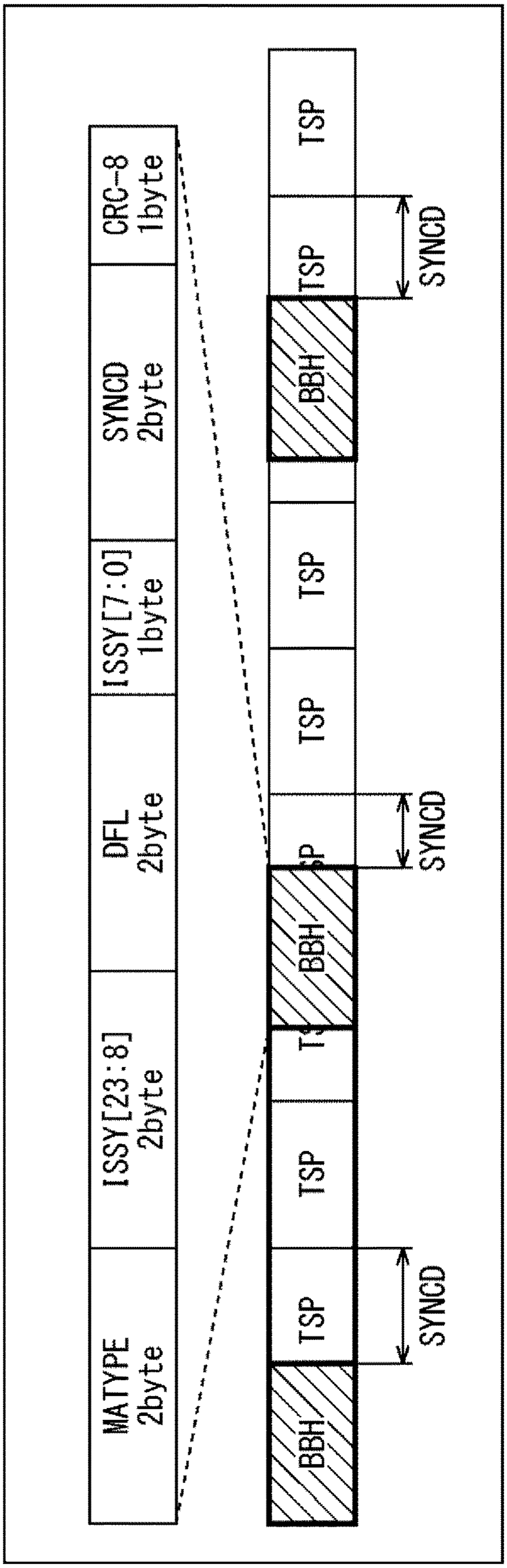
MATYPE 2byte
ISSY[23:8] 2byte
DFL 2byte
ISSY[7:0] 1byte
SYNCD 2byte
CRC-8 1byte
BBH
TSP
TSP
SYNCD
BBH
TSP
TSP
SYNCD
BBH
TSP
TSP
SYNCD

FIG. 17

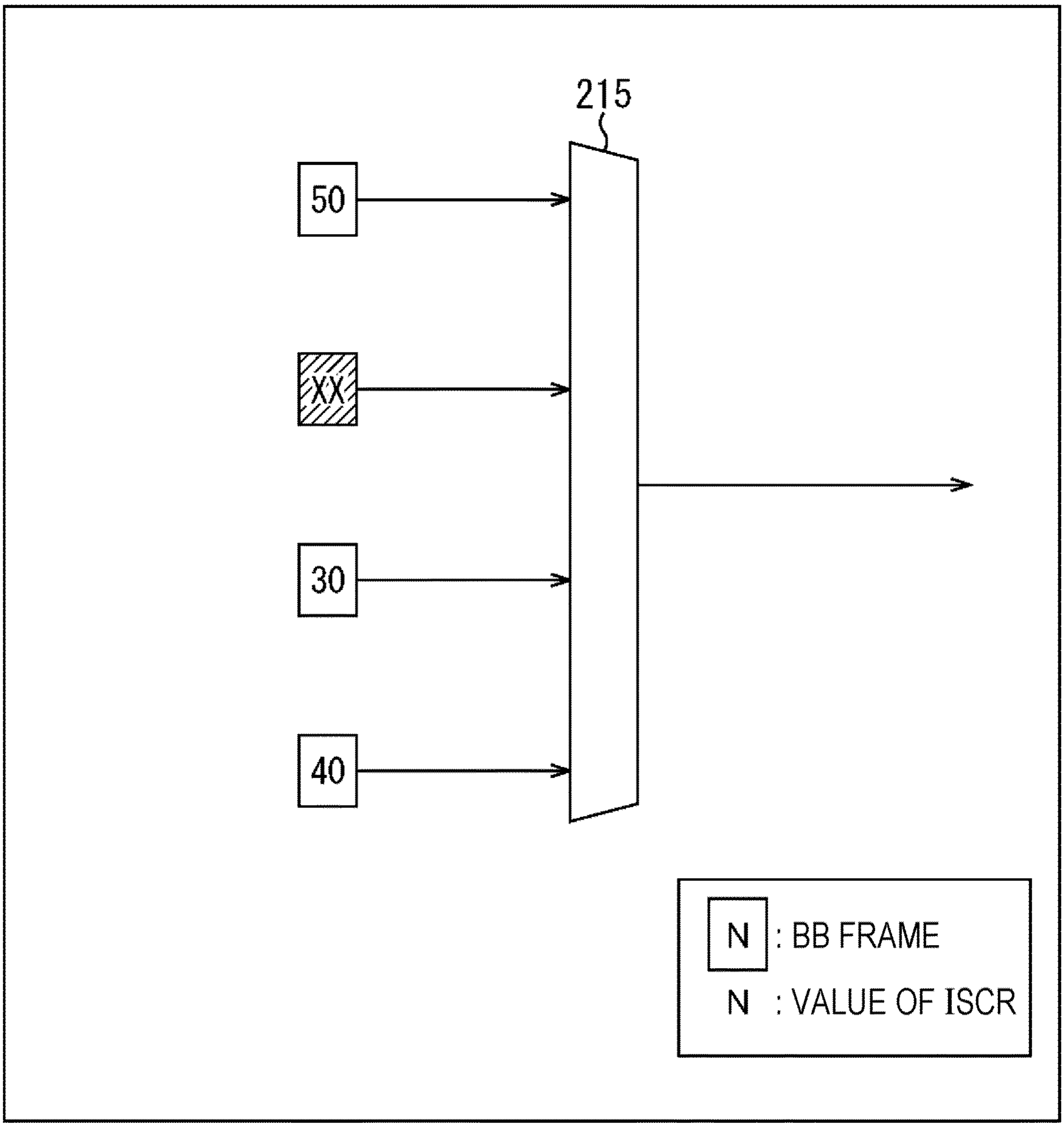

FIG. 18

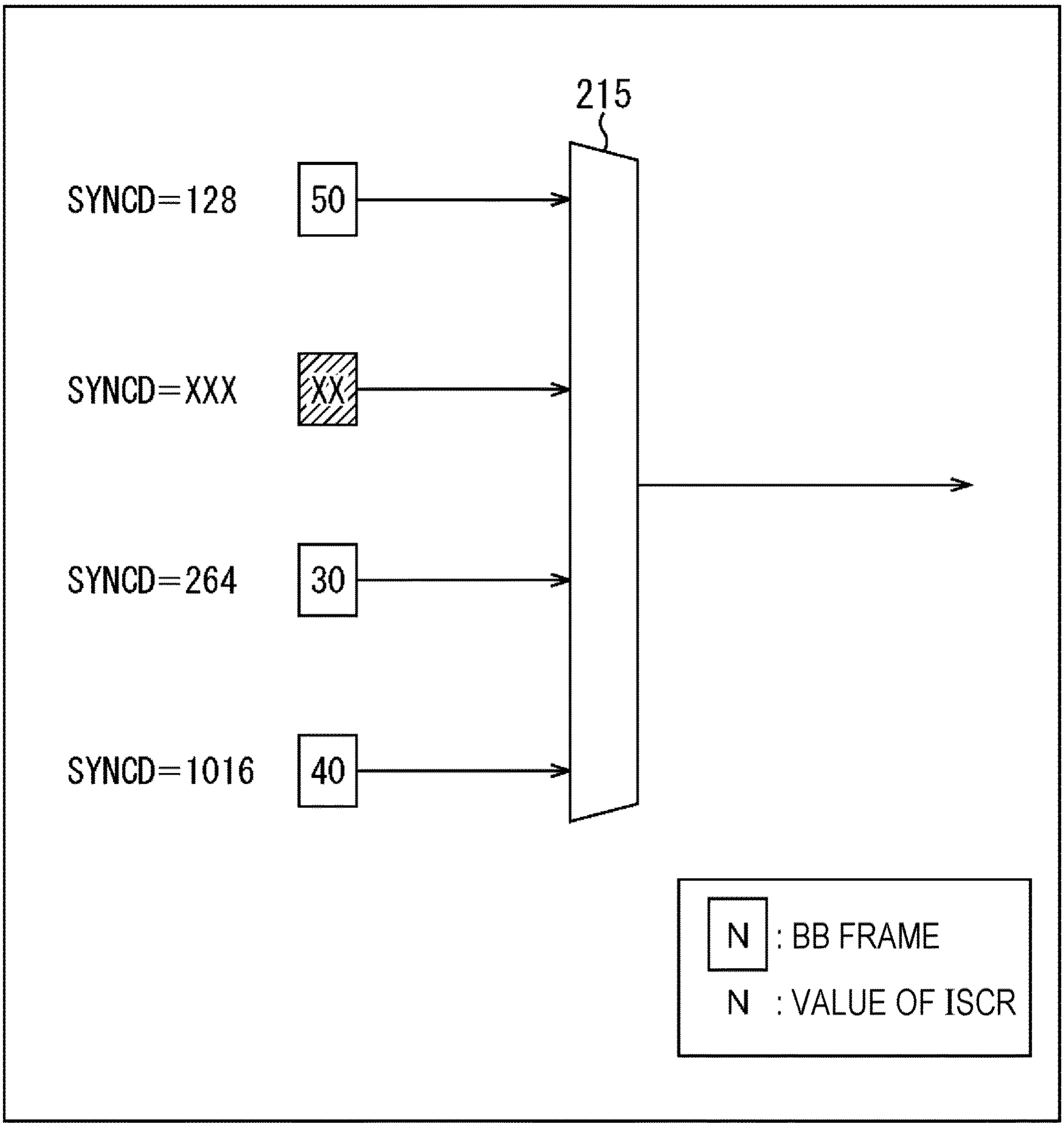
215
SYNCD=128
50
SYNCD=XXX
XX
SYNCD=264
30
SYNCD=1016
40
N : BB FRAME
N : VALUE OF ISCR

FIG. 19

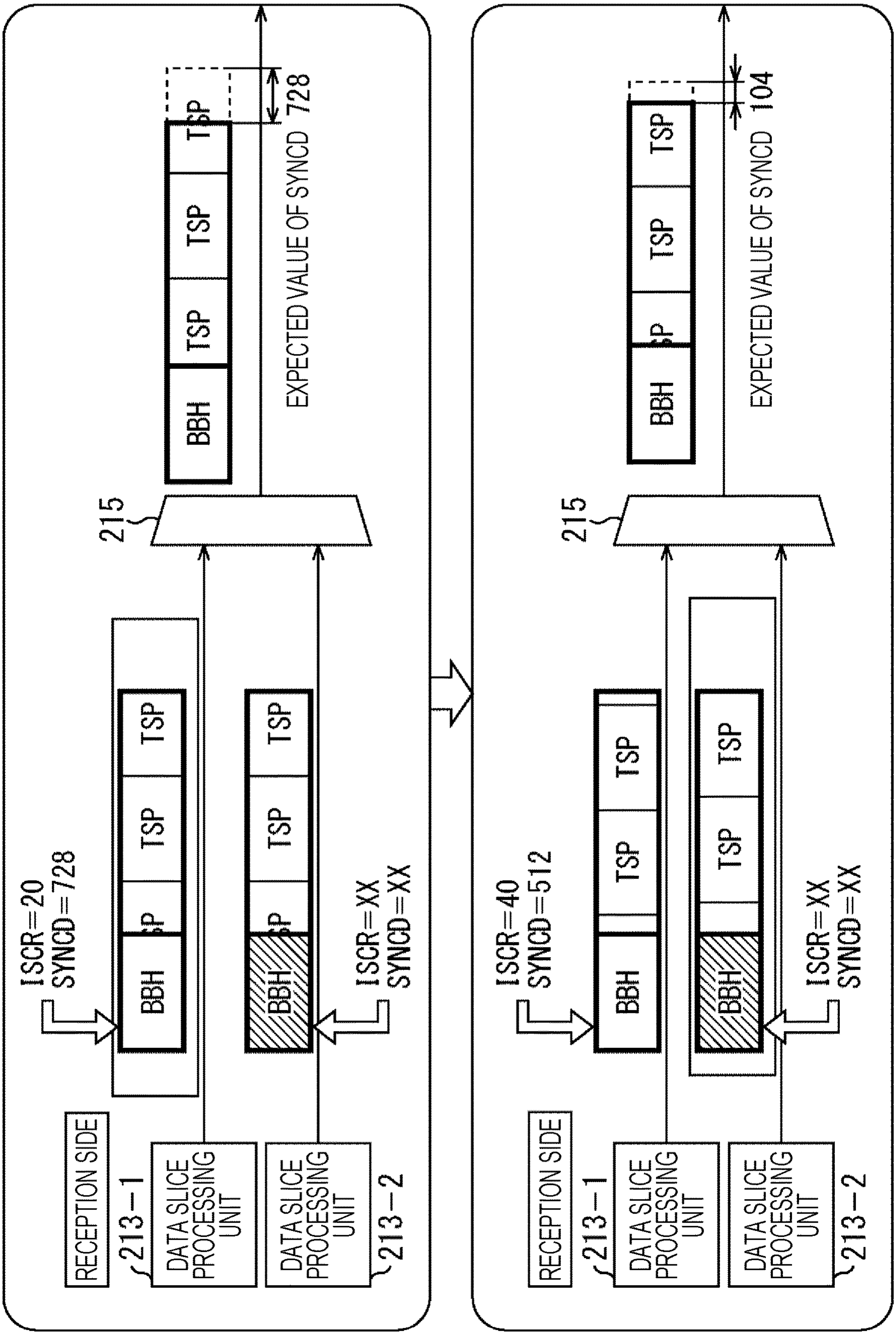
RECEPTION SIDE
213-1
DATA SLICE PROCESSING UNIT
213-2
DATA SLICE PROCESSING UNIT
ISCR=20
SYNCD=728
ISCR=XX
SYNCD=XX
BBH
TSP
215
EXPECTED VALUE OF SYNCD
728
ISCR=40
SYNCD=512
104

FIG. 20

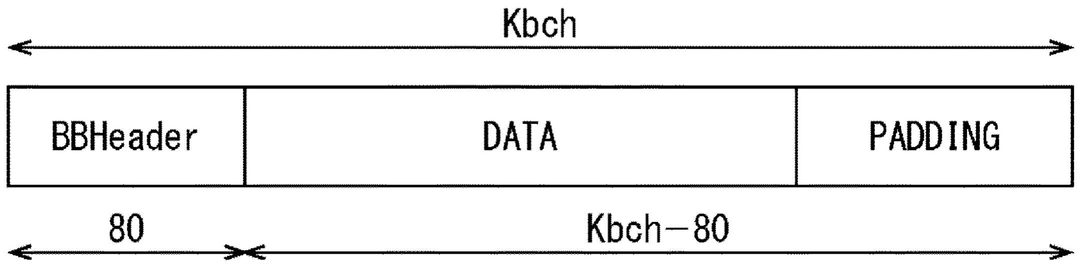


FIG. 21

| CODING RATE/ CODE LENGTH | 64k | 16k |
|---|---|---|
| 2/3 | 43040 | 10632 |
| 3/4 | 48408 | 11712 |
| 4/5 | 51648 | 12432 |
| 5/6 | 53840 | 13152 |
| 9/10(8/9) | 58192 | 14232 |

FIG. 22

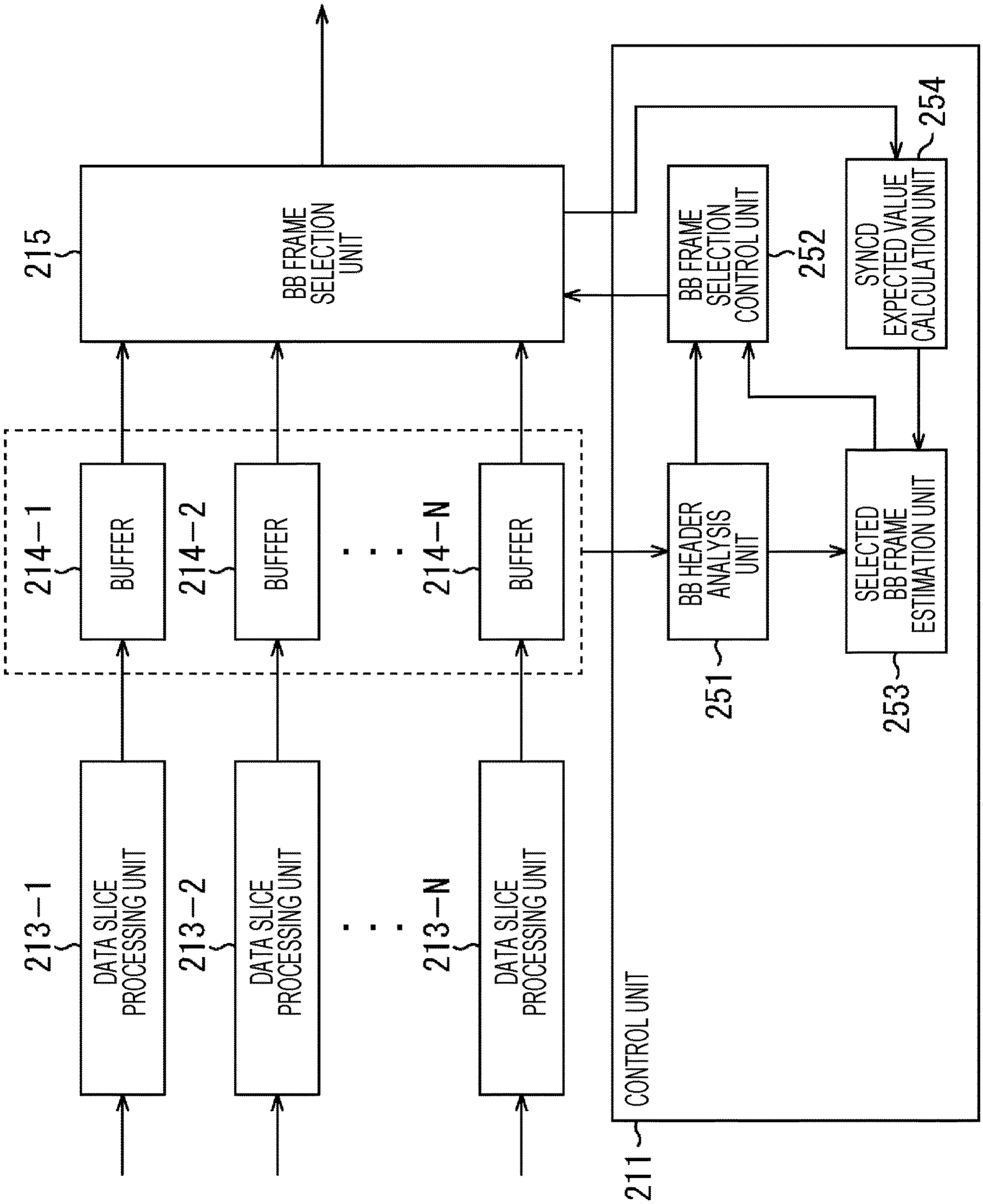

213-1
213-2
213-N
DATA SLICE PROCESSING UNIT
DATA SLICE PROCESSING UNIT
DATA SLICE PROCESSING UNIT
214-1
214-2
214-N
BUFFER
BUFFER
BUFFER
215
BB FRAME SELECTION UNIT
211
CONTROL UNIT
251
BB HEADER ANALYSIS UNIT
252
BB FRAME SELECTION CONTROL UNIT
253
SELECTED BB FRAME ESTIMATION UNIT
254
SYNCD EXPECTED VALUE CALCULATION UNIT

FIG. 23

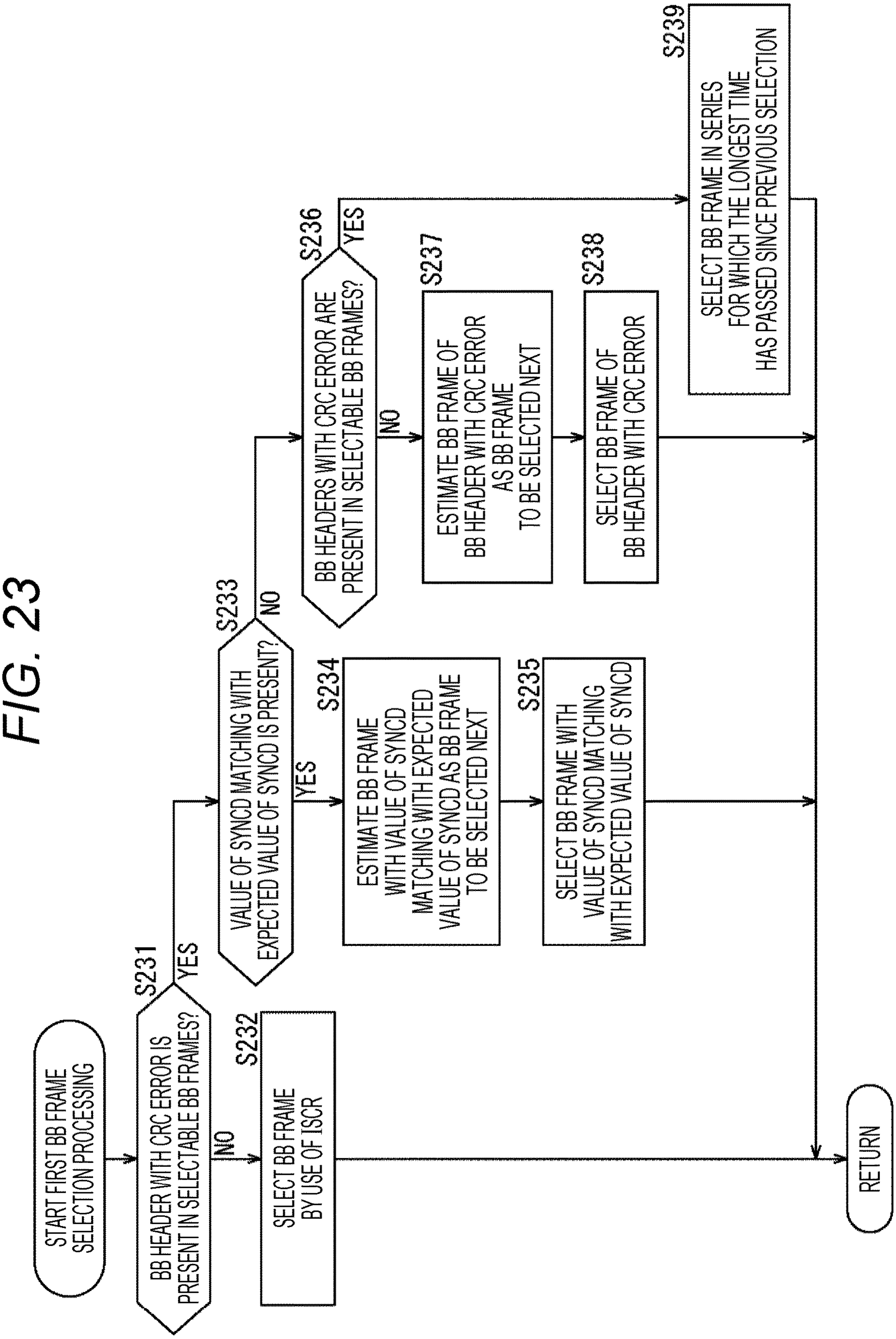
START FIRST BB FRAME SELECTION PROCESSING
S231
BB HEADER WITH CRC ERROR IS PRESENT IN SELECTABLE BB FRAMES?
YES
NO
S232
SELECT BB FRAME BY USE OF ISCR
S233
VALUE OF SYNCD MATCHING WITH EXPECTED VALUE OF SYNCD IS PRESENT?
YES
NO
S234
ESTIMATE BB FRAME WITH VALUE OF SYNCD MATCHING WITH EXPECTED VALUE OF SYNCD AS BB FRAME TO BE SELECTED NEXT
S235
SELECT BB FRAME WITH VALUE OF SYNCD MATCHING WITH EXPECTED VALUE OF SYNCD
S236
BB HEADERS WITH CRC ERROR ARE PRESENT IN SELECTABLE BB FRAMES?
YES
NO
S237
ESTIMATE BB FRAME OF BB HEADER WITH CRC ERROR AS BB FRAME TO BE SELECTED NEXT
S238
SELECT BB FRAME OF BB HEADER WITH CRC ERROR
S239
SELECT BB FRAME IN SERIES FOR WHICH THE LONGEST TIME HAS PASSED SINCE PREVIOUS SELECTION
RETURN

# FIG. 24

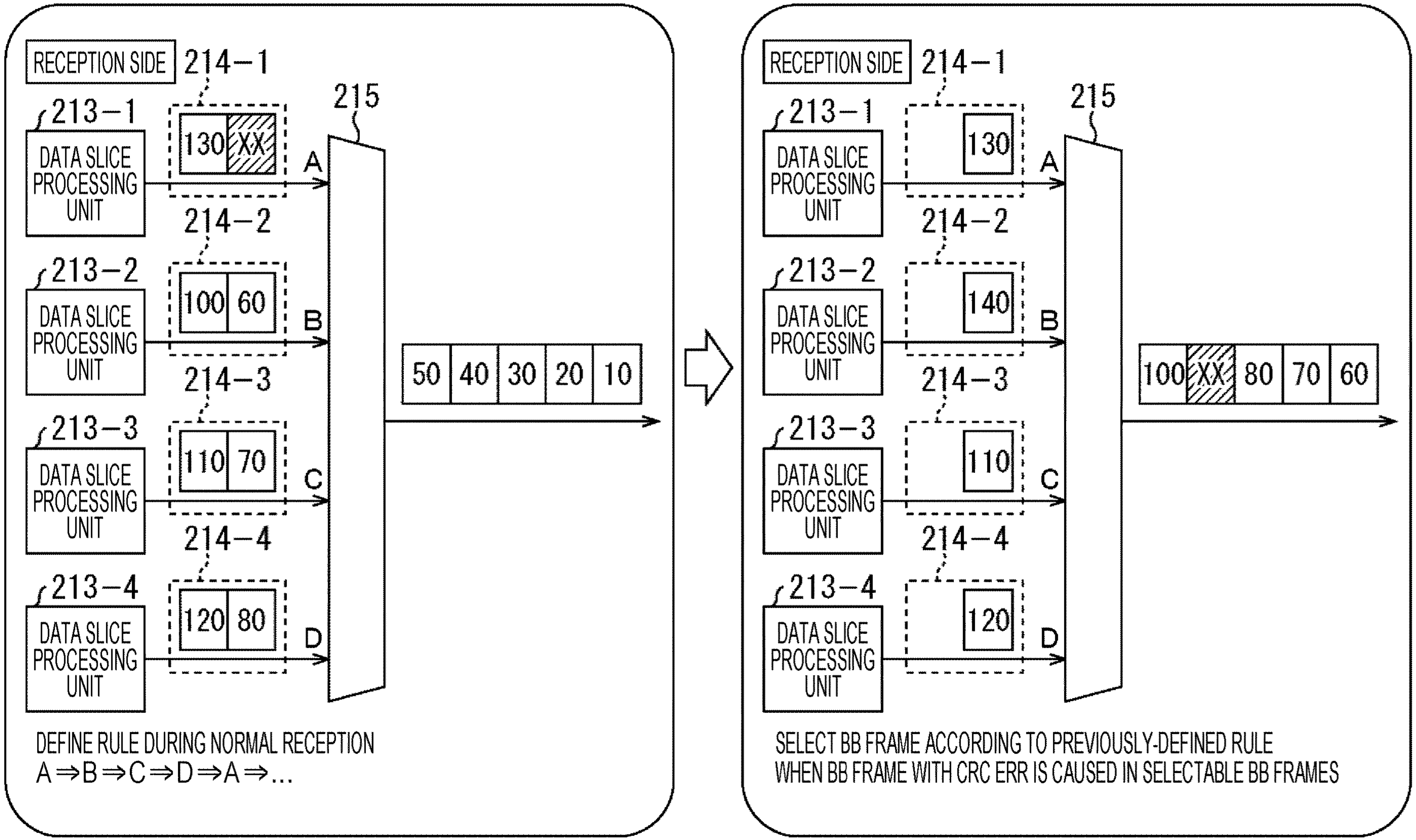
RECEPTION SIDE
213−1
DATA SLICE PROCESSING UNIT
213−2
DATA SLICE PROCESSING UNIT
213−3
DATA SLICE PROCESSING UNIT
213−4
DATA SLICE PROCESSING UNIT
214−1
130
XX
214−2
100
60
214−3
110
70
214−4
120
80
A
B
C
D
215
50
40
30
20
10
DEFINE RULE DURING NORMAL RECEPTION
A⇒B⇒C⇒D⇒A⇒...
RECEPTION SIDE
213−1
DATA SLICE PROCESSING UNIT
213−2
DATA SLICE PROCESSING UNIT
213−3
DATA SLICE PROCESSING UNIT
213−4
DATA SLICE PROCESSING UNIT
214−1
130
214−2
140
214−3
110
214−4
120
A
B
C
D
215
100
XX
80
70
60
SELECT BB FRAME ACCORDING TO PREVIOUSLY-DEFINED RULE
WHEN BB FRAME WITH CRC ERR IS CAUSED IN SELECTABLE BB FRAMES

FIG. 25

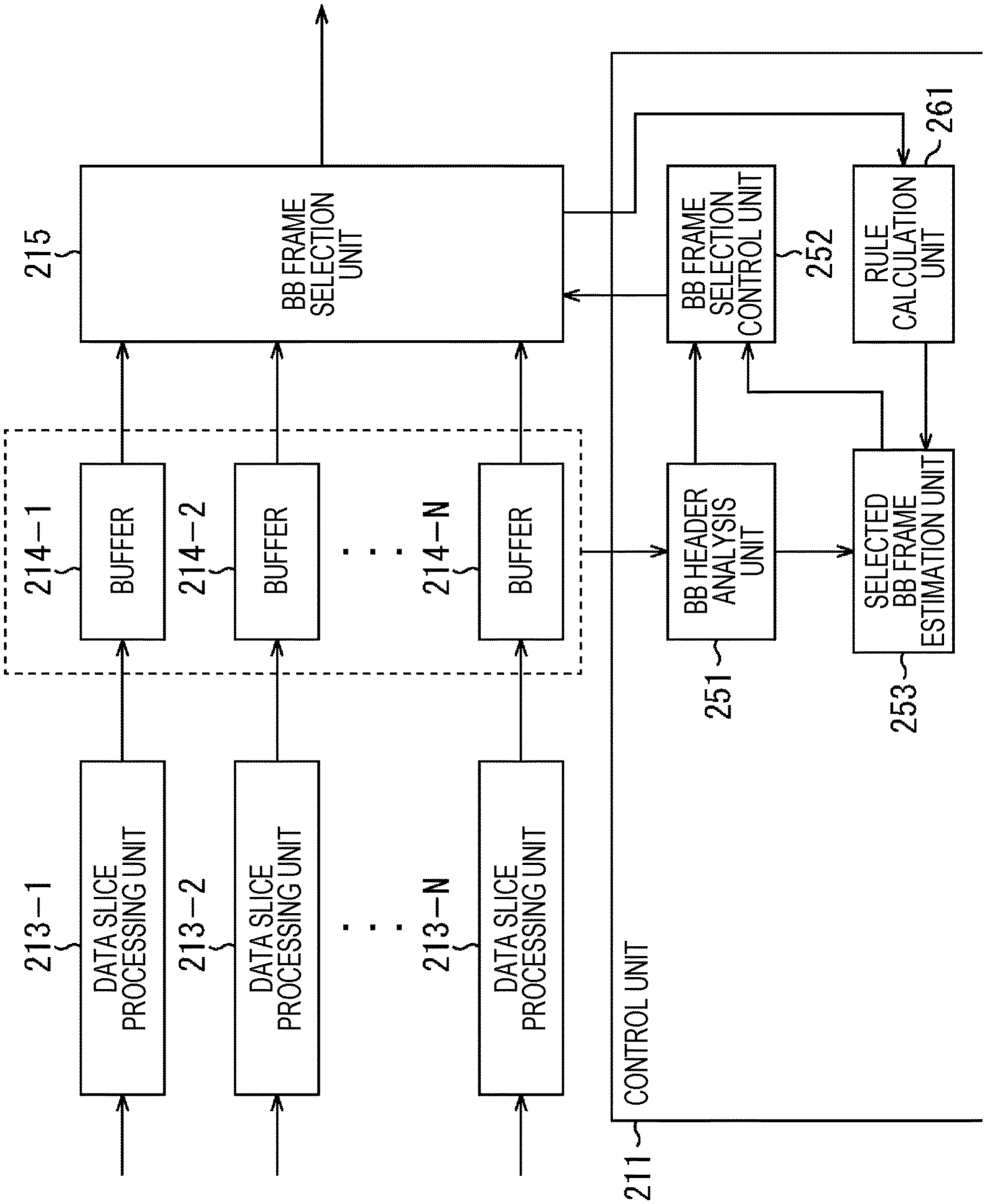
213-1
DATA SLICE PROCESSING UNIT
213-2
DATA SLICE PROCESSING UNIT
213-N
DATA SLICE PROCESSING UNIT
214-1
BUFFER
214-2
BUFFER
214-N
BUFFER
215
BB FRAME SELECTION UNIT
211
CONTROL UNIT
251
BB HEADER ANALYSIS UNIT
252
BB FRAME SELECTION CONTROL UNIT
253
SELECTED BB FRAME ESTIMATION UNIT
261
RULE CALCULATION UNIT

FIG. 26

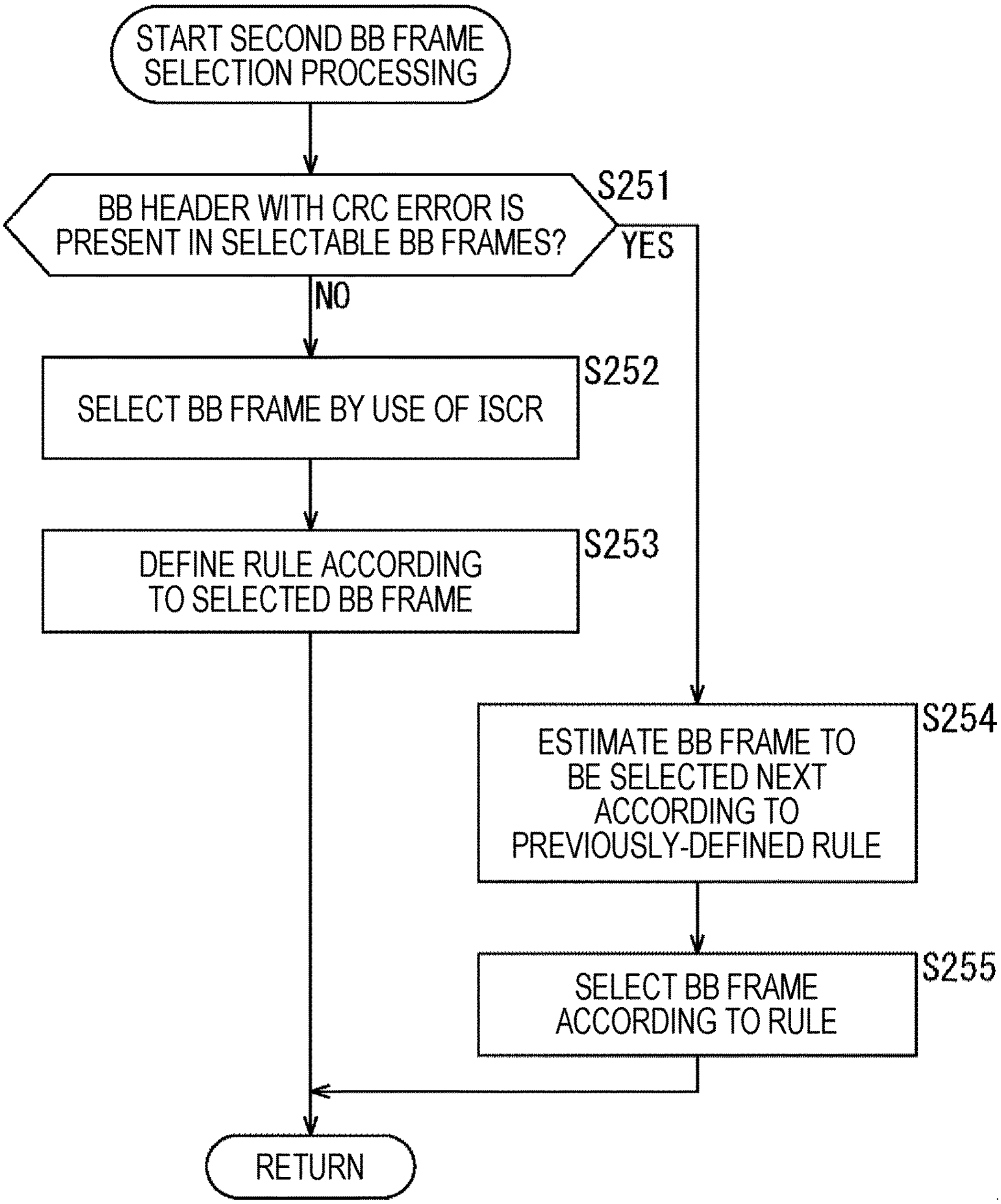
START SECOND BB FRAME SELECTION PROCESSING
BB HEADER WITH CRC ERROR IS PRESENT IN SELECTABLE BB FRAMES?
S251
YES
NO
SELECT BB FRAME BY USE OF ISCR
S252
DEFINE RULE ACCORDING TO SELECTED BB FRAME
S253
ESTIMATE BB FRAME TO BE SELECTED NEXT ACCORDING TO PREVIOUSLY-DEFINED RULE
S254
SELECT BB FRAME ACCORDING TO RULE
S255
RETURN

FIG. 27

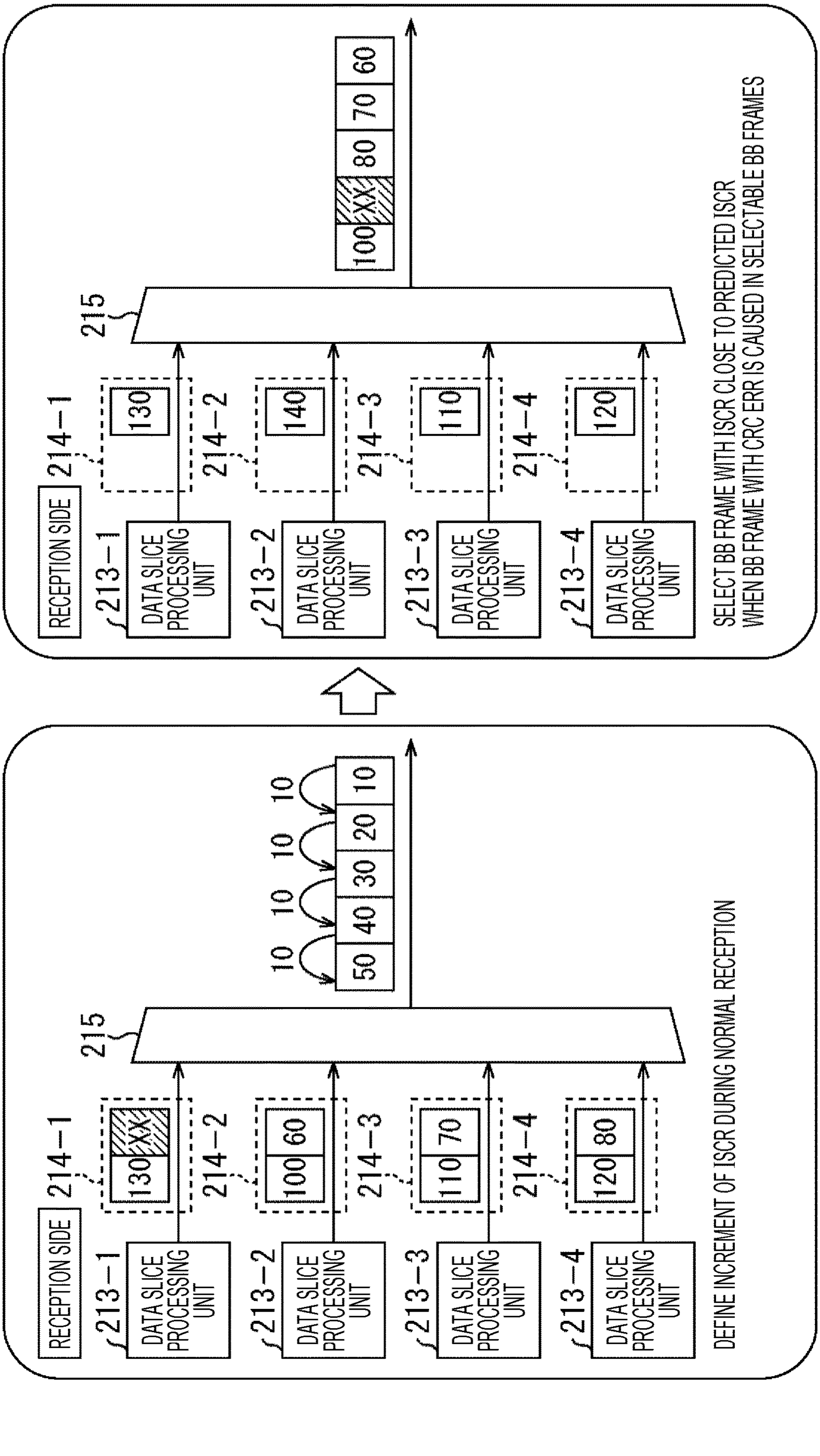
RECEPTION SIDE
213−1
DATA SLICE PROCESSING UNIT
213−2
DATA SLICE PROCESSING UNIT
213−3
DATA SLICE PROCESSING UNIT
213−4
DATA SLICE PROCESSING UNIT
214−1
130
XX
214−2
100
60
214−3
110
70
214−4
120
80
215
50
40
30
20
10
10
10
10
10
DEFINE INCREMENT OF ISCR DURING NORMAL RECEPTION
RECEPTION SIDE
213−1
DATA SLICE PROCESSING UNIT
213−2
DATA SLICE PROCESSING UNIT
213−3
DATA SLICE PROCESSING UNIT
213−4
DATA SLICE PROCESSING UNIT
214−1
130
214−2
140
214−3
110
214−4
120
215
100
XX
80
70
60
SELECT BB FRAME WITH ISCR CLOSE TO PREDICTED ISCR
WHEN BB FRAME WITH CRC ERR IS CAUSED IN SELECTABLE BB FRAMES

FIG. 28

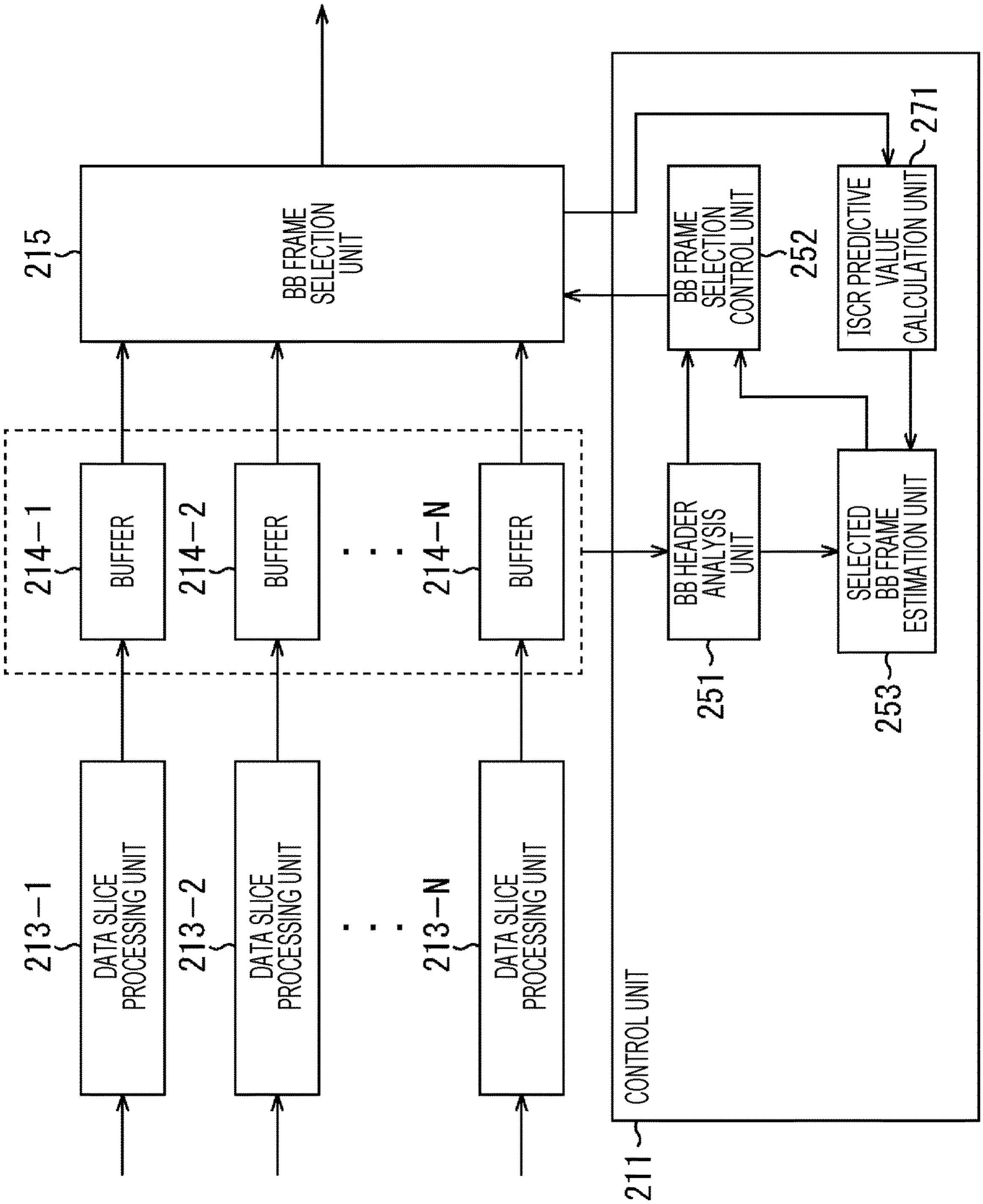
213-1
DATA SLICE PROCESSING UNIT
213-2
DATA SLICE PROCESSING UNIT
213-N
DATA SLICE PROCESSING UNIT
214-1
BUFFER
214-2
BUFFER
214-N
BUFFER
215
BB FRAME SELECTION UNIT
211
CONTROL UNIT
251
BB HEADER ANALYSIS UNIT
252
BB FRAME SELECTION CONTROL UNIT
253
SELECTED BB FRAME ESTIMATION UNIT
271
ISCR PREDICTIVE VALUE CALCULATION UNIT

FIG. 29

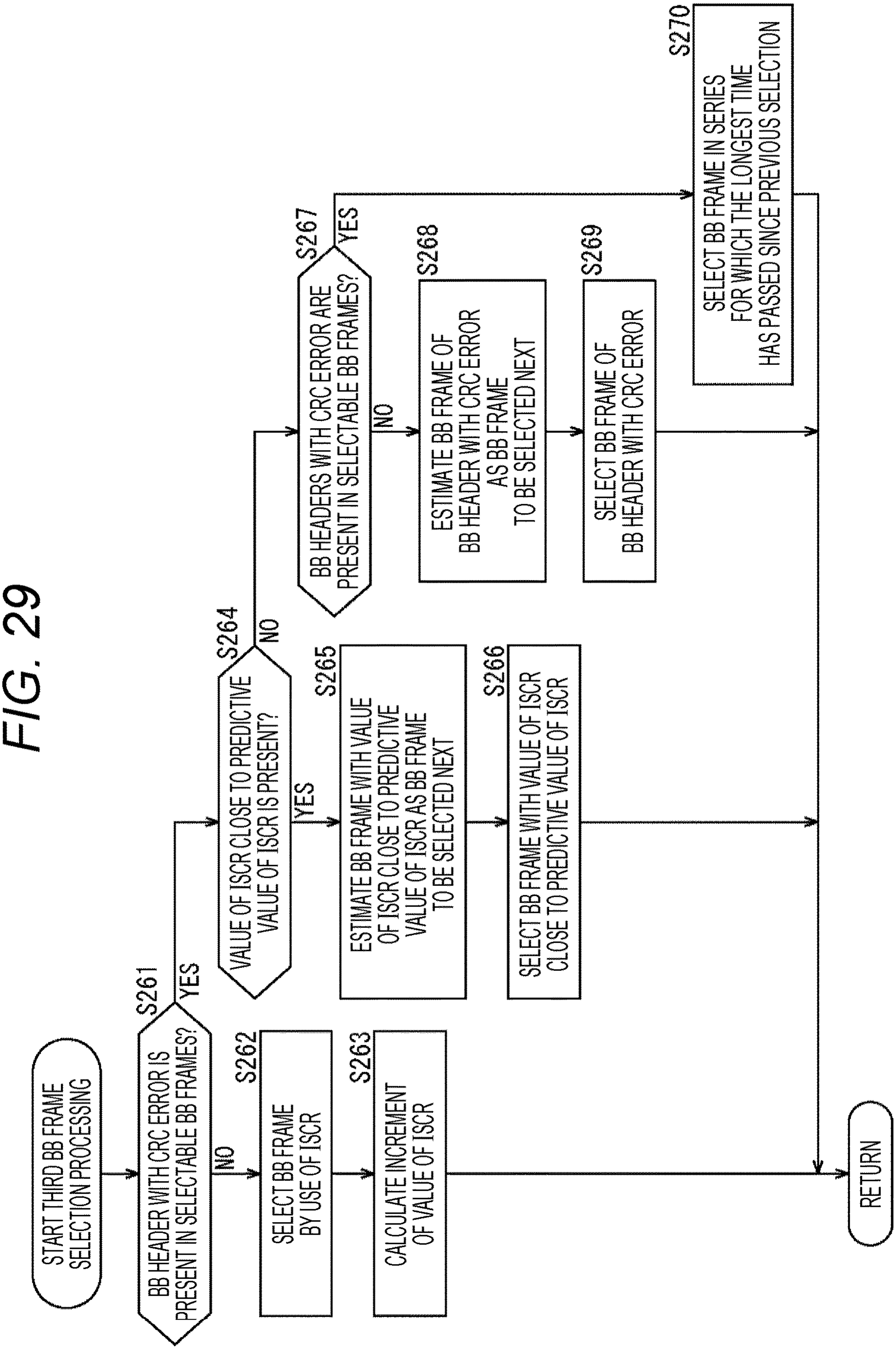
START THIRD BB FRAME SELECTION PROCESSING
S261
BB HEADER WITH CRC ERROR IS PRESENT IN SELECTABLE BB FRAMES?
YES
NO
S262
SELECT BB FRAME BY USE OF ISCR
S263
CALCULATE INCREMENT OF VALUE OF ISCR
S264
VALUE OF ISCR CLOSE TO PREDICTIVE VALUE OF ISCR IS PRESENT?
YES
NO
S265
ESTIMATE BB FRAME WITH VALUE OF ISCR CLOSE TO PREDICTIVE VALUE OF ISCR AS BB FRAME TO BE SELECTED NEXT
S266
SELECT BB FRAME WITH VALUE OF ISCR CLOSE TO PREDICTIVE VALUE OF ISCR
S267
BB HEADERS WITH CRC ERROR ARE PRESENT IN SELECTABLE BB FRAMES?
YES
NO
S268
ESTIMATE BB FRAME OF BB HEADER WITH CRC ERROR AS BB FRAME TO BE SELECTED NEXT
S269
SELECT BB FRAME OF BB HEADER WITH CRC ERROR
S270
SELECT BB FRAME IN SERIES FOR WHICH THE LONGEST TIME HAS PASSED SINCE PREVIOUS SELECTION
RETURN

FIG. 30

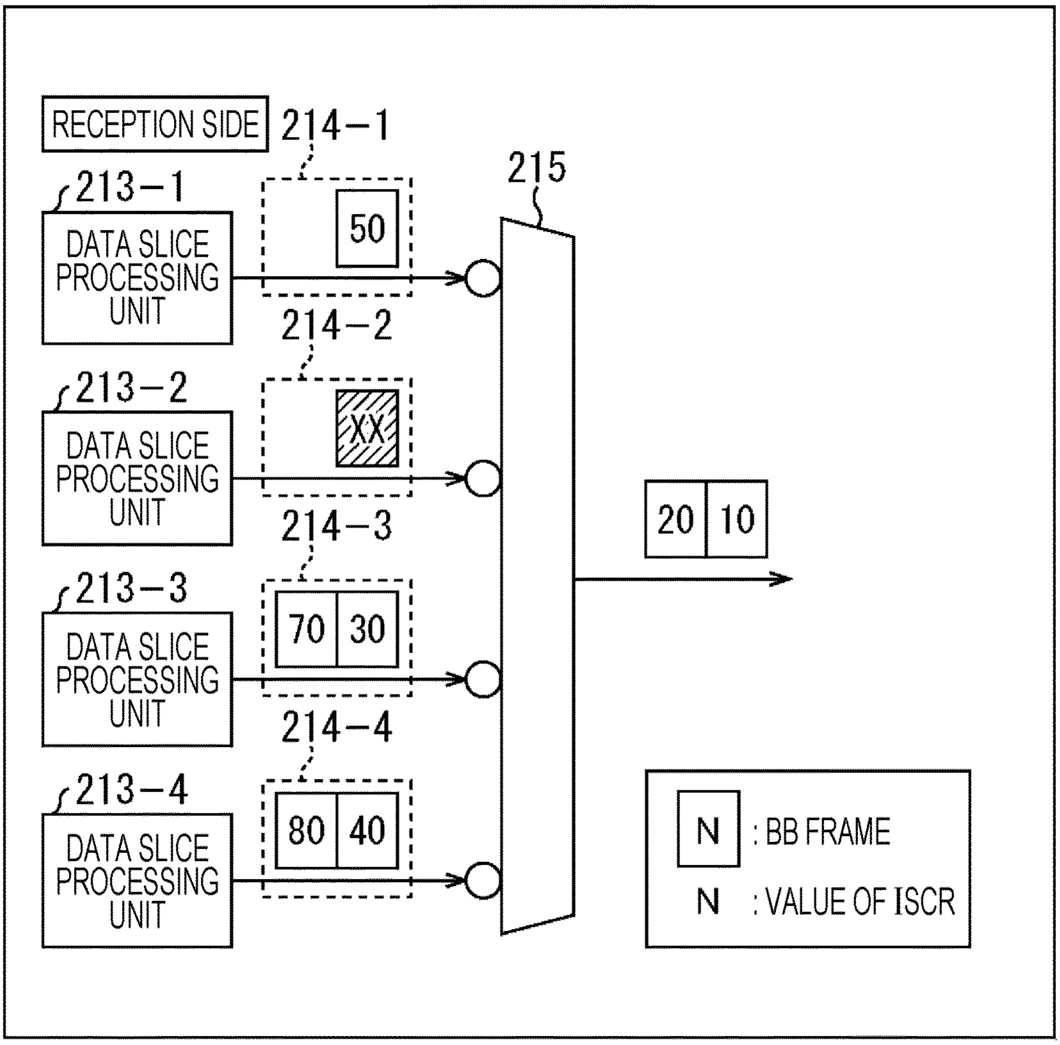
RECEPTION SIDE
214−1
215
213−1
DATA SLICE PROCESSING UNIT
50
214−2
213−2
DATA SLICE PROCESSING UNIT
XX
20
10
214−3
213−3
DATA SLICE PROCESSING UNIT
70
30
214−4
213−4
DATA SLICE PROCESSING UNIT
80
40
N : BB FRAME
N : VALUE OF ISCR

*FIG. 31*

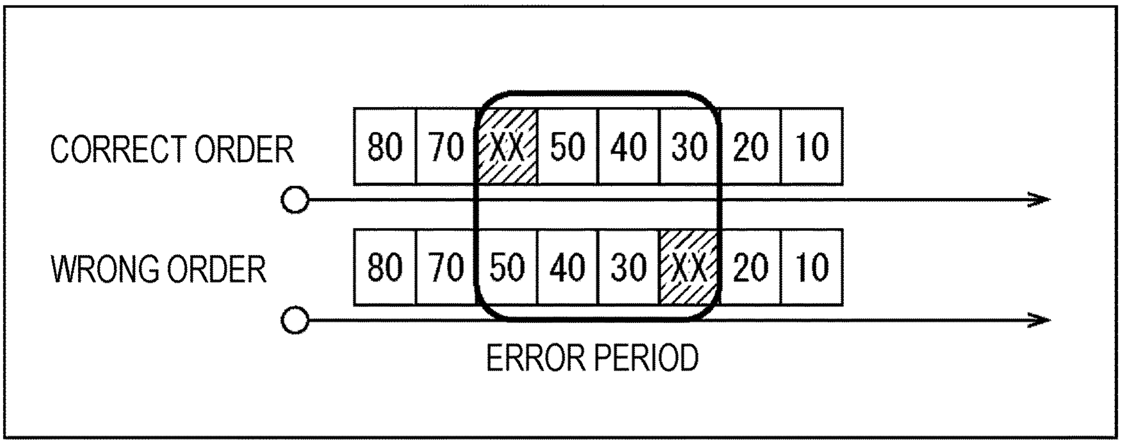
CORRECT ORDER
80
70
XX
50
40
30
20
10
WRONG ORDER
80
70
50
40
30
XX
20
10
ERROR PERIOD

FIG. 32

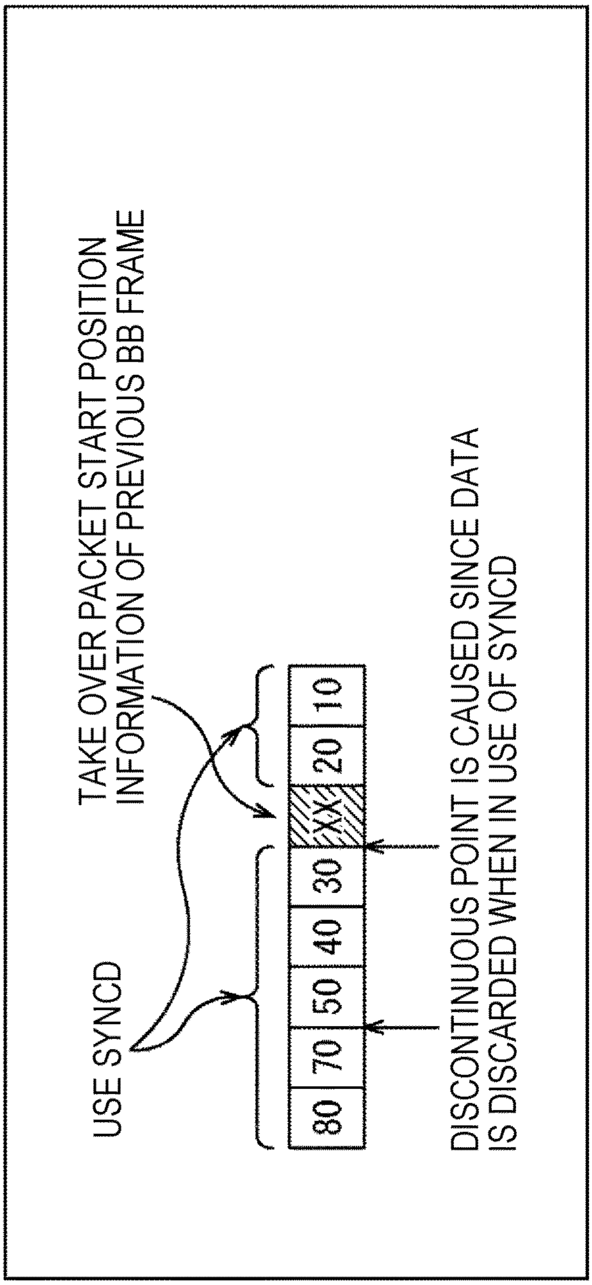
USE SYNCD
TAKE OVER PACKET START POSITION INFORMATION OF PREVIOUS BB FRAME
80
70
50
40
30
XX
20
10
DISCONTINUOUS POINT IS CAUSED SINCE DATA IS DISCARDED WHEN IN USE OF SYNCD

FIG. 33

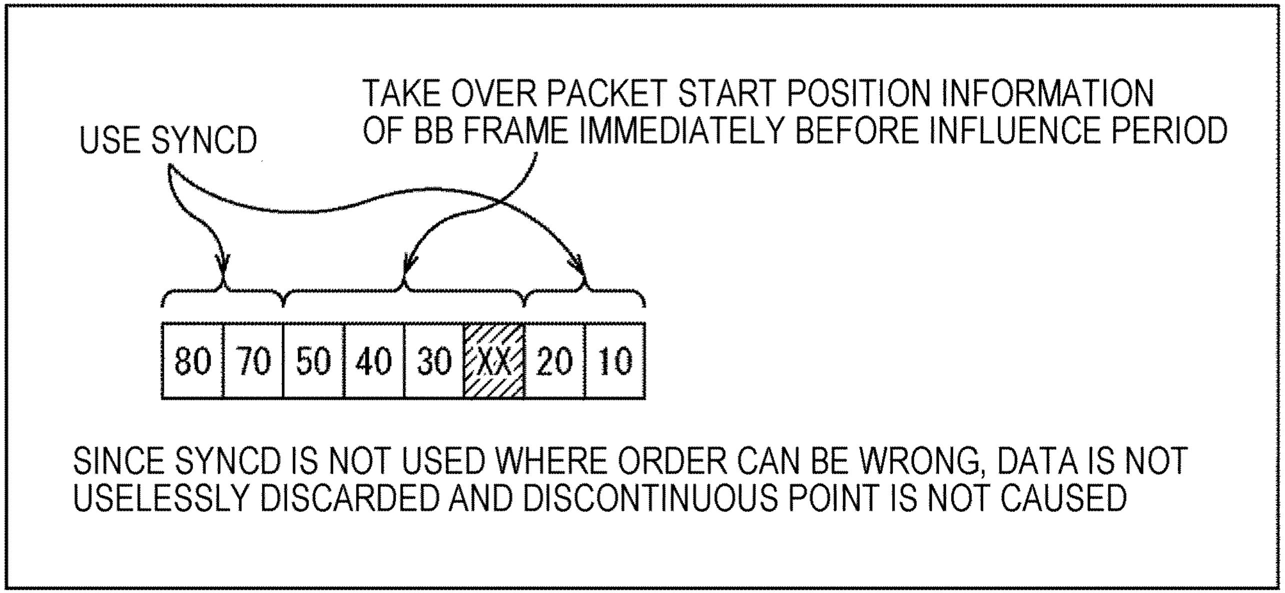
USE SYNCD
TAKE OVER PACKET START POSITION INFORMATION
OF BB FRAME IMMEDIATELY BEFORE INFLUENCE PERIOD
80
70
50
40
30
XX
20
10
SINCE SYNCD IS NOT USED WHERE ORDER CAN BE WRONG, DATA IS NOT
USELESSLY DISCARDED AND DISCONTINUOUS POINT IS NOT CAUSED

FIG. 34

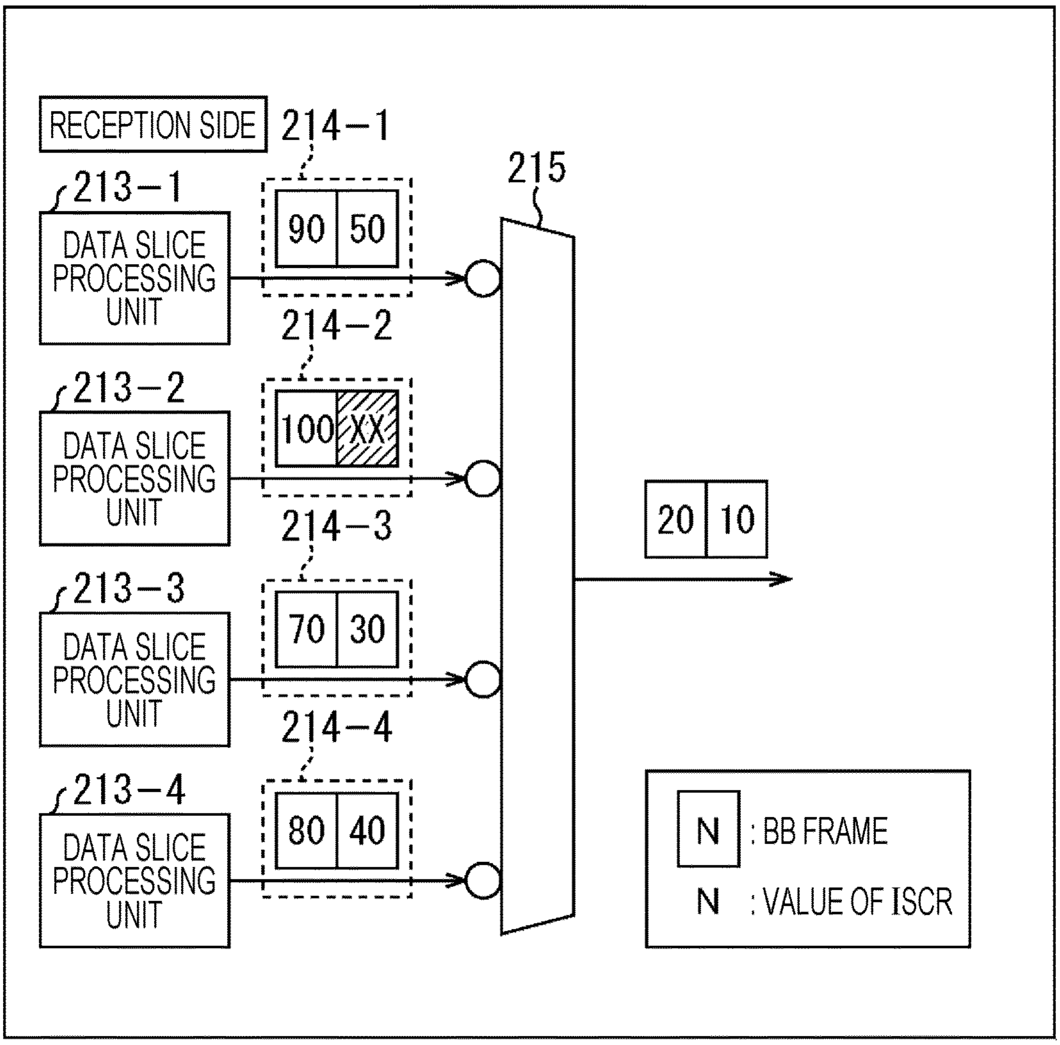
RECEPTION SIDE
214-1
215
213-1
DATA SLICE PROCESSING UNIT
90
50
214-2
213-2
DATA SLICE PROCESSING UNIT
100
XX
214-3
213-3
DATA SLICE PROCESSING UNIT
70
30
214-4
213-4
DATA SLICE PROCESSING UNIT
80
40
20
10
N : BB FRAME
N : VALUE OF ISCR

FIG. 35

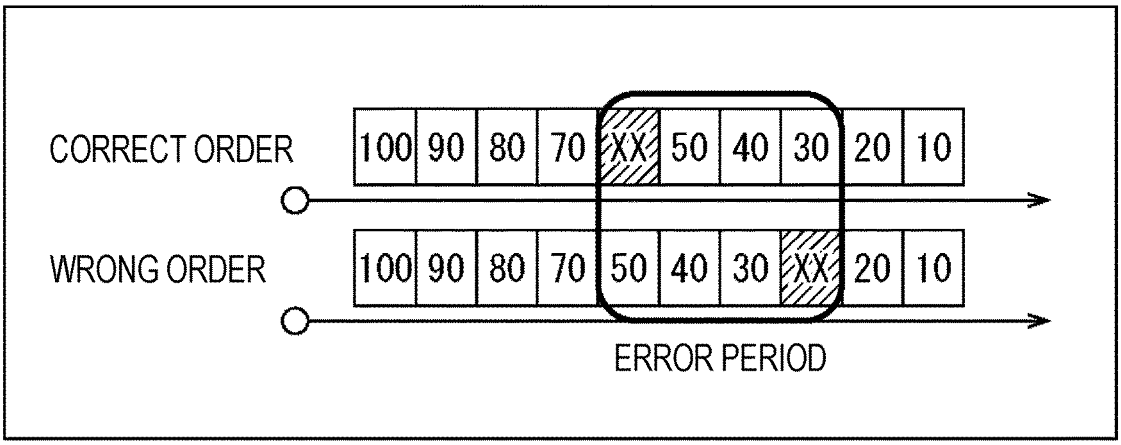
CORRECT ORDER
100
90
80
70
XX
50
40
30
20
10
WRONG ORDER
100
90
80
70
50
40
30
XX
20
10
ERROR PERIOD

FIG. 36

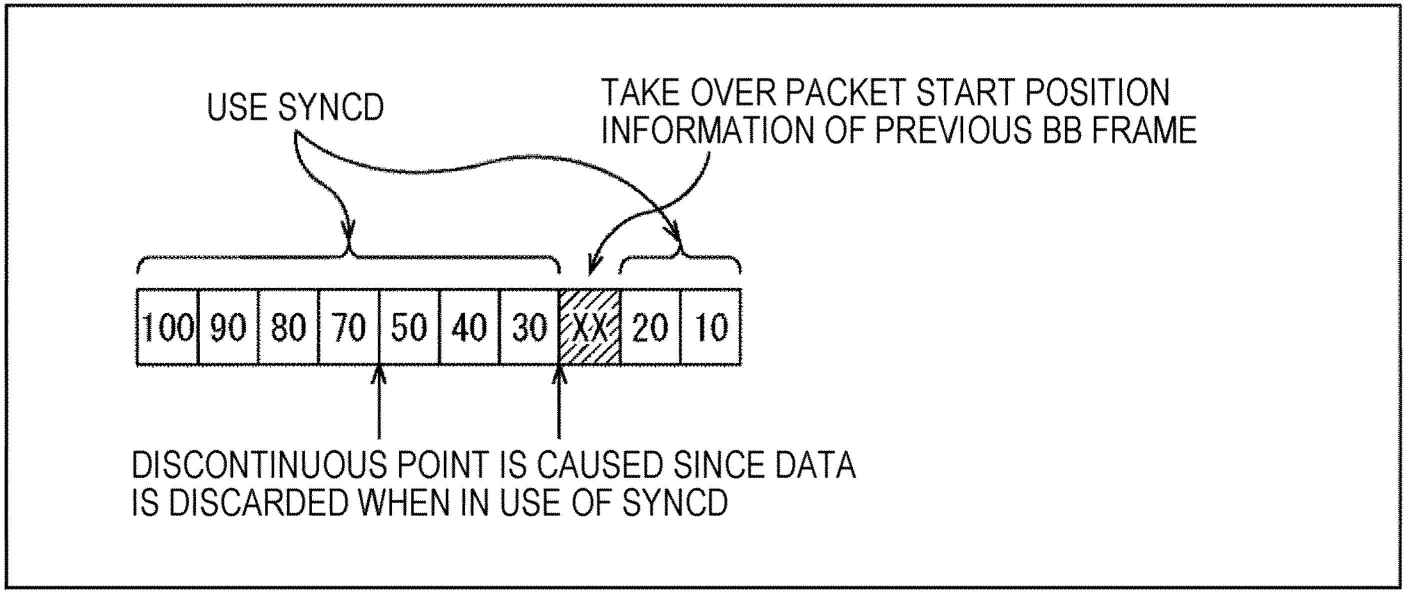
USE SYNCD
TAKE OVER PACKET START POSITION
INFORMATION OF PREVIOUS BB FRAME
100
90
80
70
50
40
30
XX
20
10
DISCONTINUOUS POINT IS CAUSED SINCE DATA
IS DISCARDED WHEN IN USE OF SYNCD

FIG. 37

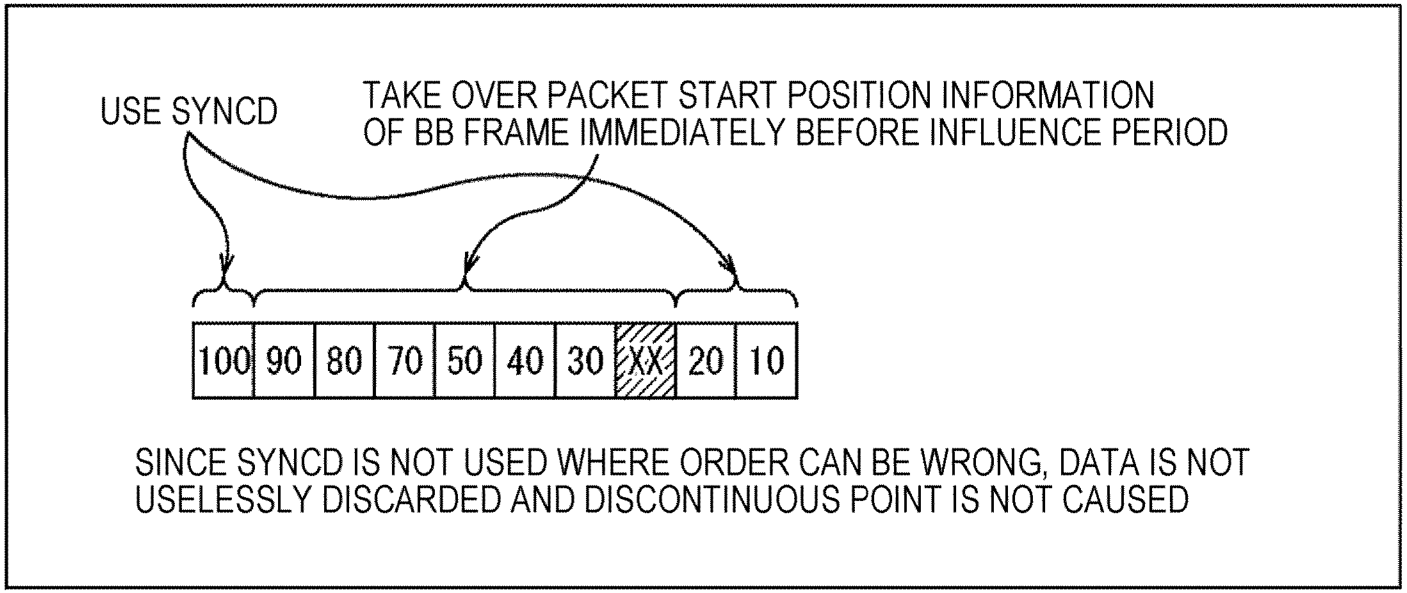
USE SYNCD
TAKE OVER PACKET START POSITION INFORMATION
OF BB FRAME IMMEDIATELY BEFORE INFLUENCE PERIOD
100
90
80
70
50
40
30
XX
20
10
SINCE SYNCD IS NOT USED WHERE ORDER CAN BE WRONG, DATA IS NOT
USELESSLY DISCARDED AND DISCONTINUOUS POINT IS NOT CAUSED

FIG. 38

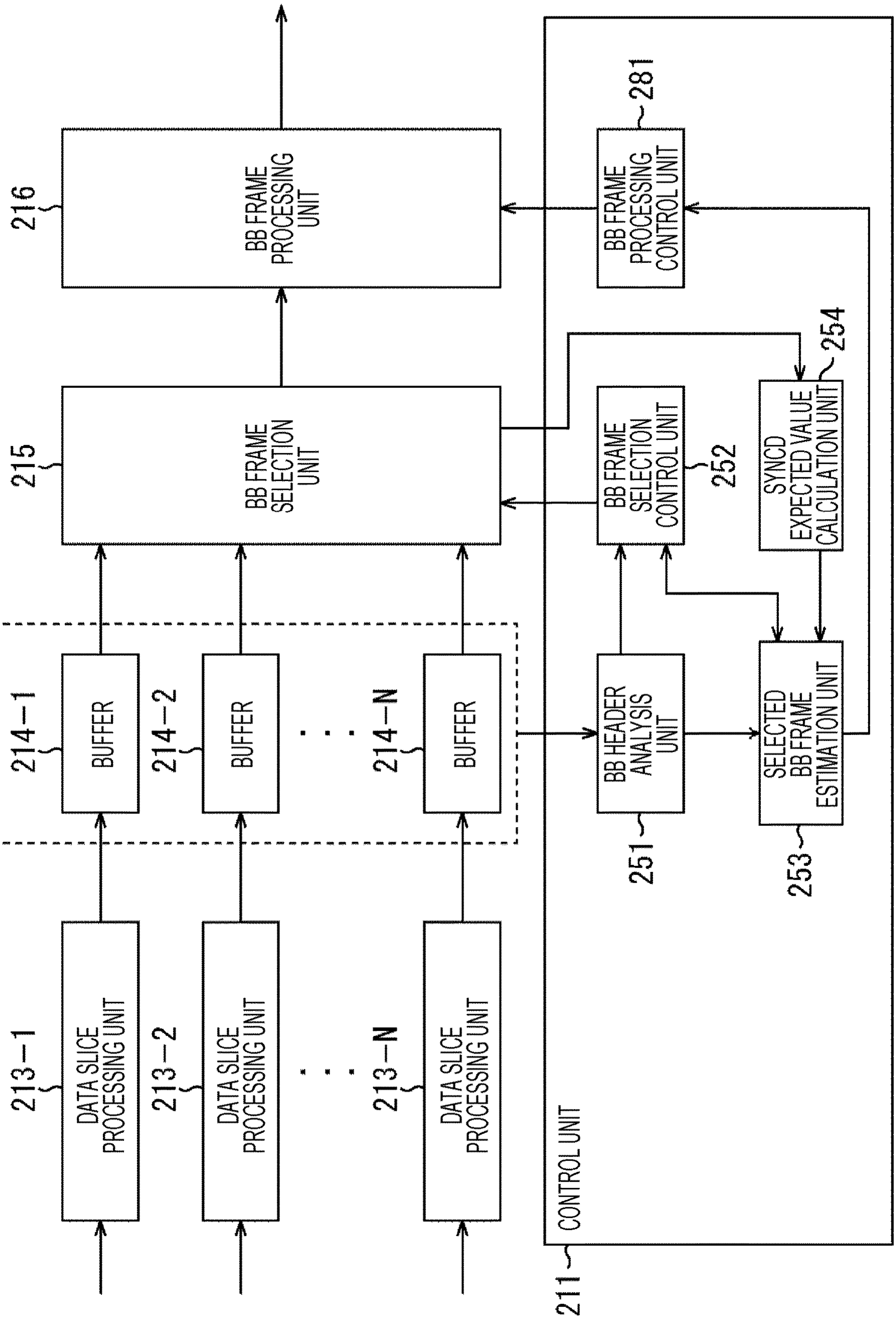
213-1
DATA SLICE PROCESSING UNIT
213-2
DATA SLICE PROCESSING UNIT
213-N
DATA SLICE PROCESSING UNIT
214-1
BUFFER
214-2
BUFFER
214-N
BUFFER
215
BB FRAME SELECTION UNIT
216
BB FRAME PROCESSING UNIT
211
CONTROL UNIT
251
BB HEADER ANALYSIS UNIT
252
BB FRAME SELECTION CONTROL UNIT
253
SELECTED BB FRAME ESTIMATION UNIT
254
SYNCD EXPECTED VALUE CALCULATION UNIT
281
BB FRAME PROCESSING CONTROL UNIT

FIG. 39

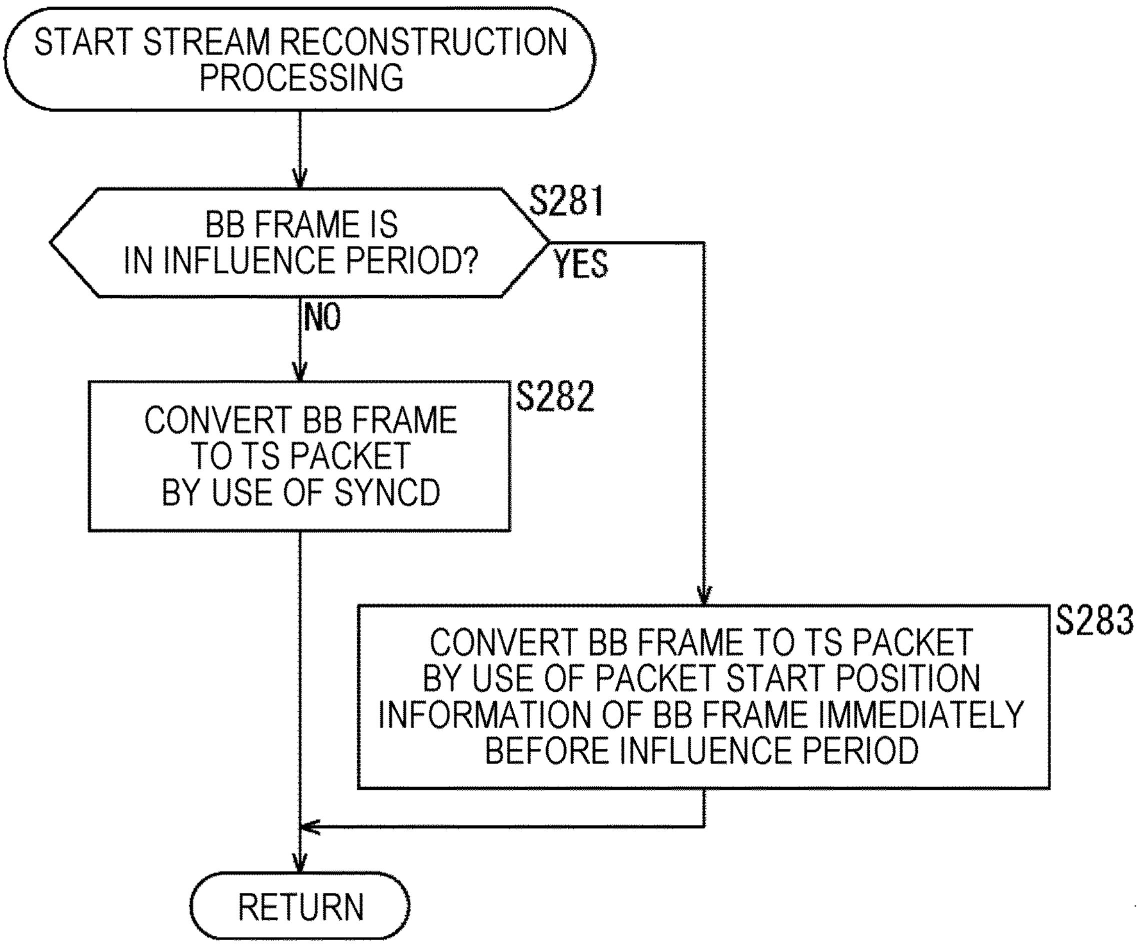
START STREAM RECONSTRUCTION PROCESSING
BB FRAME IS IN INFLUENCE PERIOD?
S281
YES
NO
CONVERT BB FRAME TO TS PACKET BY USE OF SYNCD
S282
CONVERT BB FRAME TO TS PACKET BY USE OF PACKET START POSITION INFORMATION OF BB FRAME IMMEDIATELY BEFORE INFLUENCE PERIOD
S283
RETURN

FIG. 40

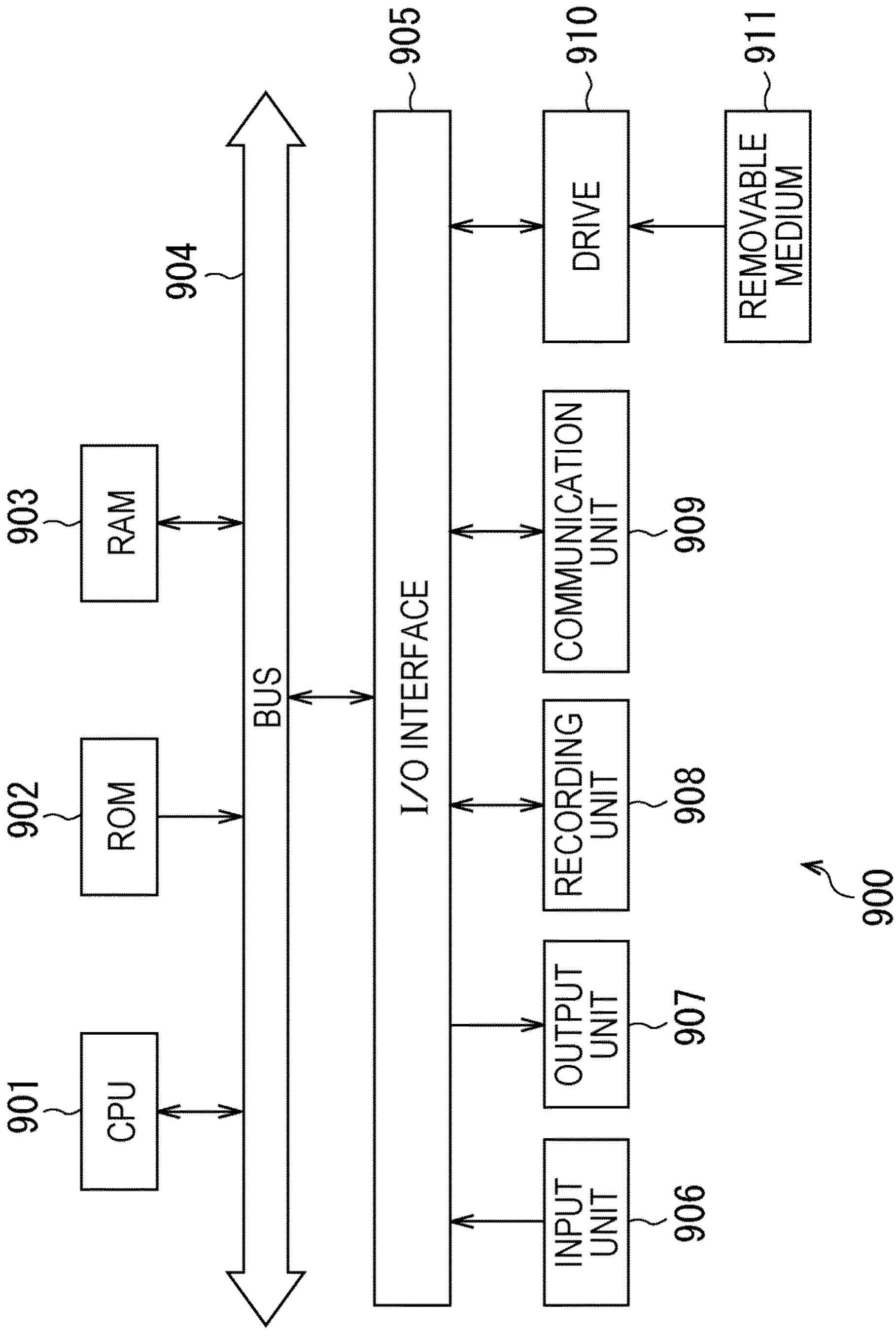
901
CPU
902
ROM
903
RAM
904
BUS
905
I/O INTERFACE
906
INPUT UNIT
907
OUTPUT UNIT
908
RECORDING UNIT
909
COMMUNICATION UNIT
910
DRIVE
911
REMOVABLE MEDIUM
900

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Digital Video Broadcasting (DVB) ; Implementation Guidelines for a second generation digital cable transmission system (DVB-C2). TECHNICAL SPECIFICATION. EUROPEAN TELECOMMUNICATIONS STANDARDS INSTITUTE (ETSI), 01 June 2011